# EUROPEAN PATENT APPLICATION

(11) **EP 4 697 460 A1**
(43) Date of publication of application: **18.02.2026**
(21) Application number: 24787797.0
(22) Date of filing: 04.02.2024
(51) Int. Cl.: H01M 50/107

(54) **BATTERY CELL, BATTERY PACK, AND ELECTRIC DEVICE**

(30) Priority: 14.04.2023 CN 202310398938
(71) Applicant: BYD Company Limited, Shenzhen, Guangdong 518118 (CN)
(72) Inventor: HU, Haotian, Shenzhen, Guangdong 518118 (CN); YU, Tao, Shenzhen, Guangdong 518118 (CN); ZHANG, Da, Shenzhen, Guangdong 518118 (CN); WANG, Guoliang, Shenzhen, Guangdong 518118 (CN); LU, Bing, Shenzhen, Guangdong 518118 (CN)
(74) Representative: Mathys & Squire
(86) International application number: PCT/CN2024/075844
(87) International publication number: WO 2024/212691

(57) **Abstract**

A battery cell, a battery pack, and a power consuming device are provided. The battery cell includes a housing, an electrode core, a first current collector plate, and a conductive pillar. A first tab is arranged at an end of the electrode core in a first direction. The electrode core is arranged in the housing. The first current collector plate and the conductive pillar are arranged at an end of the first tab that is away from the electrode core. The first current collector plate is constructed into a flat plate shape. The first current collector plate is electrically connected to the conductive pillar and the first tab.

## Description

### CROSS REFERENCE TO RELATED APPLICATIONS

This application claims priority to Chinese Patent Application No. 202310398938.2, filed on April 14, 2023 and entitled "BATTERY CELL, BATTERY PACK, AND POWER CONSUMING DEVICE", which is incorporated herein by reference in its entirety.

### TECHNICAL FIELD

This application relates to the battery field, and in particular, to a battery cell, a battery pack, and a power consuming device.

### BACKGROUND

In the related art, for the purpose of drawing a current out of a positive electrode or a negative electrode, a current collector plate is usually arranged between an electrode core and a terminal or between an electrode core and a bottom cover in a cylindrical battery. The current collector plate is folded and connected between the electrode core and the terminal or between the electrode core and the bottom cover through a structure of the current collector plate, so that the current of the electrode core is drawn out of the positive electrode or the negative electrode.

However, the folded current collector plate occupies a large space, and a size of the electrode core is likely to be compressed, resulting in a decrease in a capacity of the cylindrical battery in practical production.

### SUMMARY

This application is intended to solve at least one of technical problems in the related art. Therefore, an objective of this application is to provide a battery cell. The battery cell can reduce space occupied by a current collector plate, and improve a capacity of the battery cell.

This application further provides a battery pack having the foregoing battery cell.

This application further provides a power consuming device having the foregoing battery pack.

The battery cell according to this application includes a housing; an electrode core, a first tab being arranged at an end of the electrode core in a first direction, and the electrode core being arranged in the housing; and a first current collector plate and a conductive pillar. The first current collector plate and the conductive pillar are arranged at an end of the first tab that is away from the electrode core. The first current collector plate is constructed into a flat plate shape. The first current collector plate is electrically connected to the conductive pillar and the first tab.

According to the battery cell in an embodiment of this application, the first current collector plate is configured into the flat plate shape and is electrically connected to the conductive pillar and the first tab, so that a current of the electrode core can be drawn out of a positive electrode or a negative electrode. The flat plate shape has a smaller dimension in the first direction than an existing folded structure. When the battery cell has the same appearance size, a dimension of the electrode core in the first direction can be set to be larger, so that a capacity of the battery cell can be improved.

The battery pack according to this application includes the foregoing battery cell.

The battery cell in the foregoing embodiment is arranged in the battery pack according to this application. Because the battery cell in the foregoing embodiment is arranged in the battery pack in this application, a capacity of the battery pack is larger.

The power consuming device according to this application includes the foregoing battery pack.

The battery pack or the battery cell in the foregoing embodiment is arranged in the power consuming device according to this application. Because the battery pack or the battery cell in the foregoing embodiment is arranged in the power consuming device in this application, the power consuming device has longer endurance time.

Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing additional aspects and advantages of this application will be clear and easily understood from the description of the embodiments taken in conjunction with the following drawings, where:
FIG. 1 is a schematic diagram of a battery cell according to an embodiment of this application;
FIG. 2 is a schematic diagram of mounting of a cover plate assembly according to an embodiment of this application;
FIG. 3 is a sectional view of a cover plate assembly according to an embodiment of this application;
FIG. 4 is a schematic diagram of a cover plate assembly according to an embodiment of this application;
FIG. 5 is a schematic diagram of a separator according to an embodiment of this application;
FIG. 6 is a sectional view of a separator according to an embodiment of this application;
FIG. 7 is a schematic diagram of a separator according to another embodiment of this application;
FIG. 8 is a schematic diagram of a first current collector plate according to an embodiment of this application;
FIG. 9 is a schematic diagram of a first current collector plate according to an embodiment of this application;
FIG. 10 is a schematic diagram of a first current collector plate according to another embodiment of this application;
FIG. 11 is an exploded view according to an embodiment of this application;
FIG. 12 is a schematic diagram of mounting of a cover plate assembly according to an embodiment of this application;
FIG. 13 is a schematic diagram of assembly of a heat shrink insulating film according to an embodiment of this application;
FIG. 14 is a partial enlarged view according to an embodiment of this application;
FIG. 15 is a partial enlarged view according to an embodiment of this application;
FIG. 16 is a schematic diagram of a heat shrink insulating film according to an embodiment of this application;
FIG. 17 is a schematic structural diagram of a second current collector plate in a direction according to an embodiment of this application;
FIG. 18 is a schematic structural diagram of a second current collector plate in another direction according to an embodiment of this application;
FIG. 19 is a schematic structural diagram of a second current collector plate in another direction according to an embodiment of this application;
FIG. 20 is a partial enlarged view of FIG. 19;
FIG. 21 is a schematic diagram of comparison for a second connection portion before and after movement according to an embodiment of this application;
FIG. 22 is a partial sectional view of a battery cell according to an embodiment of this application;
FIG. 23 is a schematic structural diagram of a second current collector plate according to another embodiment of this application;
FIG. 24 is a schematic diagram of mounting of a second current collector plate and a bottom cover according to another embodiment of this application;
FIG. 25 is a schematic structural diagram of a second current collector plate in a direction according to another embodiment of this application;
FIG. 26 is a schematic structural diagram of a second current collector plate in another direction according to another embodiment of this application;
FIG. 27 is a schematic structural diagram of a second current collector plate in a direction according to another embodiment of this application;
FIG. 28 is a partial sectional view of a battery cell according to an embodiment of this application;
FIG. 29 is a partial enlarged view of FIG. 28;
FIG. 30 is a schematic structural diagram of a second current collector plate in a direction according to another embodiment of this application;
FIG. 31 is a schematic structural diagram of a second current collector plate in another direction according to another embodiment of this application;
FIG. 32 is a sectional view of FIG. 31;
FIG. 33 is a partial enlarged view of FIG. 32;
FIG. 34 is a schematic structural diagram of a second current collector plate in a direction according to another embodiment of this application;
FIG. 35 is a schematic structural diagram of a second current collector plate in a direction according to another embodiment of this application;
FIG. 36 is a schematic structural diagram of a second current collector plate in a direction according to another embodiment of this application;
FIG. 37 is a schematic structural diagram of a second current collector plate in a direction according to another embodiment of this application;
FIG. 38 is a schematic structural diagram of a second current collector plate in a direction according to another embodiment of this application;
FIG. 39 is a schematic structural diagram of a second current collector plate in a direction according to another embodiment of this application;
FIG. 40 is a schematic structural diagram of a second current collector plate in a direction according to another embodiment of this application;
FIG. 41 is a schematic structural diagram of a second current collector plate in a direction according to another embodiment of this application;
FIG. 42 is a schematic structural diagram of a second current collector plate in a direction according to another embodiment of this application;
FIG. 43 is a schematic structural diagram of a second current collector plate in a direction according to another embodiment of this application;
FIG. 44 is a schematic structural diagram of a bottom cover in a direction according to an embodiment of this application;
FIG. 45 is a schematic structural diagram of a bottom cover in another direction according to an embodiment of this application;
FIG. 46 is a schematic structural diagram of a bottom cover in another direction according to an embodiment of this application;
FIG. 47 is a sectional view of FIG. 46;
FIG. 48 is a partial enlarged view of FIG. 47;
FIG. 49 is a partial enlarged view of FIG. 47;
FIG. 50 is a partial enlarged view of FIG. 47;
FIG. 51 is a schematic structural diagram of a battery pack according to an embodiment of this application;
FIG. 52 is a schematic structural diagram of a power consuming device according to an embodiment of this application; and
FIG. 53 is a schematic structural diagram of a power consuming device according to an embodiment of this application.

### Reference numerals:

battery cell 1000, battery pack 2000, casing 3000, power consuming device 4000,
housing 600, assembly hole 6201,
electrode core 500,
first tab 501, second tab 502, first end face 513, second end face 514, annular welding region 5141,
cover plate assembly 400,
conductive pillar 41, second end 411, first end 412, metal connection member 43, cover plate 44, plate body 441, mounting hole 4411, first stop portion 442, separator 45, clearance region 453, limiting protrusion 454, first insulating member 46, extension protrusion 461, second insulating member 47, central portion 451, first support protrusion 4511, first support surface 4512, first central hole 4513, second central hole 4514, extension arm 452, second support protrusion 4521, demolding groove 4522, flange 455,
first current collector plate 200,
plate body 210, connection slot 211, first connection side wall 2111, second connection side wall 2112, outer-edge side wall 2113, central hole 212, limiting notch 213, separation portion 214, opening 215, connection sheet 220, bridge edge 221, gap 222, welding region 216,
heat shrink insulating film 30,
second current collector plate 100,
first connection region 120, first connection portion 121, middle portion 122, electrolyte injection port 1221, through port 1222, locating port 1223, second connection region 130, second connection portion 131, reinforcing portion 1311, clearance port 1312, stop protrusion 1313, limiting port 132, connection member 140, continuous portion 150,
connection portion 1110, first surface 1111, connection position 1113, first support member 1120, stop portion 1121, through slot 1123, welding sheet 1124, connection bridge 1125, welding zone 1126, electrolyte injection hole 1127, flow guiding zone 1128, flow guiding hole 1122, median portion 1129, second support member 1130, notch 1131, exhaust hole 1140, first connection plate 1152, second connection plate 1151,
bottom cover 300,
limiting bump 310, bottom cover body 310, reinforcing region 311, exhaust passage 312, first welding protrusion 313, first welding groove 314, through hole 315, accommodating groove 316, electrolyte injection hole 317, first sinking groove 3171, second sinking groove 3172, step portion 318, chamfer 319, explosion-proof assembly 320, rupture disc 321, protection sheet 322.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but will not be understood as a limitation on this application.

The following describes a battery cell 1000 according to an embodiment of this application with reference to the accompanying drawings.

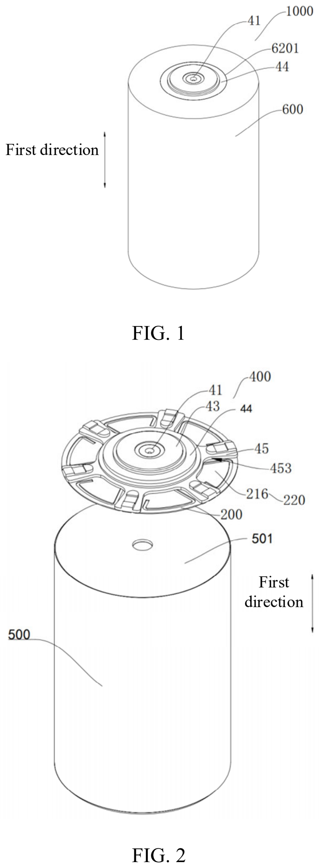

As shown in FIG. 1 to FIG. 4, the battery cell 1000 according to this embodiment of this application includes a housing 600 and an electrode core 500. A first tab is arranged at an end of the electrode core 500 in a first direction. The electrode core 500 is arranged in the housing 600. The battery cell 1000 further includes a first current collector plate 200 and a conductive pillar 41. The first current collector plate 200 and the conductive pillar 41 are arranged at an end of the first tab that is away from the electrode core 500 in the first direction. The first current collector plate 200 is constructed into a flat plate shape. The first current collector plate 200 is electrically connected to the conductive pillar 41 and the first tab. Specifically, the first direction may be a height direction of the battery cell 1000 shown in the figure, that is, may be a height direction of the housing 600 and the electrode core 500. When the first current collector plate 200 is mounted in the housing 600, a thickness direction of the first current collector plate 200 is the same as the height direction of the housing 600 and the electrode core 500. In other words, the first direction may be the thickness direction of the first current collector plate 200. An accommodating cavity may be provided in the housing 600, and the electrode core 500 is arranged in the accommodating cavity. The first tab is arranged at the end of the electrode core 500 in the first direction. The first current collector plate 200 is constructed into the flat plate shape. The first current collector plate 200 is electrically connected to the conductive pillar 41 and the first tab, to draw a current of the electrode core 500 out of a positive electrode or a negative electrode.

In some embodiments, the first current collector plate 200 is constructed into the flat plate shape, which may be a circular flat plate shape, a square flat plate shape, or the like. In other words, a person skilled in the art may select a shape of a current collector plate according to an application environment of the current collector plate. This is not specifically limited in this application. It will be understood that the first current collector plate 200 is constructed into the flat plate shape, which may be a complete plate shape, or may be a plate shape to which another structure is added. For example, a hole is punched in the first current collector plate 200 to inject an electrolyte or connect to the conductive pillar 41. In another example, the first current collector plate 200 further includes a flange, which wraps an outer periphery of the electrode core 500 during mounting to the electrode core 500, without occupying space of the battery cell 1000 in the first direction.

The first current collector plate 200 is constructed into the flat plate shape, and has a smaller dimension in the first direction than an existing folded structure. When the battery cell 1000 has the same appearance size, a dimension of the electrode core 500 in the first direction can be set to be larger, so that a capacity of the battery cell 1000 can be improved.

It should be noted that the first tab 501 herein may be of a full-tab structure that is knurled or flattened, or a multi-tab structure processed through laser ablation or die-cutting.

Optionally, a material of the first current collector plate 200 may be an aluminum alloy, pure copper, nickel-plated copper, or the like, so that the first current collector plate 200 has a conductive function, and the electrode core 500 is electrically connected to the conductive pillar 41 by using the first current collector plate 200. In some embodiments, when the material of the first current collector plate 200 is an aluminum alloy, the first current collector plate 200 is mainly in fit connection with a positive tab of the electrode core 500. When the material of the first current collector plate 200 is nickel, copper, or nickel-plated copper, the first current collector plate 200 is mainly in fit connection with a negative tab of the electrode core 500. In other words, a person skilled in the art may select the material of the first current collector plate 200 based on an application environment of the current collector plate. This is not specifically limited in this application.

It should be noted that the first current collector plate 200 may be electrically connected to the conductive pillar 41 and the first tab through welding, bonding, or the like.

In the descriptions of this application, features defined by "first" and "second" may explicitly or implicitly include one or more of such features, and are used to differentially describe the features, instead of indicating a sequence or importance.

In some embodiments of this application, the first current collector plate 200 includes a plate body 210 and a plurality of connection sheets 220. The conductive pillar 41 may be a conductive pillar 41. A middle section 2100 and a connection slot 211 are provided on the plate body 210. The connection slot 211 extends through the plate body 210 in a thickness direction of the plate body 210, to form a plurality of through slots on the plate body 210. An orthographic projection of an outer peripheral wall of the plate body 210 on a first projection plane is located on a first ring. The first projection plane is perpendicular to the thickness direction of the plate body 210. The connection slot 211 is located on a radial outer side of the middle section 2100 in a radial direction of the plate body 210, and the middle section 2100 is electrically connected to the conductive pillar 41, to implement electrical connection between the first current collector plate 200 and the conductive pillar 41. The connection sheet 220 is located in the connection slot 211, the connection sheet 220 is electrically connected to the plate body 210 through a bridge edge 221, and the connection sheet 220 is electrically connected to the first tab. A current on the electrode core 500 may flow to the connection sheet 220, and the current on the connection sheet 220 flows from the bridge edge 221 to the first current collector plate 200.

In some embodiments, an orthographic projection of the bridge edge 221 on the first projection plane is located on a radial inner side of an outer peripheral edge of an orthographic projection of the connection sheet 220 in the radial direction of the plate body 210, so that the current on the connection sheet 220 can flow to the first current collector plate 200 through the bridge edge located on the radial inner side of the connection sheet 220, and the current on the connection sheet 220 can flow to a region close to an inner side of the plate body 210 through the bridge edge 221. This helps reduce a flow path of the current on the plate body 210, reduce loss of the current on the plate body 210, and improve current flow capability of the first current collector plate 200.

Specifically, the current in the electrode core 500 flows to the connection sheet 220, and flows from the bridge edge 221 to the first current collector plate 200. A current reaching the plate body 210 aggregates to the middle section 2100, to flow to the conductive pillar 41, so that the battery cell 1000 is electrically connected to an external element through the conductive pillar 41, to implement charging and discharging of the battery cell 1000.

If the orthographic projection of the bridge edge 221 on the first projection plane is located on a radial outer side of the orthographic projection of the connection sheet 220, the bridge edge 221 is located in a region close to an outer side of the plate body 210, and a distance between the bridge edge 221 and the middle section 2100 is relatively long. When the current on the connection sheet 220 flows to the middle section 2100 through the bridge edge 221, a flow path of the current on the plate body 210 is relatively long, and a large amount of energy of the current is consumed on the plate body 210.

Therefore, the orthographic projection of the bridge edge 221 on the first projection plane is made located on the radial inner side of the outer peripheral edge of the orthographic projection of the connection sheet 220, so that the bridge edge 221 is arranged close to the middle section 2100 of the plate body 210 when the connection sheet 220 is connected to the plate body 210 by using the bridge edge 221. In this way, when the current on the connection sheet 220 flows to the middle section 2100 through the bridge edge 221, a flow path of the current on the plate body 210 is relatively short. This helps reduce a flow path of the current on the plate body 210, reduce loss of the current in a flowing process, and improve current flow capability of the first current collector plate 200.

Therefore, the first current collector plate 200 according to this embodiment of this application has advantages of reducing the flow path of the current on the plate body 210, reducing the loss of the current in the flowing process, improving the current flow capability of the first current collector plate 200, and the like.

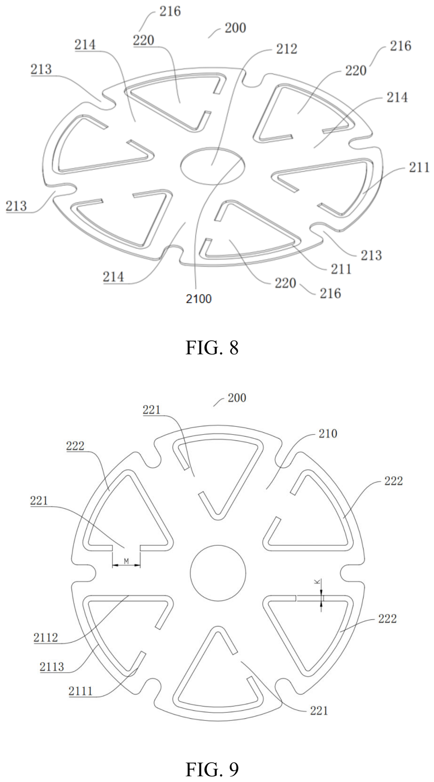

As shown in FIG. 8, the plate body 210 is provided with a plurality of connection slots 211 and a plurality of connection sheets 220, and the plurality of connection slots 211 are provided and spaced from each other on the radial outer side of the middle section 2100. The plate body 210 further has a separation portion 214, and the separation portion 214 is arranged between two adjacent connection slots 211, to form a plurality of independent connection slots 211 on the plate body 210. The plurality of connection sheets 220 are arranged in one-to-one correspondence with the plurality of connection slots 211, so that the connection sheets 220 are correspondingly arranged in the connection slots 211.

In some embodiments, the separation portion 214 is connected to the bridge edge 221 and the middle section 2100, so that the current on the connection sheet 220 can flow to the middle section 2100 through the bridge edge 221 along the separation portion 214, and the current in the electrode core 500 can smoothly flow to the conductive pillar 41, to implement electrical connection between the battery cell 1000 and an external element.

Specifically, the orthographic projection of the bridge edge 221 on the first projection plane is made located on the radial inner side of the outer peripheral edge of the orthographic projection of the connection sheet 220. This helps reduce a length of the separation portion 214, reduce a flow path of the current on the plate body 210, reduce loss of the current in a flowing process, and improve current flow capability of the first current collector plate 200.

In some embodiments of this application, as shown in FIG. 8 and FIG. 9, an outer peripheral side wall of the connection slot 211 is spaced from the outer peripheral wall of the plate body 210 in the radial direction of the plate body 210, to space the connection sheet 220 in the connection slot 211 from the outer peripheral wall of the plate body 210. In this case, an outer peripheral side wall of the connection sheet 220 is located in the connection slot 211 and is spaced from the outer peripheral wall of the plate body 210.

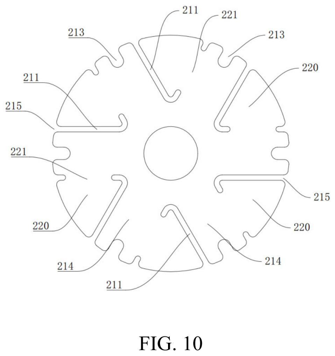

In some other embodiments of this application, as shown in FIG. 10, an opening 215 that extends to the outer peripheral wall of the plate body 210 is provided on the outer peripheral wall of the plate body 210, to define a plurality of connection slots 211, so that the connection slots 211 communicate with the opening 215, and connection sheets 220 in the connection slots 211 communicate with the outer side of the plate body 210 through the opening 215.

In some embodiments, the connection slot 211 is spaced from the outer peripheral wall of the plate body 210 or the connection slot 211 communicates with the opening 215, so that a form for arranging the connection sheet 220 in the connection slot 211 can be selected, to select, based on different requirements for electrical connection between the connection sheet 220 and the plate body 210, an appropriate manner for arranging the connection sheet 220 on the plate body 210, so that the connection sheet 220 is spaced from the outer peripheral wall of the plate body 210, or the connection sheet 220 communicates with the outer side of the plate body 210 through the opening 215.

In some optional embodiments of this application, as shown in FIG. 9, the connection slot 211 is provided with a plurality of side walls. A side wall in the plurality of side walls that is arranged opposite to the outer peripheral wall of the plate body 210 in the radial direction of the plate body 210 is defined as an outer-edge side wall 2113. Each connection sheet 220 is electrically connected to the plate body 210 through the bridge edge 221, to implement electrical connection between the connection sheet 220 and the plate body 210. In this way, when the connection sheet 220 is electrically connected to the electrode core 500, the current on the electrode core 500 can flow to the connection sheet 220, and the current on the connection sheet 220 flows to the middle section 2100 through the bridge edge 221, and flows from the middle section 2100 to the conductive pillar 41, to implement an electrical connection between the electrode core 500 and an external element by using the conductive pillar 41.

Each bridge edge 221 is connected to a side wall other than the outer-edge side wall 2113 in the plurality of side walls, so that the bridge edge 221 is arranged close to the middle section 2100. This helps reduce a flow path of the current on the connection sheet 220, the bridge edge 221, and the plate body 210, reduce loss of the current, and improve current flow capability of the first current collector plate 200.

After the current on the electrode core 500 flows to the plurality of connection sheets 220, the current needs to first flow to the plate body 210 through bridge edges 221 corresponding to the plurality of connection sheets 220, and then flow to the middle section 2100 of the plate body 210, so that the current can centrally flow from the middle section 2100 of the plate body 210 to the conductive pillar 41.

Compared with arranging the bridge edge 221 at the outer-edge side wall 2113, arranging the bridge edge 221 on a side wall other than the outer-edge side wall 2113 in the connection slot 211 helps reduce a distance between the bridge edge 221 and the middle section 2100, further helps reduce a flowing path of the current on the connection sheet 220, the bridge edge 221, and the plate body 210, and specifically helps reduce a flow path of the current on the plate body 210. Because the plate body 210 has resistance, reducing the flow path of the current on the plate body 210 helps reduce loss caused when the current flows on the plate body 210. Therefore, arranging the bridge edge 221 on a side wall other than the outer-edge side wall 2113 in the connection slot 211 helps reduce loss of the current and improve current flow capability of the first current collector plate 200.

Specifically, if the bridge edge 221 is arranged on the outer-edge side wall 2113, the current on the connection sheet 220 needs to first flow to an outer region of the plate body 210 through the bridge edge 221, and then flow along the plate body 210 to the middle section 2100 of the plate body 210. If the bridge edge 221 is arranged on a side wall other than the outer-edge side wall 2113 in the connection slot 211, the current on the connection sheet 220 may directly flow along the bridge edge 221 to a region close to the center of the plate body 210, then flow along the plate body 210 to the middle section 2100, and flow from the middle section 2100 to the conductive pillar 41.

In some optional embodiments of this application, as shown in FIG. 8 and FIG. 9, the plurality of side walls of the connection slot 211 include a first connection side wall 2111 and a second connection side wall 2112. In a circumferential direction of the plate body 210, two ends of the outer-edge side wall 2113 are respectively connected to the first connection side wall 2111 and the second connection side wall 2112 to form a complete connection slot 211, so that the connection sheet 220 is arranged in the connection slot 211. The connection sheet 220 and the bridge edge 221 are used to implement electrical connection between the plate body 210 and the electrode core 500, so that the current on the electrode core 500 can flow to the plate body 210.

In some embodiments, at least one of the first connection side wall 2111 and the second connection side wall 2112 is connected to the bridge edge 221, so that the connection sheet 220 is arranged in the connection slot 211. In this way, the current on the connection sheet 220 can flow to the plate body 210 through the bridge edge 221, and the current on the plate body 210 flows from the middle section 2100 to the conductive pillar 41 along the plate body 210. In addition, it is convenient to design and adjust a length of the bridge edge 221, so that the length of the bridge edge 221 directly reflects requirements for a current flow capability and the like. In addition, the connection sheet 220 can cover more tabs 311, especially a tab 311 on an outer circle of the electrode core 500.

In some optional embodiments of this application, as shown in FIG. 9, the plate body 210 is provided with a plurality of connection slots 211, and a connection sheet 220 is arranged in each connection slot 211. In the circumferential direction of the plate body 210, the plurality of connection sheets 220 are respectively connected to corresponding first connection side walls 2111 through the bridge edge 221, so that the current on the connection sheet 220 can flow from the corresponding first connection side wall 2111 to a region close to the middle section 2100 through the bridge edge 221, and the current on the connection sheet 220 can smoothly flow to the middle section 2100 of the plate body 210, and flow from the middle section 2100 of the plate body 210 to the conductive pillar 41.

As shown in FIG. 8, in this embodiment, the plurality of connection slots 211 are spaced from each other in the circumferential direction of the plate body 210. In the circumferential direction of the plate body 210, a second connection side wall 2112 is arranged between two adjacent first connection side walls 2111, so that the connection sheet 220 is connected to the first connection side wall 2111 through the bridge edge 221, to arrange a plurality of bridge edges 221 in a spaced manner. In this way, a current on each connection sheet 220 can flow along a corresponding bridge edge 221 to the middle section 2100 of the plate body 210 through a specified path, to implement uniform flowing of the current on the plate body 210. This avoids that currents on adjacent connection sheets 220 gather in a region on the plate body 210, avoids that a temperature in a partial region on the plate body 210 is excessively high due to uneven distribution of the currents on the connection sheets 220, and avoids affecting heat dissipation of the plate body 210.

In some embodiments of this application, as shown in FIG. 8 and FIG. 9, a shape of the connection slot 211 is a triangle or a sector. Such a setting helps increase an area of the connection slot 211, and further helps increase an area of the connection sheet 220 in the connection slot 211, thereby helping implement an electrical connection between the connection sheet 220 and the electrode core 500, so that the current on the electrode core 500 can smoothly flow to the plate body 210 through the connection sheet 220 and the bridge edge 221.

As shown in FIG. 8 and FIG. 9, in this embodiment, the plate body 210 is formed into a circular disc, and the connection slot 211 is formed into a triangle or a sector, so that space on the plate body 210 can be fully utilized, and a plurality of spaced connection slots 211 are formed on the plate body 210. This helps increase an area of the connection slot 211.

In some embodiments, a shape of the connection sheet 220 adapts to the shape of the connection slot 211. In other words, increasing the area of the connection slot 211 helps design a relatively large area of the connection sheet 220, thereby helping implement an electrical connection between the connection sheet 220 and the electrode core 500.

In some embodiments, the connection sheet 220 is electrically connected to the electrode core 500 through welding, and a side of the connection sheet 220 that is close to the electrode core 500 is a welding zone. Therefore, designing a relatively large area of the connection sheet 220 helps implement stable welding between the connection sheet 220 and the electrode core 500, and implement a stable electrical connection between the electrode core 500 and the connection sheet 220, so that the current on the electrode core 500 can smoothly flow to the plate body 210 through the connection sheet 220 and the bridge edge 221. This avoids that the connection sheet 220 does not cooperate with the electrode core 500 when the first current collector plate 200 or the electrode core 500 is moved.

In some embodiments of this application, in the radial direction of the plate body 210, a length of the bridge edge 221 is 0.5 mm to 30 mm. Specifically, the length of the bridge edge 221 may be selected based on current carrying capabilities of the connection sheet 220 and the plate body 210, a current flow speed, specific sizes of the connection slot 211 and the connection sheet 220, and the like. Optionally, the length M of the bridge edge 221 is 1 mm, 5 mm, 10 mm, 15 mm, 20 mm, 25 mm, or 30 mm.

In addition, in an embodiment in which the first current collector plate 200 is used in the battery cell 1000, the length of the bridge edge 221 is selected, to satisfy different fast charging requirements of the battery cell 1000.

In some embodiments, the length of the bridge edge 221 is 1 mm to 14 mm, and the length of the bridge edge 221 may be selected based on current carrying capabilities of the connection sheet 220 and the plate body 210, a current flow speed, specific sizes of the connection slot 211 and the connection sheet 220, and the like.

For example, the length M of the bridge edge 221 is 2 mm, 4 mm, 6 mm, 8 mm, 10 mm, 12 mm, or 14 mm.

In some embodiments of this application, in the circumferential direction of the plate body 210, a width of the bridge edge 221 is 0.2 mm to 5 mm. Optionally, the width of the bridge edge 221 is 0.5 mm, 1 mm, 1.5 mm, 2 mm, 2.5 mm, 3 mm, 3.5 mm, 4 mm, or 4.5 mm. In some embodiments, the connection sheet 220 is electrically connected to the electrode core 500, the connection sheet 220 is connected to the plate body 210 through the bridge edge 221, and the bridge edge 221 may be used as an insurance structure for the electrode core 500. When the length of the bridge edge 221 is selected, the length may be selected based on requirements on a maximum overcurrent of the electrode core 500 and a fusing current of the electrode core 500, so that when the maximum overcurrent of the electrode core 500 and/or the fusing current of the electrode core 500 are/is exceeded, excessive heat generated by a current that flows to the bridge edge 221 fuses the bridge edge 221, to disconnect an electrical connection between the connection sheet 220 and the plate body 210, and further disconnect an electrical connection between the electrode core 500 and the plate body 210, thereby avoiding a safety hazard.

In some embodiments of this application, there is a gap 222 between the connection sheet 220 and the connection slot 211, to discharge gas at the first current collector plate 200, so that an electrolyte can smoothly flow to a specified region through the gap 222.

In some embodiments, in an embodiment in which the first current collector plate 200 is used in the battery cell 1000, the connection sheet 220 is electrically connected to the electrode core 500, and an electrolyte on a side of the plate body 210 that is away from the electrode core 500 may flow to the electrode core 500 through the gap 222 between the connection sheet 220 and the connection slot 211, so that an oxidation reaction can occur at an anode of the electrode core 500, and a reduction reaction can occur at a cathode of the electrode core 500, thereby implementing directional movement of a positive ion and a negative ion, so that the electrode core 500 generates a current.

In addition, in a discharging process, the battery cell 1000 generates gas, and the generated gas may be discharged from the gap 222 between the connection sheet 220 and the connection slot 211, to avoid that expansion of the battery cell 1000 affects use of a user.

In some optional embodiments of this application, the gap 222 is provided at an equal spacing in a direction around the connection sheet 220, so that the electrolyte can evenly flow to a specified region through the gap 222.

In some embodiments, as shown in FIG. 8 and FIG. 9, when the connection sheet 220 and the connection slot 211 are on a same plane, the plurality of side walls of the connection slot 211 include an outer-edge side wall 2113, a first connection side wall 2111, and a second connection side wall 2112. The connection sheet 220 is arranged in the outer-edge side wall 2113, the first connection side wall 2111, and the second connection side wall 2112. The connection sheet 220 is electrically connected to the first connection side wall 2111 through the bridge edge 221, so that a gap 222 extending along the outer-edge side wall 2113, the first connection side wall 2111, and the second connection side wall 2112 can be formed on the plate body 210.

In some embodiments, a width of the gap 222 formed on the plate body 210 and extending along the outer-edge side wall 2113, the first connection side wall 2111, and the second connection side wall 2112 depends on a distance between the connection sheet 220 and the side wall of the connection slot 211, and the width of the gap 222 may be even, or may be uneven.

As shown in FIG. 9, in an embodiment in which the connection slot 211 is formed into a triangle, the outer-edge side wall 2113, the first connection side wall 2111, and the second connection side wall 2112 are connected to form a triangle, and a gap 222 extending along the outer-edge side wall 2113, the first connection side wall 2111, and the second connection side wall 2112 is defined between the connection sheet 220 and the connection slot 211, to discharge gas at the first current collector plate 200, so that an electrolyte can smoothly flow to a specified region through the gap 222.

In some other embodiments, in an embodiment in which the connection slot 211 is formed into a sector, the side walls of the connection slot 211 further include an inner-edge side wall 114. Projections of the outer-edge side wall 2113 and the inner-edge side wall 114 in an axial direction of the plate body 210 are arc-shaped. The outer-edge side wall 2113 is located on an outer side of the inner-edge side wall 114, and a gap 222 extending along the outer-edge side wall 2113, the second connection side wall 2112, the inner-edge side wall 114, and the first connection side wall 2111 is defined between the connection sheet 220 and the connection slot 211, to discharge gas at the first current collector plate 200, so that an electrolyte can smoothly flow to a specified region through the gap 222.

In some other embodiments, when the connection sheet 220 and the connection slot 211 are on two planes, gaps are formed between the connection sheet 220 and two opposite side walls of the connection slot 211, and gaps are formed between the connection sheet 220 and two opposite planes of the connection slot 211. Gas at the first current collector plate 200 may be discharged from a plurality of gaps between the connection sheet 220 and the connection slot 211. In this way, exhaust efficiency of the first current collector plate 2000 is improved, and an electrolyte can smoothly flow to a specified region through the plurality of gaps 222.

In some optional embodiments of this application, in a width direction of the plate body 210, a width of the gap 222 is 0.2 mm to 5 mm, to discharge the gas at the first current collector plate 200, so that the electrolyte can penetrate to the electrode core 500 through the gap 222.

For example, the width K of the gap 222 may be 0.5 mm, 1 mm, 1.5 mm, 2 mm, 2.5 mm, 3 mm, 3.5 mm, 4 mm, 4.5 mm, or 5 mm.

In some embodiments of this application, the middle section 2100 is a central hole 212, and the central hole 212 extends through the plate body 210 in the thickness direction of the plate body 210, to implement an electrical connection between the plate body 210 and the conductive pillar 41 by using the central hole 212, so that the current on the plate body 210 can flow to the conductive pillar 41.

In some embodiments, the conductive pillar 41 passes through the central hole 212, to implement the electrical connection between the conductive pillar 41 and the plate body 210 by using the central hole 212, so that the current on the plate body 210 can smoothly flow to an external element through the conductive pillar 41, thereby implementing an electrical connection between the electrode core 500 and the external element.

In some embodiments, an opening is provided in the housing 600, and the conductive pillar 41 partially extends out of the housing 600 from the opening, so that the conductive pillar 41 is electrically connected to the external element, thereby implementing charging and discharging of the battery cell 1000.

In some embodiments, the plate body 210 has a plurality of connection slots 211 and a plurality of connection sheets 220. The plurality of connection slots 211 are provided and spaced from each other in a circumferential direction of the middle section 2100. The plurality of connection sheets 220 are arranged in one-to-one correspondence with the plurality of connection slots 211. Each connection sheet 220 is electrically connected to the plate body 210 through a corresponding bridge edge 221, so that the current on the electrode core 500 can evenly flow from the connection sheets 220 in the plurality of connection slots 211 to the middle section 2100.

In some embodiments, the plurality of connection slots 211 are spaced from each other in a circumferential direction of the central hole 212, so that space on the plate body 210 can be properly used. In addition, distances between the plurality of connection slots 211 and the central hole 212 are controlled, and then distances between the connection sheets 220 in the connection slots 211 and the central hole 212 are controlled, to properly set a current flowing path, so that currents on the plurality of connection slots 220 can smoothly flow to the central hole 212 through the bridge edge 221, and flow to the conductive pillar 41 at the central hole 212.

In addition, such a setting helps improve space utilization of the plate body 210, and helps reduce space occupied by the plate body 210 in the battery cell 1000, thereby helping improve utilization of internal space of the battery cell 1000, and improve an energy density of the battery cell 1000.

In some embodiments of this application, the battery cell 1000 includes: a first current collector plate 200, the first current collector plate 200 being provided with a first limiting portion; a cover plate 44, the cover plate 44 being fastened to the housing 600 of the battery cell 1000; and a separator 45, the separator 45 being arranged between the first current collector plate 200 and the cover plate 44. The separator 45 is provided with a second limiting portion, and the first limiting portion and the second limiting portion cooperate to limit the separator 45.

In this way, relative rotation between the separator 45 and the first current collector plate 200 may be avoided, so that the separator 45 is prevented from scratching the first current collector plate 200, and an insulation effect of the separator 45 is improved.

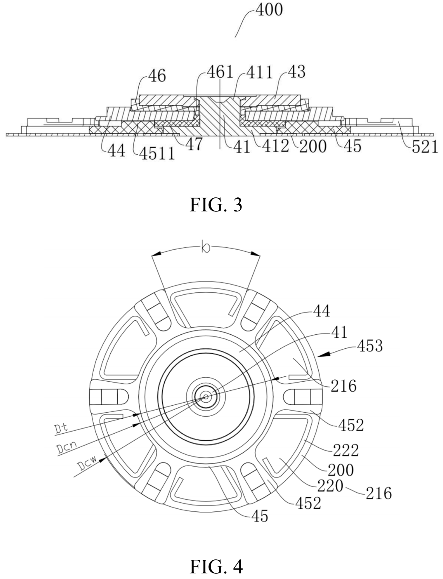

For example, as shown in FIG. 3 and FIG. 4, the battery cell 1000 includes the first current collector plate 200 and the cover plate 44. The first current collector plate 200 is arranged in the housing 600 and opposite to the first tab, and the first current collector plate 200 is configured to be electrically connected to the first tab, so that the first tab can be electrically connected to the first current collector plate 200 to supply power. The cover plate 44 is arranged on a side of the first current collector plate 200 that is away from the first tab, and the cover plate 44 is configured to be fastened to the housing 600 of the battery cell 1000, to seal an open end of the housing 600, so as to prevent a component in the housing 600 from being detached from the housing 600. It should be noted that the first current collector plate 200 may be formed by cutting a single part, so that processing difficulty of the first current collector plate 200 is low and structural stability is high.

In some embodiments, the battery cell 1000 is further provided with the separator 45, the separator 45 is arranged between the first current collector plate 200 and the cover plate 44, and the separator 45 is configured to insulate the cover plate 44 from the first current collector plate 200, to avoid an electrical connection between the first current collector plate 200 and the cover plate 44. In addition, a first limiting portion may be arranged on the first current collector plate 200, and a second limiting portion may be arranged on the separator 45. The first limiting portion and the second limiting portion are arranged opposite to each other and cooperate with each other, so that the first current collector plate 200 can limit the separator 45. Therefore, relative rotation between the separator 45 and the first current collector plate 200 can be avoided, to prevent the separator 45 from scratching the first current collector plate 200 and help improve an insulation effect of the separator 45.

According to the battery cell 1000 in this embodiment of this application, the first limiting portion is arranged on the first current collector plate 200, and the second limiting portion is arranged on the separator 45. The first limiting portion may cooperate with the second limiting portion to limit the separator 45, so that relative rotation between the separator 45 and the first current collector plate 200 can be avoided, to prevent the separator 45 from scratching the first current collector plate 200 and help improve an insulation effect of the separator 45, thereby improving reliability of the battery cell 1000.

In some embodiments of this application, one of the first limiting portion and the second limiting portion is a limiting notch 213, the other is a limiting protrusion 454, and the limiting protrusion 454 extends into the limiting notch 213.

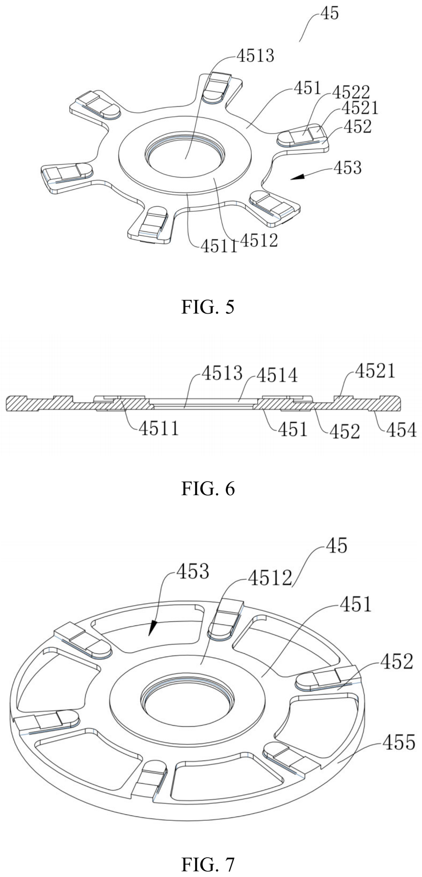

For example, as shown in FIG. 6 and FIG. 8, the first limiting portion may be provided as the limiting notch 213, and the second limiting portion may be provided as the limiting protrusion 454. In other words, the limiting protrusion 454 protruding from the separator 45 is arranged on a side of the separator 45 that faces the first current collector plate 200, and the first current collector plate 200 is provided with the limiting notch 213 extending through the first current collector plate 200 in a thickness direction. Alternatively, the first limiting portion may be provided as the limiting protrusion 454, and the second limiting portion may be provided as the limiting notch 213. In this way, the limiting protrusion 454 may extend into the limiting notch 213, to implement circumferential limiting between the first current collector plate 200 and the separator 45. This helps reduce processing difficulty of the battery cell 1000, reduce processing costs, and improve practicality of the battery cell 1000.

In some other embodiments, the first limiting portion may be provided as a circular through hole, and the second limiting portion may be provided as an elastic clamping jaw. In other words, the elastic clamping jaw protruding from the separator 45 is arranged on a side of the separator 45 that faces the first current collector plate 200, and the first current collector plate 200 is provided with the circular through hole extending through the first current collector plate 200 in a thickness direction. Alternatively, the first limiting portion may be provided as the elastic clamping jaw, and the second limiting portion may be provided as the circular through hole. In this way, the elastic clamping jaw may be engaged with the circular through hole, to implement circumferential limiting between the first current collector plate 200 and the separator 45.

In some embodiments of this application, there are a plurality of first limiting portions arranged and spaced from each other in a circumferential direction of the first current collector plate 200, there are a plurality of second limiting portions, and the plurality of first limiting portions one-to-one cooperate with the plurality of second limiting portions.

For example, as shown in FIG. 6, FIG. 8, and FIG. 9, a plurality of first limiting portions may be arranged on the first current collector plate 200, the plurality of first limiting portions are arranged and spaced from each other in the circumferential direction of the first current collector plate 200, a plurality of second limiting portions may be arranged on the separator 45, the plurality of second limiting portions are arranged and spaced from each other in a circumferential direction of the separator 45, and the plurality of first limiting portions and the plurality of second limiting portions are one-to-one opposite and cooperate, to implement circumferential limiting between the first current collector plate 200 and the separator 45. In this way, relative rotation between the first current collector plate 200 and the separator 45 can be avoided, thereby ensuring that a clearance region 453 can be opposite to the connection slot 211, and improving stability of the battery cell 1000.

In some embodiments of this application, the first current collector plate 200, the separator 45, the cover plate 44, and the conductive pillar 41 are connected to each other to form a cover plate assembly 400. In other words, the first current collector plate 200, the separator 45, the cover plate 44, and the conductive pillar 41 are connected to each other to form a whole, and then are mounted to an end portion of the housing 600 to seal an open end of the housing 600, and electrically connect to the first tab. The conductive pillar 41 may be connected to an external element.

In some embodiments of this application, in some embodiments of this application, the first current collector plate 200 is provided with a welding region electrically connected to the first tab, the separator 45 is provided with a clearance region 453, and the clearance region 453 is provided opposite to the welding region to expose the welding region.

For example, as shown in FIG. 4 and FIG. 5, a welding region 216 may be provided on the first current collector plate 200, and the first current collector plate 200 may be welded to the first tab 501 at the welding region 216 to electrically connect to the electrode core 500. A clearance region 453 is provided on the separator 45, and the clearance region 453 is provided opposite to the welding region of the first current collector plate 200, so that the clearance region 453 can avoid the welding region to expose the welding region. This reduces welding difficulty of the first tab 501 and the first current collector plate 200. Therefore, mounting difficulty of the cover plate assembly 400 can be reduced, and a processing yield and production efficiency are improved. In addition, the first current collector plate 200 does not need to be bent, so that space occupation in a Z direction of the cover plate assembly 400 is reduced, and capacity of the cover plate assembly 400 is improved.

In some embodiments of this application, in the circumferential direction of the separator 45, the clearance region 453 and the second limiting portion are spaced from each other. For example, as shown in FIG. 5 and FIG. 6, in the circumferential direction of the separator 45, the second limiting portion may be spaced from the clearance region 453, so that the first limiting portion and the second limiting portion can keep a specific spacing from the welding region. This helps reduce impact of a welding process on the first limiting portion and the second limiting portion, improve limiting accuracy, and improve reliability of the cover plate assembly 400.

In some embodiments, the first limiting portion and the second limiting portion may be respectively provided on radial outer sides of the first current collector plate 200 and the separator 45, to help reduce processing difficulty.

In some embodiments of this application, the first current collector plate 200 includes a plate body 210, a bridge edge 221, and a plurality of connection sheets 220. The plate body 210 is provided with a plurality of connection slots 211 that are spaced from each other. Each connection sheet 220 is connected to an inner side wall of one of the connection slots 211 through the bridge edge 221. Each connection sheet 220 defines a welding region.

For example, as shown in FIG. 8 and FIG. 9, the first current collector plate 200 includes a plate body 210, a bridge edge 221, and a plurality of connection sheets 220. A connection slot 211 is provided on the plate body 210. The connection slot 211 is constructed to extend through the plate body 210 in an up-down direction. There are a plurality of connection slots 211, and the plurality of connection slots 211 are spaced from each other, for example, may be spaced from each other in a circumferential direction of the plate body 210.

A connection sheet 220 is arranged in each connection slot 211. The connection sheet 220 is designed according to a shape of the connection slot 211, and a size of the connection sheet 220 is smaller than a size of the connection slot 211, so that an outer peripheral wall of the connection sheet 220 is spaced from an inner side wall of the connection slot 211, and an edge on a side of the connection slot 211 may be connected to the inner side wall of the corresponding connection slot 211 through the bridge edge 221, to connect the connection sheet 220 to the plate body 210. Each connection sheet 220 defines a welding region, so that the connection sheet 220 may be configured to be welded to the first tab 501. In this way, a connection area between the first current collector plate 200 and the first tab 501 can be increased, to improve a current flow capability.

It will be understood that, because the connection sheet 220 is connected to the plate body 210 only by using the bridge edge 221, when the electrode core 500 vibrates, the connection sheet 220 may be slightly deformed to absorb an impact force. This can reduce a pull of the vibration on a weld seam between the first tab 501 and the connection sheet 220, thereby improving stability of connection between the first current collector plate 200 and the first tab 501. In addition, a width of the bridge edge 221 may be adjusted, to satisfy various fast charging requirements of the battery cell 1000, thereby improving practicability of the cover plate assembly 400.

In some embodiments of this application, an orthographic projection of an outer peripheral wall of the plate body 210 on a first projection plane is located on a first ring, and the plate body 210 is provided with a middle section 2100 electrically connected to the conductive pillar 41. The connection slot 211 is located on a radial outer side of the middle section 2100 in a radial direction of the plate body 210. An orthographic projection of the bridge edge 221 on the first projection plane is located on a radial inner side of an outer peripheral edge of an orthographic projection of the connection sheet 220. The conductive pillar 41 is electrically connected to an external element.

For example, as shown in FIG. 9, the first projection plane is perpendicular to a thickness direction of the plate body 210. On the first projection plane, the orthographic projection of the outer peripheral wall of the plate body 210 may be arranged to be completely located on the first ring, to construct the outer peripheral wall of the plate body 210 into a ring shape. Alternatively, the orthographic projection of the outer peripheral wall of the plate body 210 may be arranged to be partially located on the first ring. For example, a protrusion or a recess may be formed on the outer peripheral wall of the plate body 210, to construct the outer peripheral wall of the plate body 210 into an approximate ring shape.

In some embodiments, a middle section 2100 is arranged on the plate body 210, and the middle section 2100 is electrically connected to the conductive pillar 41. In addition, in a radial direction of the plate body 210, the connection slot 211 is located on a radial outer side of the middle section 2100, to be spaced from the conductive pillar 41. The connection slot 211 is constructed into a polygon, and an orthographic projection of the bridge edge 221 on the first projection plane is located on a radial inner side of an outer peripheral edge of an orthographic projection of the connection sheet 220, so that a length of a conductive path between the first tab 501 of the electrode core 500 and the conductive pillar 41 is relatively short. In addition, the conductive pillar 41 is electrically connected to an external element, so that the electrode core 500 can be electrically connected to the external element through the conductive pillar 41.

It will be understood that the length of the conductive path between the electrode core 500 and the conductive pillar 41 is set to be relatively short, so that a length of a conductive path between the electrode core 500 and the external element can be reduced, to reduce resistance of the conductive path and improve a current flow capability.

In some embodiments, the connection slot 211 may be constructed into a triangle, and the connection sheet 220 is correspondingly constructed into a triangle, and may be connected to the plate body 210 on any side of the connection sheet 220 in the circumferential direction of the plate body 210, so that a length of a loop between the first tab 501 and the conductive pillar 41 is relatively short. Alternatively, the connection slot 211 may be constructed into a sector, and the connection sheet 220 is correspondingly constructed into a sector, and may be connected to the plate body 210 on a side of the connection sheet 220 that faces the center of the plate body 210, or may be connected to the plate body 210 on any side of the connection sheet 220 in the circumferential direction of the plate body 210, so that a length of a loop between the first tab 501 and the conductive pillar 41 is relatively short.

In some embodiments of this application, a plurality of clearance regions 453 are provided on the separator 45, and in the first direction, the plurality of clearance regions 453 are provided one-to-one opposite to the plurality of connection slots 211.

For example, as shown in FIG. 4 and FIG. 5, a plurality of clearance regions 453 may be provided on the separator 45. In the first direction, the plurality of clearance regions 453 are provided one-to-one opposite to the plurality of connection slots 211, so that the separator 45 can avoid the connection sheet 220. In this way, in a process of mounting the cover plate assembly 400, the cover plate assembly 400 may be assembled first, and then the connection sheet 220 is welded to the first tab 501. Therefore, mounting difficulty of the cover plate assembly 400 can be reduced, and practicality and reliability of the cover plate assembly 400 can be improved.

In some embodiments of this application, a diameter of the separator 45 is greater than a diameter of the first current collector plate 200, so that the separator 45 can insulate the cover plate 44 from the first current collector plate 200, to prevent the first current collector plate 200 from being electrically connected to the cover plate 44, thereby avoiding a short circuit of the housing 600.

With reference to FIG. 5, the separator 45 in this embodiment of this application includes a central portion 451 and a plurality of extension arms 452. The central portion 451 is provided with a first support surface 4512 supporting the cover plate 44 of the cover plate assembly 400. The plurality of extension arms 452 are arranged in the central portion 451 and are spaced from each other in a circumferential direction of the central portion 451. A clearance region 453 is defined between adjacent extension arms 452, and the clearance region 453 is arranged opposite to a welding region of the first current collector plate 200 to expose the welding region.

In this way, welding difficulty of the first current collector plate 200 can be reduced, and processing yield and production efficiency can be improved.

For example, as shown in FIG. 5 and FIG. 6, the separator 45 includes a central portion 451, and the central portion 451 is constructed into an annular structure, so that the separator 45 may be sleeved on an outer side of the conductive pillar 41. The central portion 451 forms a first support surface 4512 around the conductive pillar 41, and the first support surface 4512 is configured to support a side wall of the cover plate 44 that faces the first current collector plate 200, to limit the cover plate 44.

The separator 45 further includes an extension arm 452, and the extension arm 452 is connected to an edge of the central portion 451 and extends outward in a radial direction of the central portion 451. A plurality of extension arms 452 are arranged, and the plurality of extension arms 452 are spaced from each other in a circumferential direction of the central portion 451. A clearance region 453 is defined between two adjacent extension arms 452, and the clearance region 453 is provided opposite to a welding region of the first current collector plate 200, so that the clearance region 453 can avoid the connection slot 211 to expose the welding region. This reduces welding difficulty between the first tab 501 and the first current collector plate 200. Therefore, mounting difficulty of the cover plate assembly 400 can be reduced, and processing yield and production efficiency are improved. In addition, the first current collector plate 200 does not need to be bent, so that space occupation in a Z direction of the cover plate assembly 400 is reduced, and reliability of the cover plate assembly 400 is improved.

According to the separator 45 in this embodiment of this application, the clearance region 453 is provided, so that the separator 45 can avoid the welding region of the first current collector plate 200 to expose the welding region. This helps reduce welding difficulty, and improve processing yield and production efficiency.

In some embodiments of this application, the central portion 451 is formed into a disc shape, an outer diameter of the central portion 451 is Dcn, orthographic projections of outer peripheral walls of the separator 45 on a first plane are located on a same circle, an outer diameter of the separator 45 is Dcw, the separator 45 satisfies the following relationship: 0.85*Dcw≥Dcn≥0.4*Dcw, and the first plane is provided perpendicular to a thickness direction of the separator 45.

For example, as shown in FIG. 4, the central portion 451 is formed into the disc shape, and the outer diameter of the central portion 451 may be set to Dcn. The first plane is arranged perpendicular to the thickness direction of the separator 45, and the orthographic projections of the outer peripheral walls of the separator 45 on the first plane are located on the same circle. The outer diameter of the separator 45 may be set to Dcw, which satisfies the following relationship: 0.85*Dcw≥Dcn≥0.4*Dcw. In other words, the outer diameter Dcn of the central portion 451 may be set to be greater than or equal to 0.4 times the outer diameter Dcw of the separator 45 and less than or equal to 0.85 times the outer diameter Dcw of the separator 45. Herein, the first direction may be a height direction of the battery cell 1000 shown in the figure, that is, may be a thickness direction of the cover plate 44 and the separator 45.

Through the foregoing setting, the clearance region 453 may have a sufficient size in the radial direction of the separator 45, so that the clearance region 453 can sufficiently avoid the welding region. This helps reduce welding difficulty, and can avoid that structural strength of the separator 45 is excessively low because a size of the central portion 451 is excessively small, so that reliability of the separator 45 is improved.

In some embodiments of this application, a ratio of a total area of the clearance region 453 to an area of a circular region in which the clearance region 453 is provided on the separator 45 is S2, and satisfies: 0.35≤S2≤0.9.

For example, as shown in FIG. 4, a ratio of a total area of the plurality of clearance regions 453 to the area of the circular region in which the clearance region 453 is provided on the separator 45 may be set to S2, and satisfies: 0.35≤S2≤0.9. In other words, the ratio S2 of the total area of the plurality of clearance regions 453 to the area of the circular region in which the clearance region 453 is provided on the separator 45 may be set to 0.45. Alternatively, the ratio S2 of the total area of the plurality of clearance regions 453 to the area of the circular region in which the clearance region 453 is provided on the separator 45 may be set to 0.6. Alternatively, the ratio S2 of the total area of the plurality of clearance regions 453 to the area of the circular region in which the clearance region 453 is provided on the separator 45 may be set to 0.75. This is not limited in this application.

Through the foregoing setting, the separator 45 can sufficiently avoid the welding region of the first current collector plate 200, so that an exposed area of the welding region is large enough, welding difficulty is effectively reduced, and a processing yield and production efficiency are improved.

In some embodiments of this application, an included angle between any two adjacent extension arms 452 is b, and satisfies: 10°≤b≤160°. For example, as shown in FIG. 4, the extension arm 452 may be arranged to extend outward in the radial direction of the central portion 451, side edges that are of two adjacent extension arms 452 and that face each other form an included angle, and the included angle is set to b, and satisfies: 10°≤b≤160°. In other words, the included angle b between any two adjacent extension arms 452 may be set to 20°. Alternatively, the included angle b between any two adjacent extension arms 452 may be set to 85°. Alternatively, the included angle b between any two adjacent extension arms 452 may be set to 150°. This is not limited in this application.

Through the foregoing setting, the separator 45 may have a plurality of different structures (for example, have 2 to 12 clearance regions 453), so that the separator 45 can adapt to the first current collector plate 200 of different structures, and an excessively small opening of the clearance region 453 or an excessively large quantity of clearance regions 453 can be avoid, thereby helping improve a welding effect, reduce processing difficulty, and improve practicability of the separator 45.

In some embodiments of this application, orthographic projections of outer peripheral walls of the cover plate 44 on the first plane are located on a same circle, the central portion 451 is formed into a disc shape, an outer diameter of the cover plate 44 is Dt, an outer diameter of the central portion 451 is Dcn, the cover plate assembly 400 satisfies Dt+5 mm≥Dcn≥Dt, and the first plane is arranged perpendicular to a thickness direction of the cover plate 44.

For example, as shown in FIG. 4, the first plane is arranged perpendicular to a thickness direction of the cover plate 44, orthographic projections of outer peripheral walls of the cover plate 44 on the first plane are located on a same circle, and the central portion 451 is formed into a disc shape. In some embodiments, the outer diameter of the cover plate 44 may be set to Dt, and the outer diameter of the central portion 451 is set to Dcn, and satisfies: Dt+5 mm≥Dcn≥Dt. In other words, the outer diameter Dcn of the central portion 451 may be set to be greater than or equal to the outer diameter Dt of the cover plate 44 and less than or equal to a sum of the outer diameter Dt of the cover plate 44 and 5 mm. In this way, the separator 45 may completely separate the cover plate 44 from the first current collector plate 200, thereby reducing a possibility of a short circuit of the housing, and reserving a sufficient area for the clearance region 453 to facilitate welding.

In some embodiments of this application, at least one extension arm 452 and/or the central portion 451 are/is provided with a second limiting portion, and the second limiting portion is adapted to cooperate with the first limiting portion on the first current collector plate 200.

For example, as shown in FIG. 5 and FIG. 6, a second limiting portion may be arranged on each of the plurality of extension arms 452, or a plurality of second limiting portions may be arranged on the central portion 451, and the plurality of second limiting portions are spaced from each other in a circumferential direction of the central portion 451. In addition, a plurality of first limiting portions may be arranged on the first current collector plate 200, and the plurality of second limiting portions and the plurality of first limiting portions are opposite and cooperate in one-to-one correspondence, so that the first current collector plate 200 and the separator 45 can be mutually limited in a circumferential direction.

In this way, relative rotation between the first current collector plate 200 and the separator 45 can be avoided, so that the clearance region 453 can always be opposite to the welding region, thereby improving reliability of the cover plate assembly 400.

In some embodiments of this application, as shown in FIG. 5 and FIG. 6, the second limiting portion may be arranged at an end of the extension arm 452 that is away from the central portion 451. Through the foregoing setting, the second limiting portion can be located at an edge position of the separator 45, so that the second limiting portion and the first limiting portion can be spaced from the welding region, thereby reducing impact of a welding process on the second limiting portion and the first limiting portion, and improving limiting accuracy. This helps improve reliability of the cover plate assembly 400.

In some embodiments of this application, the second limiting portion is a limiting protrusion 454. For example, as shown in FIG. 6, the second limiting portion may be provided as a limiting protrusion 454, and the first limiting portion may be provided as a limiting notch 213. The limiting protrusion 454 extends into the limiting notch 213, so that circumferential limiting between the first current collector plate 200 and the separator 45 can be implemented. In this way, cooperation stability between the separator 45 and the first current collector plate 200 can be improved.

In some embodiments of this application, the central portion 451 is provided with a first support protrusion 4511, and the first support protrusion 4511 defines a first support surface 4512. For example, as shown in FIG. 5 and FIG. 6, a first support protrusion 4511 protruding upward may be arranged on the central portion 451, the first support protrusion 4511 extends around the conductive pillar 41, an upper side of the first support protrusion 4511 defines a first support surface 4512, and the first support surface 4512 is configured to abut against a bottom wall of the cover plate 44, so that the bottom wall of the cover plate 44 can be separated from a top wall of the central portion 451. Therefore, a contact area between the cover plate 44 and the central portion 451 may be reduced, and an accuracy requirement of the cover plate assembly 400 may be reduced.

In some embodiments of this application, a second support protrusion 4521 is arranged on the extension arm 452, and the second support protrusion 4521 is adapted to stop the housing 600. For example, as shown in FIG. 5 and FIG. 6, a second support protrusion 4521 may be arranged on an upper side surface of each extension arm 452, the second support protrusion 4521 protrudes upward, and the second support protrusion 4521 may stop an inner wall of an end portion of the housing 600, so that the housing 600 can apply Z-direction limiting on the electrode core 500 by using the second support protrusion 4521, to reduce Z-direction movement of the electrode core 500. In addition, the top wall of the central portion 451 and the inner wall of the end portion of the cover plate 44 may be kept spaced from each other to form electrolyte storage space, and the electrolyte storage space is used to accommodate an electrolyte, so that an electrolyte capacity of the housing 600 can be increased, and stability of a long life cycle of the battery can be improved. This helps improve reliability of the battery cell 1000.

In some embodiments, a demolding groove 4522 may be formed in the middle of the second support protrusion 4521, to help reduce demolding difficulty of the separator 45 and improve processing quality of the separator 45.

In some embodiments of this application, as shown in FIG. 5 and FIG. 6, a protrusion height of the second support protrusion 4521 is not less than a protrusion height of the first support protrusion 4511. In some embodiments, a height difference between the first support protrusion 4511 and the second support protrusion 4521 may be set to be less than or equal to 3 mm. Through the foregoing setting, a spacing between a top wall of the second support protrusion 4521 and the inner wall of the end portion of the housing 600 can be reduced, helping improve a limiting effect of the second support protrusion 4521, so that Z-direction movement of the electrode core 500 is reduced, and practicability of the separator 45 is improved.

In some embodiments of this application, the central portion 451 is provided with a first central hole 4513, the first support protrusion 4511 is provided with a second central hole 4514 communicating with the first central hole 4513, and a diameter of the second central hole 4514 is greater than a diameter of the first central hole 4513.

For example, as shown in FIG. 3, a lower end of the conductive pillar 41 is formed into a first end 412. A diameter of the first end 412 is greater than a diameter of a pillar body of the conductive pillar 41. The first end 412 is configured to be welded to the first current collector plate 200, to help increase a connection area between the first current collector plate 200 and the conductive pillar 41, and reduce resistance of a conductive path.

In some embodiments, as shown in FIG. 5 and FIG. 6, a first central hole 4513 may be provided in the central portion 451, and a diameter of the first central hole 4513 matches the diameter of the first end 412, so that the first end 412 may extend into the first central hole 4513. In this way, the separator 45 can be sleeved on an outer side of the first end 412. The first support protrusion 4511 extends around the conductive pillar 41, and a second central hole 4514 is formed in the first support protrusion 4511. The second central hole 4514 and the first central hole 4513 have the same axis and communicate with each other, and a diameter of the second central hole 4514 is greater than the diameter of the first central hole 4513. A first insulating member 46 is mounted in the second central hole 4514, and a diameter of the first insulating member 46 is greater than a diameter of a second end 411. The first insulating member 46 can completely separate the cover plate 44 from the second end 411 of the conductive pillar 41. In this way, insulation performance between the cover plate 44 and the second end 411 can be improved, and a short circuit of the housing 600 is effectively avoided.

In some embodiments of this application, the separator 45 further includes a flange 455, and the flange 455 is connected to end portions of the plurality of extension arms 452 and extends in a direction away from the first support surface 4512.

For example, as shown in FIG. 7, the separator 45 is further provided with a flange 455. The flange 455 is constructed to extend in a circumferential direction of the separator 45. One end of the flange 455 is connected to end walls of the plurality of extension arms 452, and the other end extends in a direction away from the first support surface 4512 (that is, extends downward). An extension length of the flange 455 is greater than a height of the first tab 501 in a Z direction. In this way, after the cover plate 44 is assembled to the housing 600, the flange 455 may extend between the first tab 501 and the housing 600 to provide insulation. Therefore, a short circuit caused by contact between the first tab 501 and the housing 600 can be avoided, thereby improving safety of the battery cell 1000.

In some embodiments of this application, a metal connection member 43 is further included. The first end 412 of the conductive pillar 41 is electrically connected to the middle section 2100 of the first current collector plate 200, the second end 411 of the conductive pillar 41 is electrically connected to the metal connection member 43, a first insulating member 46 is arranged between the metal connection member 43 and the cover plate 44, and a second insulating member 47 is arranged between the conductive pillar 41 and the cover plate 44.

For example, as shown in FIG. 2 and FIG. 3, the cover plate assembly 400 includes a conductive pillar 41 and a metal connection member 43, and two ends of the conductive pillar 41 are respectively formed into a first end 412 and a second end 411. The first current collector plate 200 and the metal connection member 43 are respectively arranged at two ends of the conductive pillar 41, and the middle section 2100 of the first current collector plate 200 may be electrically connected to the first end 412, so that the electrode core 500 may be electrically connected to the conductive pillar 41. In addition, the metal connection member 43 may be electrically connected to the second end 411 of the conductive pillar 41, an electrical connection surface is formed on a side wall of the metal connection member 43 that is away from the first current collector plate 200, and the electrode core 500 may supply power through the electrical connection surface. In some embodiments, a material of the metal connection member 43 may be aluminum.

In some embodiments, a first insulating member 46 may be arranged between the metal connection member 43 and the cover plate 44. The first insulating member 46 is constructed into an annular structure whose diameter is greater than that of the metal connection member 43. An accommodating groove is formed on a side of the first insulating member 46 that is away from the cover plate 44, and the metal connection member 43 may extend into the accommodating groove, so that the first insulating member 46 can insulate the cover plate 44 from the metal connection member 43, to avoid an electrical connection between the metal connection member 43 and the cover plate 44. In addition, a second insulating member 47 may be arranged between the cover plate 44 and the conductive pillar 41, and the second insulating member 47 is configured to insulate the conductive pillar 41 from the cover plate 44, to avoid an electrical connection between the conductive pillar 41 and the cover plate 44. Through the foregoing setting, an electrical connection between the cover plate 44 and the electrode core 500 can be avoided, to avoid a short circuit of the housing 600, thereby improving reliability of the cover plate assembly 400.

In some embodiments of this application, a minimum diameter of the conductive pillar 41 may be set to L1, and the minimum diameter L1 of the conductive pillar 41 is set to be greater than or equal to 2 mm. A diameter of the first current collector plate 200 may be set to L2, and the diameter L2 of the first current collector plate 200 is set to be greater than or equal to 10 mm. A height of the conductive pillar 41 may be set to H1, and the height of the conductive pillar 41 is greater than or equal to 0.5 mm and less than or equal to 10 mm. Therefore, riveting reliability and a current flow capability can be improved.

In some embodiments of this application, a part of the second insulating member 47 is located between the cover plate 44 and the first end 412. For example, as shown in FIG. 3, the diameter of the first end 412 may be set to be greater than the diameter of the second end 411, so that a size of the first end 412 is large. This can increase a connection area between the first current collector plate 200 and the conductive pillar 41, and reduce resistance of a conductive path. In addition, a part of the second insulating member 47 may extend in a horizontal direction, to extend between the cover plate 44 and the first end 412, so that the second insulating member 47 can insulate the cover plate 44 from the first end 412, to avoid an electrical connection between the cover plate 44 and the conductive pillar 41. In this way, insulation performance of the cover plate 44 is improved.

In some embodiments of this application, the second insulating member 47 may be provided as an elastic member. Through the foregoing setting, after the second end 411 of the conductive pillar 41 is deformed and riveted, the part of the second insulating member 47 between the cover plate 44 and the first end 412 is stressed and deformed, and the second insulating member 47 may apply an external elastic force, so that the metal connection member 43, the first insulating member 46, the cover plate 44, the second insulating member 47, and the separator 45 are tightly connected, to avoid relative movement between the metal connection member 43, the first insulating member 46, the cover plate 44, the second insulating member 47, and the separator 45. This helps improve overall stability of the cover plate assembly 400.

In some embodiments of this application, the cover plate 44 is provided with a mounting hole 4411, the conductive pillar 41 passes through the mounting hole 4411, the first insulating member 46 is provided with an extension protrusion 461 that extends into the mounting hole 4411, and the extension protrusion 461 stops the second insulating member 47.

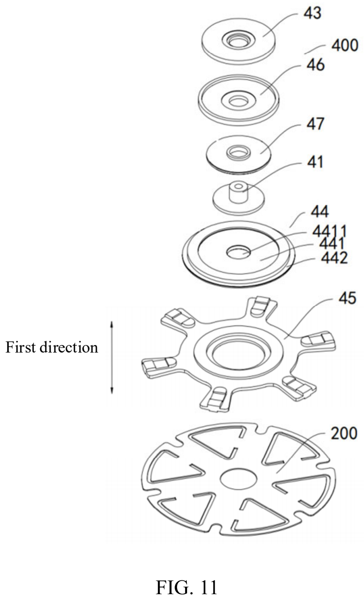

For example, as shown in FIG. 3 and FIG. 11, a mounting hole 4411 may be provided at a center position of the cover plate 44, the mounting hole 4411 extends through the cover plate 44 in an up-down direction, a diameter of the mounting hole 4411 is greater than a diameter of the conductive pillar 41, the conductive pillar 41 can pass through the mounting hole 4411, and an inner peripheral wall of the mounting hole 4411 is spaced from an outer peripheral wall of the conductive pillar 41. An extension protrusion 461 is formed at an inner edge of the first insulating member 46, and the extension protrusion 461 is constructed to extend downward. The extension protrusion 461 may extend between the outer peripheral wall of the conductive pillar 41 and the inner peripheral wall of the mounting hole 4411, and a lower end of the extension protrusion 461 may abut against the second insulating member 47. In this way, the first insulating member 46 and the second insulating member 47 may cooperate to completely separate the conductive pillar 41 from the cover plate 44. Therefore, insulation performance of the cover plate 44 is improved, and a possibility of electric leakage of the housing 600 is reduced.

In some embodiments of this application, the middle section 2100 is formed into a central hole 212 that extends through the first current collector plate 200 in a thickness direction, the first end 412 is located in the central hole 212, and an outer peripheral wall of the first end 412 is welded to an inner wall of the central hole 212. For example, as shown in FIG. 8 and FIG. 9, the middle section 2100 may be formed into a central hole 212, and the central hole 212 is constructed to extend through the first current collector plate 200 in the thickness direction. That is, the central hole 212 may extend through the first current collector plate 200 in an up-down direction. At least a part of the first end 412 may extend downward into the central hole 212, and an outer peripheral wall of the first end 412 may be welded to an inner wall of the central hole 212, to implement stable mounting of the first end 412 and the first current collector plate 200.

Through the foregoing setting, large-area overlapping between the conductive pillar 41 and the first current collector plate 200 can be avoided, helping reduce an accuracy requirement of the cover plate assembly 400. In addition, the conductive pillar 41 and the first current collector plate 200 may be welded from a lower side of the first current collector plate 200, helping reduce welding difficulty of the first current collector plate 200.

In some embodiments of this application, the conductive pillar 41 extends in the first direction. In the first direction, the metal connection member 43, the cover plate 44, and the separator 45 are sequentially sleeved on the conductive pillar 41, and the second end 411 is deformed under pressure, so that at least a part of the second end 411 is located on a side, of the metal connection member 43, away from the first current collector plate 200 and is in contact with the metal connection member 43.

For example, as shown in FIG. 3, the conductive pillar 41 may be arranged to extend in the first direction. In the first direction, an upper end of the conductive pillar 41 is formed into the second end 411, and a lower end of the conductive pillar 41 is formed into the first end 412. The metal connection member 43, the cover plate 44, and the separator 45 are sequentially sleeved on an outer side of the conductive pillar 41. The metal connection member 43 may be electrically connected to the second end 411, and the separator 45 is configured to insulate the cover plate 44 from the first current collector plate 200.

In some embodiments, a step groove may be formed on the side of the metal connection member 43 that is away from the first current collector plate 200, and the step groove is arranged around the conductive pillar 41. After the metal connection member 43 is sleeved on the outer side of the conductive pillar 41, the second end 411 of the conductive pillar 41 may be squeezed, to make the second end 411 deformed under pressure, so that at least a part of the second end 411 may extend into the step groove and be in contact with the metal connection member 43. The second end 411 is riveted to the metal connection member 43, to apply a downward force on the metal connection member 43. The metal connection member 43, the first insulating member 46, the cover plate 44, the second insulating member 47, and the separator 45 are pressed and tightened, to assemble the cover plate assembly 400. In addition, a contact area between the conductive pillar 41 and the metal connection member 43 can be increased, and resistance of a conductive path can be reduced.

It will be understood that the metal connection member 43 and the conductive pillar 41 are formed separately, and then the metal connection member 4330 is sleeved on the conductive pillar 41, so that the conductive pillar 41 may be riveted to and limit the metal connection member 43, thereby enabling the assembly of the cover plate assembly 400. This can reduce assembly difficulty of the cover plate assembly 400, and helps improve surface flatness and cylindricity of the conductive pillar 41, and improve reliability of the cover plate assembly 400.

In some embodiments of this application, an assembly hole 6201 is provided at an end of the housing 600 that is close to the first current collector plate 200, and the cover plate 44 seals the assembly hole 6201.

For example, as shown in FIG. 1, the battery cell 1000 is provided with a housing 600 and an electrode core 500, the housing 600 forms an accommodating cavity, an assembly hole 6201 is provided at an end of the housing 600 that is close to the first current collector plate 200 in the first direction, and the electrode core 500 is placed in the accommodating cavity of the housing 600, so that the housing 600 can separate the electrode core 500 from the outside. In some embodiments, the cover plate 44 is connected to the housing 600, and the cover plate 44 may seal the assembly hole 6201, to prevent the accommodating cavity from directly communicating with an outer side of the housing 600 through the assembly hole 6201.

In some embodiments of this application, the cover plate 44 includes a plate body 441 and a first stop portion 442. The first stop portion 442 is located at an outer peripheral edge of the plate body 441, the first stop portion 442 is located in the housing 600 and stops an inner wall of the housing 600, the first stop portion 442 is fastened to the housing 600, and the plate body 441 is sleeved on the conductive pillar 41 and is fastened to the housing 600.

For example, as shown in FIG. 11, the cover plate 44 includes a plate body 441 and a first stop portion 442. The plate body 441 is constructed into a ring shape, so that the plate body 441 is sleeved on an outer side of the conductive pillar 41. The first stop portion 442 is located on a lower side of an outer peripheral edge of the plate body 441 and extends in a circumferential direction of the plate body 441. When the cover plate 44 is mounted to the housing 600, the first stop portion 442 is located in the accommodating cavity of the housing 600, and the first stop portion 442 may stop an inner wall of the housing 600 around the assembly hole 6201 to locate the cover plate assembly 400. In addition, the first stop portion 442 may be fastened, for example, welded or bonded, to the housing 600, to implement stable mounting of the cover plate 44 and the housing 600. This helps improve mounting accuracy of the cover plate assembly 400, and improves reliability of the battery cell 1000.

In some embodiments of this application, the battery cell 1000 further includes: a cover plate 44, the cover plate 44 being fastened to an end of the housing 600 that is close to the first current collector plate 200; a separator 45, the separator 45 being arranged between the first current collector plate 200 and the cover plate 44; and a heat shrink insulating film 30, the heat shrink insulating film 30 wrapping at least a part of an outer peripheral wall of the electrode core 500 and a part of the separator 45. The cover plate 44 is exposed to the heat shrink insulating film.

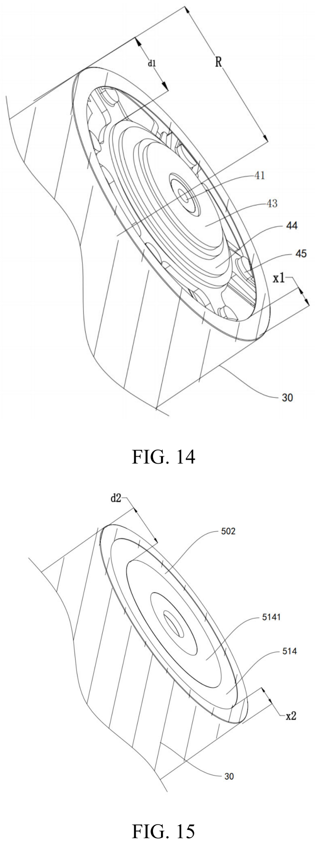

For example, as shown in FIG. 1 and FIG. 15, the battery cell 1000 includes the first current collector plate 200 and the cover plate 44. The first current collector plate 200 is arranged in the housing 600 and opposite to the first tab, and the first current collector plate 200 is configured to be electrically connected to the first tab, so that the first tab can be electrically connected to the first current collector plate 200 to supply power. The cover plate 44 is arranged on a side of the first current collector plate 200 that is away from the first tab, and the cover plate 44 is configured to be fastened to the housing 600 of the battery cell 1000, to seal an open end of the housing 600, so as to prevent a component in the housing 600 from being detached from the housing 600. It should be noted that the first current collector plate 200 may be formed by cutting a single part, so that processing difficulty of the first current collector plate 200 is low and structural stability is high.

In some embodiments, the battery cell 1000 is further provided with the separator 45, the separator 45 is arranged between the first current collector plate 200 and the cover plate 44, and the separator 45 is configured to insulate the cover plate 44 from the first current collector plate 200, to avoid an electrical connection between the first current collector plate 200 and the cover plate 44, and avoid a safety hazard such as a short circuit.

The heat shrink insulating film 30 wraps at least a part of an outer peripheral wall of the electrode core 500, and the heat shrink insulating film 30 covers a part of the separator 45. Because the separator 45 is arranged on a side of the first current collector plate 200 that is away from the first tab 501, that is, the first current collector plate 200 is arranged between the first tab 501 and the separator 45, when the heat shrink insulating film 30 wraps at least a part of the outer peripheral wall of the electrode core 500 and a part of the separator 45, the heat shrink insulating film 30 can perform insulation protection on the outer peripheral wall of the electrode core 500 and the first current collector plate 200. In this way, a leakage region of the first current collector plate 200 is reduced, and insulation protection is performed on a protected partial region of the first current collector plate 200.

In an embodiment in which the electrode core 500 is used in the battery cell 1000, the battery cell 1000 has a housing 600, the electrode core 500 is arranged in the housing 600, the heat shrink insulating film 30 wraps at least a part of an outer peripheral wall of the electrode core 500, and the heat shrink insulating film 30 covers a part of the separator 45, to avoid that the outer peripheral wall of the electrode core 500 and the first current collector plate 200 are in contact with the housing 600, and avoid that the outer peripheral wall of the electrode core 500 and the first current collector plate 200 are electrically connected to the housing 600, so as to avoid a problem such as a short circuit of the battery cell 1000. In this way, operation safety of the battery cell 1000 is improved, and operation stability of the battery cell 1000 is improved.

In some embodiments, the first tab 501 of the electrode core 500 is electrically connected to the first current collector plate 200, the separator 45 is located on another side of the first current collector plate 200, and the heat shrink insulating film 30 covers at least a part of an outer peripheral surface of the electrode core 500 and covers a part of the separator 45. In this case, the separator 45 and the heat shrink insulating film 30 jointly perform insulation protection on the first current collector plate 200, so that a current on the first current collector plate 200 can flow to a specified region, to avoid that the current on the first current collector plate 200 flows to the housing 600, thereby avoiding a short circuit.

In addition, the heat shrink insulating film 30 covers a part of the separator 45, so that the heat shrink insulating film 30 can cover the outer peripheral surface of the electrode core 500 and an end portion of the electrode core 500. Further, the heat shrink insulating film 30 is bent at a position corresponding to the first tab 501, so that the heat shrink insulating film 30 can be directly fastened to the outer peripheral surface of the electrode core 500, thereby avoiding that the heat shrink insulating film 30 is detached from the outer peripheral surface of the electrode core 500.

Specifically, when a temperature of the heat shrink insulating film 30 is higher than a glass transition temperature of the heat shrink insulating film 30, the heat shrink insulating film 30 changes from a rigid solid glass state to a fluid state. In this case, the heat shrink insulating film 30 can be stretched to adjust a shape, a length, and the like of the heat shrink insulating film 30. After stretching of the heat shrink insulating film 30 is completed, the heat shrink insulating film 30 is cooled. In this case, the heat shrink insulating film 30 changes from the fluid state to the glass state. In this case, the heat shrink insulating film 30 can cover at least a part of the outer peripheral surface of the electrode core 500 and cover a part of the separator 45.

Performing insulation protection on the electrode core 500 in this manner helps adjust a shape, a length, and the like of the heat shrink insulating film 30 in a timely manner based on a specific shape of the electrode core 500, thereby avoiding a waste of resources. In addition, in this manner, the heat shrink insulating film 30 can be directly coated and fastened on the outer peripheral surface of the electrode core 500, and no other component is required to adhere or fasten the heat shrink insulating film 30, thereby helping reduce mounting complexity and reduce process difficulty.

Therefore, according to the electrode core 500 in this embodiment of this application, the heat shrink insulating film 30 is coated on the electrode core 500 and the first current collector plate 200, to perform insulation protection on the outer peripheral wall of the electrode core 500 and the first current collector plate 200, so as to avoid that the outer peripheral wall of the electrode core 500 and the first current collector plate 200 are electrically connected to the housing 600 of the battery cell 1000, thereby avoiding a short circuit. Coating is stable, and a protection capability is strong. In addition, in this method, the heat shrink insulating film 30 can be arranged on the electrode core 500 without another fastening structure, thereby helping reduce process complexity and production costs.

In some embodiments of this application, as shown in FIG. 4, a plurality of welding regions 216 are provided on the first current collector plate 200, and each welding region 216 is welded to the first tab 501, to stably fasten the first current collector plate 200 to the first tab 501, so as to implement an electrical connection between the first tab 501 and the first current collector plate 200, so that the current on the electrode core 500 can flow to the first current collector plate 200 through the first tab 501.

The separator 45 is provided with a plurality of clearance regions 453, and the plurality of clearance regions 453 are provided one-to-one opposite to the plurality of welding regions 216. The heat shrink insulating film 30 is located on an outer side of the plurality of clearance regions 453 to expose the plurality of clearance regions 453, so that when the first current collector plate 200 is welded to the first tab 501, a welding device can reach the welding region 216 through the clearance region 453, to perform an operation in the welding region 216, thereby implementing a welding connection between the welding region 216 and the first tab 501.

As shown in FIG. 1 to FIG. 15, in this embodiment, the plurality of welding regions 216 are spaced from each other in the circumferential direction of the first current collector plate 200, and the welding region 216 is welded to the first tab 501, to implement a fixed and electrical connection between the welding region 216 and the first current collector plate 200. The plurality of clearance regions 453 are spaced from each other in the circumferential direction of the separator 45, and the clearance region 453 is constructed to extend through the separator 45 in the first direction. It will be understood herein that the foregoing direction is merely defined to facilitate description of the accompanying drawings, and does not limit an actual arrangement position and direction of the electrode core 500.

In the first direction, the plurality of welding regions 216 are provided one-to-one opposite to the plurality of clearance regions 453. In a process of mounting the cover plate assembly 400, the cover plate assembly 400 may be assembled first, and then the first current collector plate 200 and the first tab 501 are welded. Therefore, mounting difficulty of the cover plate assembly 400 can be reduced, and practicality and reliability of the cover plate assembly 400 can be improved.

In some embodiments of this application, the cover plate 44 is exposed to the heat shrink insulating film 30, to protect the separator 45 and the current collector plate 21 by using the cover plate 44. In addition, the cover plate 44 is arranged at an end of the housing 600, the cover plate 44 is adapted to be fastened to the housing 600, and the cover plate 44 and the housing 600 are welded, to seal the end of the housing 600 by using the cover plate 44, so that the electrode core 500, the heat shrink insulating film 30, the current collector plate 21, and the separator 45 are arranged in the housing 600, and the electrode core 500, the heat shrink insulating film 30, the current collector plate 21, and the separator 45 are protected by using the housing 600.

In some embodiments of this application, the heat shrink insulating film 30 is a singlelayer or multi-layer polyolefin film and polymer polyester film having a heat shrink characteristic. Such a heat shrink insulating film 30 has a low price, a low processing temperature, and a wide processing temperature range, and a process in which the heat shrink insulating film 30 is coated is simple and efficient, thereby helping reduce costs.

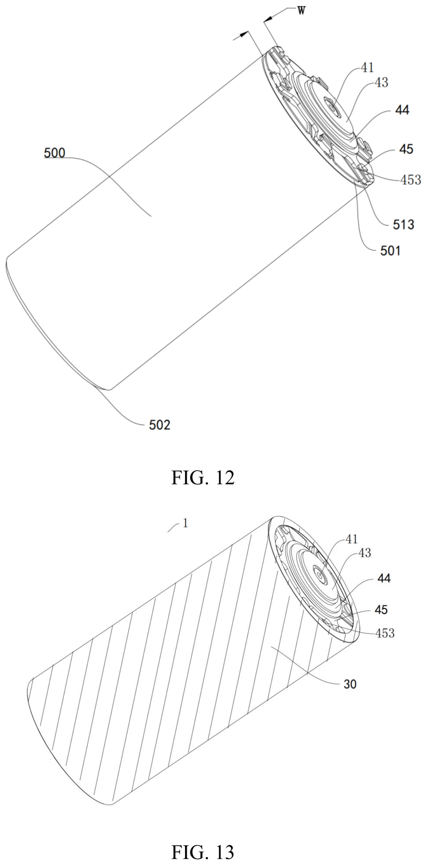

In some optional embodiments of this application, as shown in FIG. 13 to FIG. 16, the electrode core 500 is formed into a cylindrical shape. A minimum value of a radial spacing between an outer edge of the cover plate 44 and an outer peripheral wall of the electrode core 500 is d1, a radius of the electrode core 500 is R, and a value range of d1 is 4 mm≤d1<R. It is specified that 4 mm<d1, to avoid that a distance between the outer edge of the cover plate 44 and the outer peripheral wall of the electrode core 500 is excessively small, and avoid that a diameter of the cover plate 44 is excessively large, thereby ensuring that the separator 45 can separate the cover plate 44 from the electrode core 500, and ensuring an insulation capability of the separator 45 for the cover plate 44 and the first current collector plate 200. It is specified that d1<R, so that the cover plate 44 can be arranged at a proper position at an end of the electrode core 500, and the cover plate 44 can protect the electrode core 500, the first current collector plate 200, and the separator 45. In addition, it is convenient to weld the cover plate 44 to an end portion of the housing 600 to seal the housing 600, and protect the electrode core 500 in the housing 600.

Specifically, when the cover plate 44 is arranged at an end portion of the electrode core 500, radial spacings between outer edges at different positions of the cover plate 44 and the outer peripheral wall of the electrode core 500 may be different, so that a minimum value of the radial spacing between the outer edge of the cover plate 44 and the outer peripheral wall of the electrode core 500 is made greater than 4 mm, to avoid that a distance between the outer edge of the cover plate 44 and the outer peripheral wall of the electrode core 500 is excessively small, and avoid that a diameter of the cover plate 44 is excessively large, thereby ensuring that the separator 45 can separate the cover plate 44 from the electrode core 500, and ensuring an insulation capability of the separator 45 for the cover plate 44 and the first current collector plate 200.

In some embodiments, the cover plate 44 is formed into a disc shape, and the cover plate 44 is arranged coaxially with the electrode core 500. In this case, radial spacings between outer edges at different positions of the cover plate 44 and the outer peripheral wall of the electrode core 500 are equal, and the radial spacing between the cover plate 44 and the outer peripheral wall of the electrode core 500 is d1.

In some embodiments of this application, as shown in FIG. 13 to FIG. 16, a second tab 502 is arranged at the other end of the electrode core 500 in the first direction, and the first tab 501 and the second tab 502 are arranged on two ends of the electrode core 500 in the first direction. An annular welding region 5141 is provided on a second end face 514 of the second tab 502. The heat shrink insulating film 30 covers a part of the second end face 514, and the annular welding region 5141 is exposed, so that the annular welding region 5141 can be avoided when the part of the second end face 514 is protected, and the second end face 514 can be welded to another component through the annular welding region 5141.

In some optional embodiments of this application, as shown in FIG. 13 to FIG. 16, the electrode core 500 is formed into a cylindrical shape. A minimum value of a radial spacing between an outer edge of the annular welding region 5141 and the outer peripheral wall of the electrode core 500 is d2, a radius of the electrode core 500 is R, and a value range of d2 is 4 mm≤d2<R. In this way, a size of the annular welding region 5141 can be controlled, facilitating subsequent welding between another component and the annular welding region 5141, and facilitating a welding connection between the electrode core 500 and another component.

Specifically, radial spacings between outer edges at different positions of the annular welding region 5141 and the outer peripheral wall of the electrode core 500 may be different, so that a minimum value of the radial spacing between the outer edge of the annular welding region 5141 and the outer peripheral wall of the electrode core 500 is made greater than 4 mm, to fully control a size of the annular welding region 5141, thereby avoiding that an excessively large annular welding region 5141 affects a coating effect of the heat shrink insulating film 30 for the electrode core 500.

In some embodiments, the annular welding region 5141 is formed into a ring shape, and the annular welding region 5141 is arranged coaxially with the electrode core 500. In this case, radial spacings between annular welding regions 5141 at different positions and the outer peripheral wall of the electrode core 500 are the same, and a radial spacing between the annular welding region 5141 and the outer peripheral wall of the electrode core 500 is d2.

In some embodiments, as shown in FIG. 13 to FIG. 16, a minimum value of a radial spacing between an outer edge of the cover plate 44 and an outer peripheral wall of the electrode core 500 is d1, a spacing between a first end face 513 of the electrode core 500 on which the first tab 501 is arranged and a surface of the separator 45 away from the first current collector plate 200 is w, and a radial length of a region of the separator 45 covered by the heat shrink insulating film 30 is x1. An annular welding region 5141 is provided on a second end face 514 of the second tab 502. A minimum value of a radial spacing between the annular welding region 5141 and the outer peripheral wall of the electrode core 500 is d2. A length of the heat shrink insulating film 30 is h1, and a length of the electrode core 500 is h2 (that is, a height of the electrode core in the first direction). A value range of h1 is w+x1<h1≤h2+d1+d2. In other words, the length h1 of the heat shrink insulating film 30 is greater than a sum of the spacing w between the first end face 513 of the electrode core 500 on which the first tab 501 is arranged and the surface of the separator 45 away from the first current collector plate 200 and the radial length x1 of the region of the separator 45 covered by the heat shrink insulating film 30, so that the heat shrink insulating film 30 can well isolate the first end face 513 of the electrode core 500 on which the first tab 501 is arranged from the housing 600, thereby avoiding contact between the first tab 501 and the housing 600. The length h1 of the heat shrink insulating film 30 is less than or equal to a sum of the length h2 of the electrode core 500, the minimum value d1 of the radial spacing between the outer edge of the cover plate 44 and the outer peripheral wall of the electrode core 500, and the minimum value d2 of the radial spacing between the annular welding region 5141 and the outer peripheral wall of the electrode core 500, to avoid an excessively long length of the heat shrink insulating film 30. In this way, the cover plate 44 and the annular welding region 5141 can be exposed to the heat shrink insulating film 30, to avoid affecting a welding fit between the cover plate 44 and the annular welding region 5141 and another component. In addition, structural strength of the heat shrink insulating film 30 is ensured when the electrode core 500 is protected by using the heat shrink insulating film 30, thereby avoiding that the heat shrink insulating film 30 is prone to deformation.

Specifically, when the heat shrink insulating film 30 is heated to a glass transition temperature of the heat shrink insulating film 30 to stretch the heat shrink insulating film 30, a stretching length may be selected based on the value range of h1, to satisfy an actual assembly requirement. In addition, the length of the heat shrink insulating film 30 can be adjusted in a relatively large range, thereby helping reduce costs and improve coating efficiency of the heat shrink insulating film 30.

In some embodiments, a radial length of a region of the separator 45 covered by the heat shrink insulating film 30 is x1, a minimum value of a radial spacing between an outer edge of the cover plate 44 and an outer peripheral wall of the electrode core 500 is d1, and 0<x1<d1, to avoid that the heat shrink insulating film 30 is in contact with the cover plate 44 or covers the cover plate 44. Specifically, a periphery of the cover plate 44 is welded to the housing 600 of the battery cell 1000, so that a distance between the heat shrink insulating film 30 and the cover plate 44 is maintained, to avoid that the heat shrink insulating film 30 affects welding between the cover plate 44 and the housing 600 of the battery cell 1000.

In some embodiments, a radial length of a region of the second end face 514 covered by the heat shrink insulating film 30 is x2, a minimum value of a radial spacing between an outer edge of the annular welding region 5141 and an outer peripheral wall of the electrode core 500 is d2, and x2<d2, to avoid that the heat shrink insulating film 30 is in contact with the annular welding region 5141 or covers the annular welding region 5141. Specifically, the annular welding region 5141 is welded to the housing 600 or a bottom cover of the battery cell 1000, so that a distance between the heat shrink insulating film 30 and the annular welding region 5141 is maintained, to avoid that the heat shrink insulating film 30 affects welding between the annular welding region 5141 and the housing 600 or the bottom cover of the battery cell 1000.

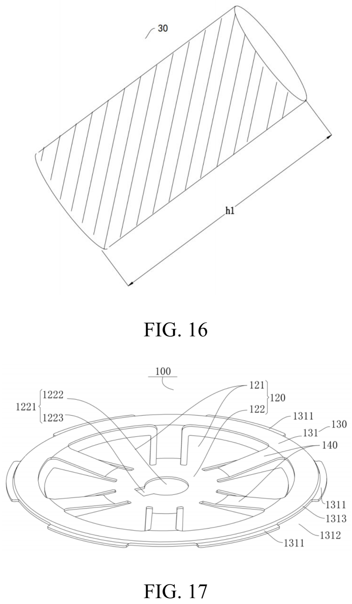

In some optional embodiments of this application, as shown in FIG. 17 to FIG. 27, a second current collector plate 100 according to an embodiment of this application includes a first connection region 120 and a second connection region 130.

In some embodiments, as shown in FIG. 17, the first connection region 120 includes a middle portion 122 and a plurality of first connection portions 121, the plurality of first connection portions 121 are sequentially arranged in a circumferential direction of the middle portion 122, the plurality of first connection portions 121 are separately connected to the middle portion 122, and the plurality of first connection portions 121 are electrically connected to the electrode core 500. Herein, the plurality of first connection portions 121 are all electrically connected to the electrode core 500, to increase a connection area between the first connection region 120 and the electrode core 500, that is, to increase a connection area between the second current collector plate 100 and the electrode core 500, thereby helping improve current flow capability of the second current collector plate 100. The second connection region 130 includes a second connection portion 131.

In the descriptions of this application, unless otherwise stated, "a plurality of" means two or more.

It should be noted that the plurality of first connection portions 121 are sequentially arranged in the circumferential direction of the middle portion 122. On the one hand, it is ensured that all the plurality of first connection portions 121 can be connected to the middle portion 122. In this case, the middle portion 122 and the plurality of first connection portions 121 mutually support, to ensure structural stability of the first connection region 120, thereby facilitating connection to the electrode core 500 by using the first connection portion 121, and reducing connection difficulty. On the other hand, circumferential space of the middle portion 122 can be further properly used, to increase an area of the first connection portion 121, and further increase a connection area between the first connection portion 121 and the electrode core 500, thereby improving a current flow capability of the second current collector plate 100.

As shown in FIG. 17 to FIG. 27, the second connection portion 131 is located on a side of the first connection region 120, the second connection portion 131 is electrically connected to the middle portion 122, a height difference exists between the first connection region 120 and the second connection portion 131, the first connection region 120 and the second connection portion 131 are relatively movable, and the second connection portion 131 is electrically connected to the bottom cover 300. It will be understood herein that the second connection portion 131 is electrically connected to both the middle portion 122 and the bottom cover 300, to implement an electrical connection between the second connection portion 131 and the first connection portion 121, thereby helping implement an electrical connection between the electrode core 500 and the bottom cover 300 by using the second current collector plate 100.

In some embodiments, the second connection portion 131 is arranged on a side of the first connection region 120, so that an area of the second connection portion 131 can be increased, and a connection area between the second connection portion 131 and the bottom cover 300 can be further increased, thereby implementing a stable connection between the second current collector plate 100 and the bottom cover 300.

In addition, the second connection portion 131 is arranged on a side of the first connection region 120, so that the first connection region 120 can be prevented from occupying space in a circumferential direction of the second connection portion 131, and the second connection portion 131 can be prevented from occupying space in a circumferential direction of the first connection region 120. In this way, there is sufficient space for arranging the first connection region 120 and the second connection portion 131, to help increase areas of the first connection portion 121 and the second connection portion 131, thereby increasing a connection area between the first connection portion 121 and the electrode core 500, and increasing a connection area between the second connection portion 131 and the bottom cover 300.

It should be noted that the first connection region 120 and the second connection portion 131 in this application have a height difference and are relatively movable. The height difference herein will be understood as follows: In a height direction of the battery cell 1000, the first connection region 120 and the second connection portion 131 are spaced from each other, that is, arrangement heights of the first connection region 120 and the second connection portion 131 in the battery cell 1000 are different. "Relatively movable" will be understood as follows: The first connection region 120 is movable relative to the second connection portion 131, or the second connection portion 131 is movable relative to the first connection region 120, or the first connection region 120 and the second connection portion 131 are movable relative to each other. Through such a setting, space occupied by the second current collector plate 100 in the height direction can be reduced. In this way, when the second current collector plate 100 is used to connect the electrode core 500 and the bottom cover 300, a height of reserved space between the electrode core 500 and the bottom cover 300 can be reduced, so that there is enough space for arranging the electrode core 500. In other words, a height of the electrode core 500 may be increased, thereby improving capacity of the electrode core 500 and further improving capacity of the battery cell 1000. It should be noted that as a conductive element, the second current collector plate 100 is generally made of a metal conductive material such as copper, aluminum, or iron, which naturally has characteristics such as elasticity and deformability. In this case, the height difference set between the first connection region 120 and the second connection portion 131 enables the positions of the first connection region 120 and the second connection portion 131 to change under the action of an external force, that is, when the bottom cover 300 is mounted, the bottom cover 300 compacts the second connection portion 131 of the second current collector plate 100, so that the first connection region 120 and the second connection portion 131 are movable relative to each other.

In addition, the electrode core 500 is directly connected to the bottom cover 300 through cooperation between the first connection region 120 and the second connection portion 131 that have the height difference. In a connection process, bending of the second current collector plate 100 can be avoided, thereby reducing a bending process and improving assembly efficiency. In addition, stress concentration caused by bending of the second current collector plate 100 can be avoided, to avoid breaking of the second current collector plate 100 and prolong service life of the second current collector plate 100.

Because the first connection region 120 and the second connection portion 131 are arranged to be movable relative to each other, in the process in which the second current collector plate 100 is connected to the bottom cover 300, a welding gap between the second current collector plate 100 and the bottom cover 300 that is caused by changing positions of the bottom cover 300 and the electrode core 500 can be avoided, and a welding gap between the second current collector plate 100 and the bottom cover 300 that is caused by greatly varying flatness of a plurality of welding positions on the bottom cover 300 or greatly varying flatness of the second connection portion 131 can be further avoided, thereby reducing a possibility of poor welding between the second current collector plate 100 and the bottom cover 300, and ensuring a yield of the battery cell 1000.

Specifically, when flatness of a connection surface of the bottom cover 300 that fits with the second connection portion 131 is large, relative positions of the second connection portion 131 and the first connection portion 121 can be adaptively adjusted by the second connection portion 131 based on the flatness of the bottom cover 300, to further improve connection strength between the second connection portion 131 and the bottom cover 300, and ensure conformity of opposite contact surfaces of the second connection portion 131 and the bottom cover 300.

This will also be understood as that in this application, when the second current collector plate 100 is connected to the bottom cover 300, the second current collector plate 100 may absorb a manufacturing error of the bottom cover 300 by using the second connection portion 131, thereby subsequently improving manufacturing precision of the battery cell 1000.

In other words, in this application, the first connection region 120 and the second connection portion 131 are arranged to be relatively movable. In this way, in a process of connecting the second current collector plate 100, a gap between the second current collector plate 100 and the bottom cover 300 can be effectively avoided, to eliminate impacts caused by assembly error or manufacturing error, further improve connection strength between the second current collector plate 100 and the bottom cover 300, and ensure conformity of opposite contact surfaces of the second current collector plate 100 and the bottom cover 300, so as to reduce a possibility of poor welding, and subsequently ensure a yield of the battery cell 1000.

In a specific example, because the first connection region 120 and the second connection portion 131 have a height difference and are movable relative to each other, when the bottom cover 300 is connected to the electrode core 500 by using the second current collector plate 100, the first connection region 120 may be first connected to the electrode core 500. Because there is a height difference between the first connection region 120 and the second connection portion 131 in the height direction of the battery cell 1000, after the first connection region 120 is connected to the electrode core 500, in the process of mounting the bottom cover 300, the second connection portion 131 may be arranged close to the bottom cover 300, to reduce connection difficulty between the second connection portion 131 and the bottom cover 300. In addition, because the first connection region 120 and the second connection portion 131 are movable relative to each other, when the second connection portion 131 is connected to the bottom cover 300 in this case, it can be ensured that the position of the second connection portion 131 can change based on a position, a shape, a surface structure, and the like of the bottom cover 300, so that the second connection portion 131 can be effectively connected to the bottom cover 300, to ensure connection strength and connection area, thereby connecting the bottom cover 300 to the electrode core 500 by using the second current collector plate 100, reducing the possibility of poor welding between the second current collector plate 100 and the bottom cover 300, and ensuring the yield of the battery cell 1000.

The connection between the first connection region 120 and the electrode core 500 and the connection between the second connection portion 131 and the bottom cover 300 both may be implemented through welding, bonding, or the like.

It will be understood from the foregoing structure that in the second current collector plate 100 in this embodiment of this application, the second current collector plate 100 is arranged to include the first connection region 120 and the second connection portion 131, so that the first connection region 120 and the second connection portion 131 cooperate with each other to electrically connect the electrode core 500 to the bottom cover 300.

The first connection region 120 is arranged to include the middle portion 122 and the plurality of first connection portions 121, to support the plurality of first connection portions 121 by using the middle portion 122, and improve position stability of the plurality of first connection portions 121. In this way, cooperation between the plurality of first connection portions 121 can facilitate an electrical connection between the first connection region 120 and the electrode core 500. In addition, when the first connection region 120 is connected to the electrode core 500, a connection area between the first connection region 120 and the electrode core 500 can be increased, that is, a connection area between the second current collector plate 100 and the electrode core 500 is increased. On the one hand, connection strength between the second current collector plate 100 and the electrode core 500 is improved, so that positions of the second current collector plate 100 and the electrode core 500 are relatively stable, to improve position stability of the second current collector plate 100. On the other hand, it can be further ensured that the second current collector plate 100 has a relatively large current flow area, to avoid that a current flow of the electrode core 500 is insufficient due to a small current flow area of the second current collector plate 100, thereby avoiding a problem of severe heat generation of the electrode core 500, to prolong service life of the electrode core 500 and improve use safety of the electrode core 500.

The second connection portion 131 is arranged on a side of the first connection region 120, to ensure an area of the second connection portion 131. In this way, when the second connection portion 131 is connected to the bottom cover 300, a connection area between the second connection portion 131 and the bottom cover 300 may be increased, that is, a connection area between the second current collector plate 100 and the bottom cover 300 is increased, so that connection strength between the second current collector plate 100 and the bottom cover 300 is improved, and positions of the second current collector plate 100 and the bottom cover 300 are relatively stable, thereby further improving position stability of the second current collector plate 100.

That is, the second current collector plate 100 in this application can be stably connected to the electrode core 500 and the bottom cover 300.

In addition, in this application, the first connection region 120 and the second connection portion 131 are arranged to have a height difference. In this way, the second current collector plate 100 may have a specific height, to implement an electrical connection between the electrode core 500 and the bottom cover 300 by using the second current collector plate 100, and avoid a height increase caused by bending the second current collector plate 100, thereby reducing a bending process, improving connection efficiency between the electrode core 500 and the bottom cover 300, avoiding damage to the second current collector plate 100, avoiding concentrated stress caused by bending the second current collector plate 100, prolonging service life of the second current collector plate 100, and improving structural strength of the second current collector plate 100.

In addition, in this application, the first connection region 120 and the second connection portion 131 are further arranged to be relatively movable, to reduce space occupied by the second current collector plate 100 in the height direction, thereby reducing a height of reserved space between the electrode core 500 and the bottom cover 300. In this way, a height of the electrode core 500 may be correspondingly increased, thereby improving a capacity of the electrode core 500, that is, improving a capacity of the battery cell 1000. That is, in this application, the relative positions of the first connection region 120 and the second connection portion 131 are inventively set, to electrically connect the electrode core 500 to the bottom cover 300 by using the second current collector plate 100, without bending the structure of the second current collector plate 100, thereby improving connection efficiency, preventing the second current collector plate 100 from breaking, prolonging the service life of the second current collector plate 100, improving structural strength of the second current collector plate 100, reducing manufacturing difficulty of the second current collector plate 100, reducing the height of the second current collector plate 100, and increasing the capacity of the electrode core 500.

In addition, the first connection region 120 and the second connection portion 131 are arranged to be relatively movable, so that a height difference between the first connection region 120 and the second connection portion 131 can be adjusted, that is, the height of the second current collector plate 100 is adjusted, to apply the second current collector plate 100 in this application to battery cells 1000 of different sizes, so as to expand an applicable range of the second current collector plate 100. In addition, because the height of the second current collector plate 100 is adjustable, the height of the second current collector plate 100 can be adjusted based on a position and a structure of the bottom cover 300, to avoid a gap between the second current collector plate 100 and the bottom cover 300, thereby eliminating impact caused by an assembly error or a manufacturing error, improving connection strength between the second current collector plate 100 and the bottom cover 300, and ensuring conformity of opposite contact surfaces of the second current collector plate 100 and the bottom cover 300, to reduce a possibility of poor welding, and subsequently ensure a yield of the battery cell 1000.

In conclusion, the second current collector plate 100 in this application has small occupation space, a stable structure, high structural strength, a long service life, low manufacturing difficulty, a wide application range, and a strong current flow capability.

It will be understood that, compared with the related art, the second current collector plate 100 in this application occupies small space and is not easy to break. In addition to implementing an electrical connection between the electrode core 500 and the bottom cover 300, a capacity of the electrode core 500 may be further increased, and a current flow area is large enough to protect the electrode core 500. In addition, a possibility of poor welding between the second current collector plate 100 and the bottom cover 300 may be reduced.

Optionally, a material of the second current collector plate 100 may be an aluminum alloy, pure copper, nickel-plated copper, or the like, so that the second current collector plate 100 has a conductive function, so that the electrode core 500 is electrically connected to the bottom cover 300 by using the second current collector plate 100.

In some examples, the electrode core 500 includes a tab, and the plurality of first connection portions 121 are electrically connected to the tab, to electrically connect the second current collector plate 100 to the electrode core 500.

It should be noted that the tab herein may be of a full-tab structure that is knurled or flattened, or a multi-tab structure processed through laser ablation or die-cutting.

In some embodiments, when the material of the second current collector plate 100 is the aluminum alloy, the second current collector plate 100 is mainly in fit connection with a positive tab of the electrode core 500. When the material of the second current collector plate 100 is pure copper or nickel-plated copper, the second current collector plate 100 is mainly in fit connection with a negative tab of the electrode core 500. That is, a person skilled in the art may select the material of the second current collector plate 100 based on an application environment of the second current collector plate 100. This is not specifically limited in this application.

In the descriptions of this application, features defined by "first" and "second" may explicitly or implicitly include one or more of such features, and are used to differentially describe the features, instead of indicating a sequence or importance.

In some examples, the second connection portion 131 extends in a circumferential direction of the first connection region 120. An area of the second connection portion 131 may be maximized, and then a connection area between the second connection portion 131 and the bottom cover 300 is increased, thereby implementing a stable connection between the second current collector plate 100 and the bottom cover 300.

In some embodiments of this application, the second current collector plate 100 is an integrally formed member. That is, the entire second current collector plate 100 is manufactured by using a unibody process, thereby reducing manufacturing difficulty of the second current collector plate 100, improving manufacturing efficiency, ensuring connection strength and connection quality between the middle portion 122, the first connection portion 121, and the second connection portion 131, making the structure of the second current collector plate 100 stable, and electrically connecting the electrode core 500 to the bottom cover 300 by using the second current collector plate 100.

It should be noted that in a process of producing the second current collector plate 100, the second current collector plate 100 may be cut, to form structures such as the middle portion 122, the first connection portion 121, and the second connection portion 131 on the second current collector plate 100.

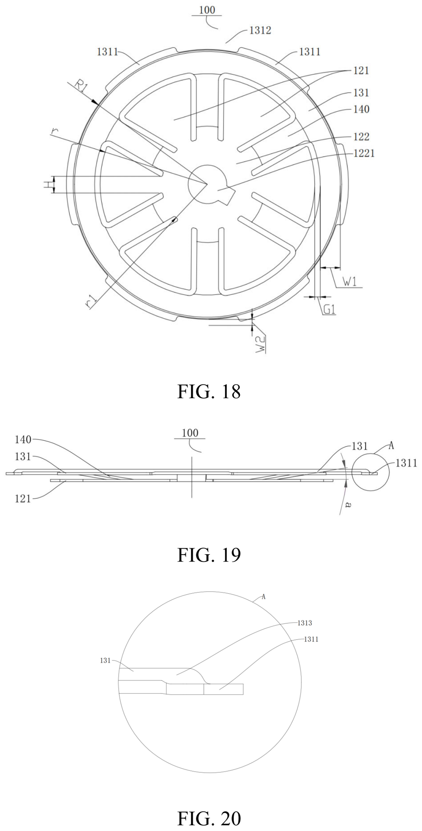

In some embodiments of this application, as shown in FIG. 17 and FIG. 18, the second connection portion 131 is formed into a ring structure. In a radial direction of the second connection portion 131, the second connection portion 131 is located on a radial outer side of the first connection region 120. In some embodiments, the ring structure may facilitate setting the second connection portion 131 to extend in a circumferential direction of the first connection region 120, to ensure an area of the second connection portion 131. In addition, the ring structure may further increase structural strength of the second connection portion 131 and prolong service life of the second connection portion 131.

In addition, the second connection portion 131 is formed into a ring structure, so that the second connection portion 131 forms an integral part, thereby facilitating processing of the second connection portion 131, and reducing manufacturing difficulty of the second connection portion 131.

In addition, the second connection portion 131 is arranged to form a ring structure. In a process in which the second connection portion 131 is connected to the bottom cover 300, an entire ring of the second connection portion 131 can be connected to the bottom cover 300, and a separate correction mechanism is not required, to reduce difficulty in connecting the second connection portion 131 to the bottom cover 300.

That is, in this application, the second connection portion 131 is arranged as the annular structure, to enable the second connection portion 131 to have a large connection area, thereby improving structural strength of the second connection portion 131, prolonging the service life of the second connection portion 131, reducing manufacturing difficulty of the second connection portion 131, and reducing connection difficulty between the second connection portion 131 and the bottom cover 300.

In a specific example, the second connection portion 131 is formed into an annular plate, and the annular plate is made of aluminum, copper, or another conductive material, to electrically connect the second connection portion 131 to the bottom cover 300.

In addition, the second connection portion 131 is arranged on a radial outer side of the first connection region 120, so that the second connection portion 131 and the first connection region 120 can be spaced from each other in a radial direction of the second connection portion 131, and the second connection portion 131 and the first connection region 120 can be properly arranged. It is ensured that the second connection portion 131 can be connected to the bottom cover 300, and the first connection region 120 can be connected to the electrode core 500, and a connection area between the second connection portion 131 and the first connection region 120 can be further ensured, thereby ensuring connection areas between the second current collector plate 100 and the electrode core 500 and the bottom cover 300, and ensuring connection strength.

In some examples, an inner diameter of the second connection portion 131 is greater than an outer diameter of the first connection region 120, so that the second connection portion 131 is arranged on a radial outer side of the first connection region 120, thereby increasing areas of the first connection portion 121 and the second connection portion 131.

Optionally, as shown in FIG. 17 to FIG. 19, an inner wall of the second connection portion 131 is connected to the middle portion 122 through a connection member 140. The inner wall of the second connection portion 131 described herein will be understood as a peripheral wall of the second connection portion 131 that is close to the first connection region 120, to implement a connection between the second connection portion 131 and the middle portion 122, that is, to implement a fixed connection between the second connection portion 131 and the first connection region 120. In this way, after the second connection portion 131 is connected to the bottom cover 300 and the first connection region 120 is connected to the electrode core 500, an electrical connection between the bottom cover 300 and the electrode core 500 can be implemented.

It should be noted that the connection member 140 is arranged to fasten the second connection portion 131 to the first connection region 120, and further reduce connection difficulty between the second connection portion 131 and the first connection region 120, thereby improving connection efficiency.

In a specific example, when the second current collector plate 100 is produced, a structure between the second connection portion 131 and the middle portion 122 is cut to form the connection member 140, and then the connection member 140 may be bent, thereby reducing molding difficulty of the second current collector plate 100, and improving connection strength between the connection member 140 and both of the second connection portion 131 and the middle portion 122.

In some embodiments of this application, the first connection portion 121 has a first surface connected to the electrode core 500, the second connection portion 131 has a second surface connected to the bottom cover 300, and the first surface is parallel to the second surface. Herein, it will be understood that the first connection portion 121 has the first surface, and the first connection portion 121 is connected to the electrode core 500 by using the first surface, thereby electrically connecting the first connection portion 121 to the electrode core 500; and correspondingly, the second connection portion 131 has the second surface, and the second connection portion 131 is connected to the bottom cover 300 by using the second surface, thereby electrically connecting the second connection portion 131 to the bottom cover 300. Therefore, the electrode core 500 is electrically connected to the bottom cover 300 by using the second current collector plate 100.

It should be noted that because a side surface of the electrode core 500 that faces the bottom cover 300 is usually parallel to a side surface of the bottom cover 300 that faces the electrode core 500 in a process of assembling the battery cell 1000, in this application, the first surface is arranged parallel to the second surface to ensure that the second surface can be effectively connected to the bottom cover 300 after the first surface is connected to the electrode core 500, thereby ensuring the connection area between the first connection region 120 and the electrode core 500, ensuring the connection area between the second connection portion 131 and the bottom cover 300, electrically connecting the electrode core 500 to the bottom cover 300 effectively, and reducing connection difficulty.

In some examples, a surface of the first connection portion 121 that faces the electrode core 500 is defined as the first surface, to facilitate mutual connection between the first surface and the electrode core 500; and correspondingly, a surface of the second connection portion 131 that faces the bottom cover 300 is defined as the second surface, to facilitate mutual connection between the second surface and the bottom cover 300.

In some embodiments of this application, as shown in FIG. 17 to FIG. 27, the second current collector plate 100 further includes a connection member 140, the connection member 140 is connected between the second connection portion 131 and the middle portion 122, and the connection member 140 obliquely extends relative to the first connection portion 121, so that there is a height difference between the first connection region 120 and the second connection portion 131. That is, when the connection member 140 that obliquely extends is arranged to connect the second connection portion 131 and the middle portion 122, it can be ensured that there is a height difference between the first connection region 120 and the second connection portion 131. This reduces molding difficulty of the second current collector plate 100, and helps implement an electrical connection between the electrode core 500 and the bottom cover 300 by using the second current collector plate 100.

Optionally, the connection member 140 is a plate body. When the plate body obliquely extends relative to the first connection portion 121, it can be ensured that the connection member 140 can move and/or deform relative to the first connection portion 121 under the action of an external force, so that relative movement between the first connection region 120 and the second connection portion 131 is ensured, thereby changing the height of the second current collector plate 100, and expanding the application range of the second current collector plate 100.

The movement and/or deformation herein will be understood as that the connection member 140 is constructed as being movable relative to the first connection portion 121, the connection member 140 is constructed as being deformable relative to the first connection portion 121, or the connection member 140 is constructed as being movable relative to the first connection portion 121 and being deformable relative to the first connection portion 121, to change a height difference between the first connection portion 121 and the second connection portion 131 by using the connection member 140 and enable the first connection region 120 and the second connection portion 131 to be movable relative to each other, thereby adjusting the position of the second connection portion 131 relative to the first connection portion 121, that is, adjusting positions of the second connection portion 131 and the bottom cover 300 relative to each other. It should be noted that the second current collector plate 100, as the conductive element, is generally made of the metal conductive material such as copper, aluminum, or iron, which naturally has the characteristics such as elasticity and deformability. In this case, the connection member 140 is constructed as an obliquely extending plate body, to implement movement and/or deformation, and implement an adjustable position of the second connection portion 131.

In a specific example, the connection member 140 is formed into a rectangular plate, to fasten the second connection portion 131 to the middle portion 122 by using the connection member 140, and ensure that the second connection portion 131 can be located on the radial outer side of the first connection region 120 after connection completes and ensure that the second connection portion 131 can drive the connection member 140 to act under the action of an external force.

Certainly, in some other examples, the connection member 140 may alternatively be formed into a square plate, a fan-shaped plate, or the like. This is not specifically limited in this application.

In a specific example, because the connection member 140 can move and/or deform relative to the first connection portion 121, when the second current collector plate 100 is separately connected to the electrode core 500 and the bottom cover 300, if the bottom cover 300 has the manufacturing error, a welding position protruding toward the electrode core 500 generates force driving the corresponding second connection portion 131 to move toward the electrode core 500. Because the second connection portion 131 is connected to the first connection portion 121 by using the obliquely extending plate body, and the obliquely extending plate body easily changes in position or deforms under the action of an external force, when the bottom cover 300 drives the corresponding second connection portion 131 to move toward the electrode core 500, the second connection portion 131 can drive the obliquely extending plate body to act, to ensure that the second connection portion 131 can effectively move, that is, ensure that the position of the second connection portion 131 can change based on the position of the bottom cover 300, so that the second connection portion 131 can be connected to the bottom cover 300, and a fitting gap between the second connection portion 131 and the bottom cover 300 can be avoided, thereby ensuring conformity of opposite contact surfaces of the second current collector plate 100 and the bottom cover 300, and reducing the possibility of poor welding.

It should be noted that the second connection portion 131 can drive the obliquely extending plate body to act. A specific action of the plate body may be as follows: The second connection portion 131 drives one end of the plate body connected thereto to move toward the electrode core 500, and in a process in which the end of the plate body moves, the other end of the plate body is fastened relative to the electrode core 500, so that the entire plate body rotates toward the electrode core 500, thereby implementing movement of the connection member 140 relative to the first connection portion 121; or the second connection portion 131 drives one end of the plate body connected thereto to be bent toward the electrode core 500, and in a bending process, the other end of the plate body may be fastened relative to the electrode core 500, thereby implementing deformation of the connection member 140 relative to the first connection portion 121.

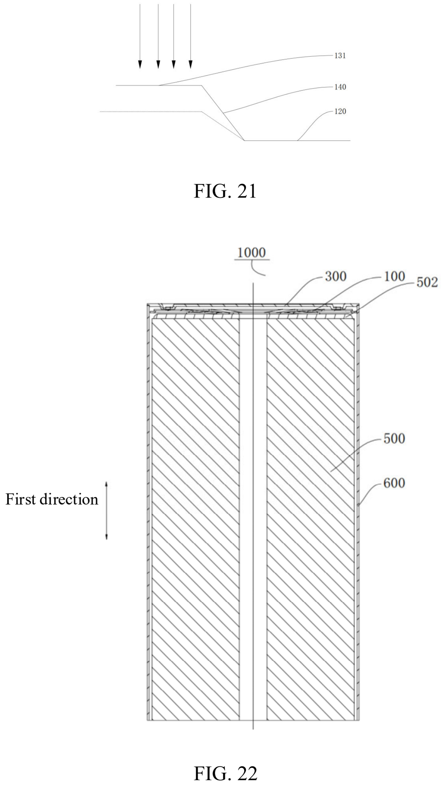

FIG. 21 is a schematic diagram of the second connection portion 131 before and after movement. Specifically, a solid line part is a position of the second connection portion 131 before movement, and a dashed line part is a position of the second connection portion 131 after movement.

Optionally, the connection member 140 is made of a conductive material such as aluminum or copper. When the first connection region 120 is connected to the second connection portion 131 by using the connection member 140, it is ensured that, under the action of an external force, the second connection portion 131 can effectively drive the obliquely extending connection member 140 to act, that is, the connection member 140 can effectively move and/or deform relative to the first connection region 120, to change the height difference between the first connection region 120 and the second connection portion 131.

It should be noted that a specific length, a specific width, and a specific thickness of the connection member 140 are not limited in this application, provided that it is ensured that the connection member 140 can effectively connect the first connection region 120 to the second connection portion 131, and it is ensured that, under the action of an external force, the second connection portion 131 can effectively drive the obliquely extending connection member 140 to act.

Certainly, in some other examples, the connection member 140 may alternatively be a buffer spring. One end of the buffer spring is connected to the second connection portion 131, and the other end of the buffer spring is connected to the first connection region 120. In this way, the connection member 140 may be constructed as being movable relative to the first connection region 120 and/or being deformable relative to the first connection region 120, to change the height difference between the first connection region 120 and the second connection portion 131.

In a specific example, when the connection member 140 is a buffer spring, and when the second current collector plate 100 is separately connected to the electrode core 500 and the bottom cover 300, if flatness of the plurality of welding positions on the bottom cover 300 greatly varies, the welding position protruding toward the electrode core 500 generates force driving the corresponding second connection portion 131 to move toward the electrode core 500, and the second connection portion 131 compresses the buffer spring to deform the buffer spring, thereby changing the height difference between the first connection region 120 and the second connection portion 131.

In some examples, as shown in FIG. 19, a value range of an oblique angle a between the connection member 140 and the first plane is 5°≤a<90°, and the first plane is perpendicular to a thickness direction of the second current collector plate 100. The thickness direction of the second current collector plate 100 described herein will also be understood as a height direction of the battery cell 1000. Therefore, the first plane will also be understood as being perpendicular to the height direction of the battery cell 1000.

It should be noted that when the oblique angle a between the connection member 140 and the first plane is less than 5°, an overall height of the second current collector plate 100 is low, resulting in a failure that the electrode core 500 cannot be electrically connected to the bottom cover 300 effectively by using the second current collector plate 100. When the oblique angle a between the connection member 140 and the first plane is greater than or equal to 90°, on the one hand, an overall height of the second current collector plate 100 is high, the second current collector plate 100 occupies large space, and the second current collector plate 100 occupies arrangement space of the electrode core 500, resulting in a decrease in the capacity of the electrode core 500; and on the other hand, the connection member 140 cannot effectively drive the second connection portion 131 to move, that is, the connection member 140 cannot effectively change the height difference between the first connection region 120 and the second connection portion 131, and the poor welding problem caused by the manufacturing error cannot be resolved.

Therefore, in this application, the range of the oblique angle a between the connection member 140 and the first plane is set to 5°≤a<90°. In this way, it is ensured that the electrode core 500 can be electrically connected to the bottom cover 300 effectively by using the second current collector plate 100, the height difference between the first connection region 120 and the second connection portion 131 can be further effectively changed by using the connection member 140, and the overall height of the second current collector plate 100 can be further prevented from being excessively high to ensure the capacity of the electrode core 500.

In a specific example, the oblique angle a between the connection member 140 and the first plane may be 5°, 10°, 20°, 30°, 40°, 50°, 60°, 70°, 80°, or the like. Optionally, a height range between the first connection region 120 and the second connection portion 131 is 1 mm to 10 mm. In some embodiments, specific height values of the first connection region 120 and the second connection portion 131 may be adjusted based on the oblique angle a between the connection member 140 and the first plane. The height range between the first connection region 120 and the second connection portion 131 is set to 1 mm to 10 mm, to ensure that the oblique angle a between the connection member 140 and the first plane can be in a range of 5° to 90°. Therefore, it is ensured that the height difference between the first connection region 120 and the second connection portion 131 can be effectively changed by using the connection member 140, and the overall height of the second current collector plate 100 can be further prevented from being excessively high to ensure the capacity of the electrode core 500.

In a specific example, a height between the first connection region 120 and the second connection portion 131 may be 1 mm, 3 mm, 5 mm, 8 mm, 10 mm, or the like.

It should be noted that the height between the first connection region 120 and the second connection portion 131 will be understood as, in the height direction of the battery cell 1000, a distance between surfaces of the second connection portion 131 and the first connection portion 121 that face each other.

Optionally, as shown in FIG. 17 to FIG. 23, on the first plane, an orthographic projection of an outer peripheral wall of the second current collector plate 100 is located on a circle, and the first plane is perpendicular to a thickness direction of the second current collector plate 100. That is, an orthographic projection of the outer peripheral wall of the second current collector plate 100 on a plane perpendicular to the thickness direction of the second current collector plate 100 is located on a circle, so that a shape of the second current collector plate 100 is similar to a circular shape. The circular shape can make the shape of the second current collector plate 100 adapt to shapes of the electrode core 500 and the bottom cover 300, to reduce difficulty in connecting the second current collector plate 100 to the electrode core 500 and the bottom cover 300, and increase a connection area, so as to ensure connection quality.

In a specific example, with reference to FIG. 17 to FIG. 23, the middle portion 122 forms a circular support plate, and the plurality of first connection portions 121 are all formed into sector connection plates. The plurality of first connection portions 121 are connected to a radial outer side of the middle portion 122 and are spaced from each other in a circumferential direction of the middle portion 122. In this way, after the plurality of first connection portions 121 are connected to the middle portion 122, the first connection region 120 may be formed into a circular shape, and the second connection portion 131 is formed into a ring structure and is arranged on a radial outer side of the first connection region 120, so that the shape of the second current collector plate 100 is similar to a circular shape.

In some embodiments, with reference to FIG. 17 to FIG. 23, the first connection region 120 includes the middle portion 122 and the plurality of first connection portions 121. The middle portion 122 is formed into a circular aluminum plate or circular copper plate. The first connection portion 121 is formed into a fan-shaped aluminum plate or fan-shaped copper plate. The plurality of first connection portions 121 surround a periphery of the middle portion 122 and are separately connected to the middle portion 122, and the plurality of first connection portions 121 are spaced apart. A connection member 140 formed into a rectangular aluminum plate or rectangular copper plate is arranged between two adjacent first connection portions 121, and in the circumferential direction of the first connection region 120, the connection member 140 and the first connection portion 121 are spaced apart. A first end of the connection member 140 that is in the radial direction of the first connection region 120 is connected to the middle portion 122.

With reference to FIG. 17 to FIG. 23, the second connection portion 131 is formed into an annular aluminum plate or annular copper plate. The second connection portion 131 surrounds a periphery of the first connection region 120. A second end of the connection member 140 that is in the radial direction of the first connection region 120 is connected to the second connection portion 131. In addition, the connection member 140 obliquely extends relative to the first connection region 120, so that the first connection region 120 and the second connection region 130 are spaced apart in the height direction of the battery cell 1000.

In a specific example, when the second current collector plate 100 is separately connected to the electrode core 500 and the bottom cover 300, the first connection region 120 is first connected to the electrode core 500. Because there is the height difference between the first connection region 120 and the second connection portion 131 in the height direction of the battery cell 1000, the bottom cover 300 can effectively contact and fit with the second connection portion 131 in the process of mounting the bottom cover 300. In addition, in a process of connecting the bottom cover 300 to the second connection portion 131, if there is the welding position protruding toward the electrode core 500 on the bottom cover 300, the welding position drives the second connection portion 131 to move toward the electrode core 500, and the second connection portion 131 drives the second end of the connection member 140 to rotate toward the electrode core 500 around the first end or drives the second end of the connection member 140 to bend toward the electrode core 500, so that the bottom cover 300 drives the connection member 140 to move and/or deform relative to the first connection region 120, thereby changing the height of the second current collector plate 100, enabling the second current collector plate 100 to be effectively connected to the bottom cover 300, ensuring conformity of the opposite contact surfaces of the second current collector plate 100 and the bottom cover 300, and reducing the possibility of poor welding.

Optionally, as shown in FIG. 17 to FIG. 23, there are a plurality of connection members 140. In the circumferential direction of the first connection region 120, the plurality of first connection portions 121 and the plurality of connection members 140 are alternately arranged to be spaced apart. In some embodiments, a shape of the second current collector plate 100 is similar to a circular shape. Therefore, "in the circumferential direction of the first connection region 120" described herein will also be understood as that the plurality of first connection portions 121 and the plurality of connection members 140 are alternately arranged and spaced from each other in the circumferential direction of the second current collector plate 100. "Alternately arranged and spaced from each other" means that one connection member 140 is arranged between two adjacent first connection portions 121, and correspondingly, one first connection portion 121 is arranged between two adjacent connection members 140. Through the foregoing setting, space of the second current collector plate 100 can be properly used, so that the plurality of first connection portions 121 and the plurality of connection members 140 can be simultaneously arranged on the same second current collector plate 100, thereby increasing the current flow area of the second current collector plate 100 by using the plurality of first connection portions 121, and ensuring that the second connection portion 131 can be connected to the middle portion 122 by using the connection members 140.

In some examples, as shown in FIG. 17 to FIG. 23, the plurality of first connection portions 121 are spaced apart in the circumferential direction of the second current collector plate 100, and the connection member 140 is arranged between two adjacent first connection portions 121, so that the plurality of first connection portions 121 and the plurality of connection members 140 can be alternately arranged in the circumferential direction of the middle portion 122, thereby simultaneously disposing the plurality of first connection portions 121 and the plurality of connection members 140 on the second current collector plate 100.

Optionally, as shown in FIG. 17 to FIG. 23, the connection members 140 and the first connection portions 121 are spaced apart in the circumferential direction of the second current collector plate 100 to prevent the first connection portions 121 from hindering deformation and/or movement of the connection members 140, that is, ensure that the connection members 140 can effectively move and/or deform relative to the middle portion 122, to change the height difference between the first connection region 120 and the second connection portion 131, thereby eliminating poor welding impact caused by the manufacturing error.

Optionally, a value range of a circumferential distance between the first connection portion 121 and an adjacent connection member 140 is 0.5 mm to 2 mm. While ensuring that both the first connection portion 121 and the connection member 140 have a sufficient area, the connection member 140 and the first connection portion 121 may be further spaced from each other, to ensure that the connection member 140 can effectively move and/or deform relative to the middle portion 122.

In some embodiments of this application, as shown in FIG. 18, the first connection portion 121 and the inner peripheral wall of the second connection portion 131 are spaced apart to form a space gap, a value range of a radial dimension G1 of an orthographic projection of the space gap on the first plane is 0.5 mm to 2 mm, and the first plane is perpendicular to the thickness direction of the second current collector plate 100. Herein, the first connection portion 121 and the inner peripheral wall of the second connection portion 131 are spaced apart and the space gap is formed between the first connection portion 121 and the inner peripheral wall of the second connection portion 131. The radial dimension of the orthographic projection of the space gap on a plane perpendicular to the height direction of the battery cell 1000 is G1, and the value range of G1 is 0.5 mm to 2 mm. When G1 is less than 0.5 mm, a distance between the first connection portion 121 and the second connection portion 131 is small, and in this case, the first connection portion 121 and the second connection portion 131 do not have relative positions, that is, there is no effective height difference between the first connection portion 121 and the second connection portion 131 and a relative position cannot change to reduce molding difficulty and connection difficulty of the second current collector plate 100. When G1 is greater than 2 mm, the areas/area of the first connection portion 121 and/or the second connection portion 131 decrease/decreases, that is, the connection area between the first connection portion 121 and the electrode core 500 and/or the connection area between the second connection portion 131 and the bottom cover 300 decrease/decreases, resulting in a poor current flow capability of the second current collector plate 100, and a failure of ensuring position stability of the second current collector plate 100 after connection.

Therefore, in this application, the radial dimension G1 of the orthographic projection of the space gap formed by spacing the first connection portion 121 from the inner peripheral wall of the second connection portion 131 that is on the plane perpendicular to the height direction of the battery cell 1000 is set to be 0.5 mm to 2 mm, to ensure the effective height difference between the first connection portion 121 and the second connection portion 131, and further ensure the areas of the first connection portion 121 and the second connection portion 131.

That is, in this application, a distance between the first connection portion 121 and the second connection portion 131 is inventively set, to ensure that the first connection portion 121 and the second connection portion 131 can be effectively separated, thereby facilitating adjustment of a relative position between the first connection portion 121 and the second connection portion 131, so that the first connection region 120 and the second connection portion 131 can be relatively moved. This ensures that an electrical connection between the electrode core 500 and the bottom cover can be implemented without bending the second current collector plate 100, thereby reducing a bending process, improving assembly efficiency, and avoiding concentrated stress caused by bending the second current collector plate 100, thereby avoiding breaking of the second current collector plate 100 and prolonging a service life of the second current collector plate 100. In addition, it can be further ensured that the first connection portion 121 and the second connection portion 131 each have a sufficient connection area, so that the second current collector plate 100 can effectively implement an electrical connection between the electrode core 500 and the bottom cover, thereby improving operation performance of the battery cell 1000.

In some specific examples, the radial dimension G1 of the orthographic projection of the space gap formed by spacing the first connection portion 121 from the inner peripheral wall of the second connection portion 131 that is on the plane perpendicular to the height direction of the battery cell 1000 may be 0.5 mm, 1 mm, 1.5 mm, or 2 mm.

In some examples, as shown in FIG. 17 to FIG. 23, a spacing between opposite sidewalls of each of the first connection portions 121 gradually increases in a direction facing away from the middle portion 122. In this way, the area of the first connection portion 121 increases, thereby ensuring a sufficient connection area between the first connection portion 121 and the second tab 502. Therefore, it is ensured that the second current collector plate 100 has a large current flow area, insufficient current flow of the electrode core 500 that is caused by a small current flow area of the second current collector plate 100 is avoided, a serious heat generation problem of the electrode core 500 is avoided, and the service life of the electrode core 500 is prolonged and use safety of the electrode core 500 is improved.

In some examples, the first connection portion 121 may be formed into a sector shape in FIG. 17 to FIG. 23. The sector shape may enable the spacing between the opposite sidewalls of the first connection portion 121 to gradually increase in the direction facing away from the middle portion 122, thereby increasing the area of the first connection portion 121.

Certainly, in some other examples, the first connection portion 121 may alternatively be formed in a triangle shape, a rectangle shape, a circular shape, or the like. This is not limited in this application.

In some embodiments of this application, as shown in FIG. 18, on the first plane, an orthographic projection of an outer peripheral wall of the second current collector plate 100 is located on a circle, the first plane is perpendicular to a thickness direction of the second current collector plate 100, a minimum value of a radius of the outer peripheral wall of the second current collector plate 100 is R1, and a value range of R1 is 10 mm to 100 mm. It will be understood herein that when a shape of the second current collector plate 100 is similar to a circular shape, the minimum value of the radius of the outer peripheral wall of the second current collector plate 100 is R1. The minimum value of the radius will be understood as that the radius of the outer peripheral wall of the second current collector plate 100 has a plurality of different values, and the minimum value herein is between 10 mm and 100 mm, to ensure that a size of the second current collector plate 100 can be adapted to both the electrode core 500 and the bottom cover 300, thereby helping implement an electrical connection between the electrode core 500 and the bottom cover 300 by using the second current collector plate 100, and ensure that the second current collector plate 100 has sufficient connection areas with the electrode core 500 and the bottom cover 300.

Certainly, in some other examples, the radius of the second current collector plate 100 is not limited to 10 mm to 100 mm. A person skilled in the art may limit the radius of the second current collector plate 100 based on practical areas of the electrode core 500 and the bottom cover 300, to ensure the sufficient connection areas between the second current collector plate 100 and both of the electrode core 500 and the bottom cover 300.

In a specific example, with reference to FIG. 17 to FIG. 20, a stop protrusion 1313 and a reinforcing portion 1311 are arranged on a radial outer peripheral wall of the second current collector plate 100. It will be understood that the minimum value of the radius of the outer peripheral wall of the second current collector plate 100 is a radius of the second current collector plate 100 when the stop protrusion 1313 is arranged on the second current collector plate 100.

Optionally, as shown in FIG. 18, a maximum value r of the radius of the outer peripheral wall of the first connection region 120 and R1 satisfy the following condition: ½R1≤r≤R1. Herein, the radius of the outer peripheral wall of the first connection region 120 has a plurality of different values.

In some embodiments, the maximum value of the radius of the outer peripheral wall of the first connection region 120 is r, and r and R1 further needs to satisfy a specific relationship. It should be noted that r is set to be less than R1 to reserve specific arrangement space for the second connection portion 131, thereby ensuring that the second connection portion 131 has a specific area to increase the connection area between the second connection portion 131 and the bottom cover 300; and r is set to be greater than or equal to ½R1, thereby ensuring that the first connection region 120 has a specific area to increase the connection area between the first connection region 120 and the electrode core 500.

That is, in this application, a relationship between r and R1 is set to ensure both the first connection portion 121 and the second connection portion 131 have specific connection areas, thereby fixedly connecting the second current collector plate 100 to the electrode core 500 and fixedly connecting the second current collector plate 100 to the bottom cover 300, and ensuring that the second current collector plate 100 has a large current flow area.

Optionally, as shown in FIG. 18, a radius of the middle portion 122 is r1, and 5 mm<r1<½r. It should be noted that the radius of the middle portion 122 herein will also be understood as a radial dimension of the middle portion 122 when the middle portion 122 is formed into the circular support plate. Because the radius of the first connection region 120 is a fixed value, a relationship between the radius r1 of the middle portion 122 and r is set, to ensure that both the first connection portion 121 and the middle portion 122 have specific connection areas, thereby fixedly connecting the second current collector plate 100 to the electrode core 500, and ensuring that the second current collector plate 100 has a large current flow area.

Optionally, as shown in FIG. 18, a radial width of the second connection portion 131 is W1, and 1 mm≤W1≤½R1. The radial width of the second connection portion 131 herein will be understood as a width of the second connection portion 131 that extends in a radial direction of the second current collector plate 100 when the second current collector plate 100 is formed into an approximate circular shape. In some examples, because the second connection portion 131 is arranged on the radial outer side of the first connection portion 121, and the radius of the second current collector plate 100 is fixed, the foregoing arrangement ensures that the connection area of the second connection portion 131 can satisfy a minimum connection requirement, and ensures that the first connection portion 121 has a sufficient connection area, thereby electrically connecting the electrode core 500 to the bottom cover 300 by using the second current collector plate 100.

In some embodiments of this application, with reference to FIG. 17 to FIG. 20, on the first plane, an orthographic projection of an outer peripheral wall of the second current collector plate 100 is located on a circle. The first plane is perpendicular to the thickness direction of the second current collector plate 100. A stop protrusion 1313 is arranged on the second connection portion 131. The stop protrusion 1313 extends toward the first connection portion 121. The stop protrusion 1313 is located on the radial outer side of the first connection portion 121. The stop protrusion 1313 is located on a radial outer side of the second tab 502. The radial outer side of the first connection portion 121 herein will be understood as a side of the first connection portion 121 that is close to a radial outer side of the second current collector plate 100 when the shape of the second current collector plate 100 is formed into a shape similar to a circle. The stop protrusion 1313 may, on the one hand, reinforce the second connection portion 131, that is, improve structural strength of the second connection portion 131, to avoid deformation when the second connection portion 131 is connected to the bottom cover 300, thereby ensuring that the second connection portion 131 can be stably connected to the bottom cover 300, and may, on the other hand, limit a position of the tab on the electrode core 500, so that the tab can be stably arranged on the electrode core 500, thereby preventing the electrode core 500 from being failed because a weld seam is pulled by a loose tab in a practical operating condition.

Optionally, as shown in FIG. 17 to FIG. 20, the stop protrusion 1313 extends in a circumferential direction of the second connection portion 131. It will also be understood as that the stop protrusion 1313 extends in the circumferential direction of the second current collector plate 100 formed in the circular shape, to increase an area of the stop protrusion 1313, thereby ensuring that the stop protrusion 1313 can effectively improve structural strength of the second connection portion 131, ensuring that the stop protrusion 1313 can effectively limit the position of the tab, and further ensuring that the tab can be stably arranged on the electrode core 500.

In addition, the stop protrusion 1313 extending in the circumferential direction of the second connection portion 131 may further protect the tab, to prolong a service life of the tab, that is, prolong the service life of the electrode core 500.

Certainly, in some other examples, there are a plurality of stop protrusions 1313. The plurality of stop protrusions 1313 are spaced apart in the circumferential direction of the second connection portion 131. In this way, structural strength of the second connection portion 131 may be improved by using the stop protrusions 1313 and the position of the tab may be limited by the stop protrusions 1313.

Optionally, an extension length of the stop protrusion 1313 toward the first connection portion 121 is greater than or equal to an exposure height of the tab, to ensure that the stop protrusion 1313 can effectively protect the tab and limit the position of the tab.

In a specific example, the exposure height of the tab ranges from 0.5 mm to 2 mm. That is, the extension length of the stop protrusion 1313 toward the first connection portion 121 is greater than 0.5 mm.

Optionally, the stop protrusion 1313 is defined by bending and deforming a part of the second connection portion 131. That is, in a process of manufacturing the second connection portion 131, a partial structure of the second connection portion 131 bends and deforms to form the stop protrusion 1313. In this way, there is no need to separately connect a structural member to the second connection portion 131 to form the stop protrusion 1313, thereby reducing manufacturing difficulty of the stop protrusion 1313, that is, reducing manufacturing difficulty of the second connection portion 131, and further improving position stability of the stop protrusion 1313.

Optionally, as shown in FIG. 17 to FIG. 20, a reinforcing portion 1311 is arranged on a periphery of the stop protrusion 1313. The reinforcing portion 1311 is configured to improve structural strength of the stop protrusion 1313 and the second connection portion 131, to avoid deformation when the second connection portion 131 is connected to the bottom cover 300, and further ensure that the stop protrusion 1313 can effectively protect the tab and limit the position of the tab.

Optionally, as shown in FIG. 17 to FIG. 20, there are a plurality of reinforcing portions 1311, and the plurality of reinforcing portions 1311 are spaced apart. The plurality of reinforcing portions 1311 cooperate to maximize structural strength of the stop protrusion 1313 and the second connection portion 131.

Optionally, as shown in FIG. 17 to FIG. 20, a clearance port 1312 for fluid to flow is formed between two adjacent reinforcing portions 1311. That is, only two adjacent reinforcing portions 1311 need to be spaced apart. In this way, the two adjacent reinforcing portions 1311 cooperate to form the clearance port 1312 on the outer peripheral wall of the second connection portion 131, and there is no need to separately process the clearance port 1312 on the second connection portion 131, thereby reducing manufacturing difficulty of the clearance port 1312, that is, reducing manufacturing difficulty of the second connection portion 131, and further improving manufacturing efficiency of the second connection portion 131. In some embodiments, the clearance port 1312 is configured to implement communication between two opposite ends of the second connection portion 131, to ensure smooth flow of gas in the electrode core 500.

That is, the clearance port 1312 of this application is formed into an exhaust passage.

In some examples, as shown in FIG. 17 to FIG. 20, a plurality of clearance ports 1312 are provided on the outer peripheral wall of the second connection portion 131, and the plurality of clearance ports 1312 are evenly arranged and spaced from each other. In this way, the plurality of clearance ports 1312 cooperate to ensure that gas distribution in the electrode core 500 can be more even.

It should be noted that the clearance port 1312 shown in FIG. 17 to FIG. 20 is formed into a shape similar to a rectangle. In some other examples, the clearance port 1312 may alternatively be formed into a circular shape, a triangle shape, or the like. This is not specifically limited in this application.

It should be further noted that a specific quantity of the plurality of clearance ports 1312 is not limited in this application. A person skilled in the art may set the quantity based on a gas production amount inside the electrode core 500.

Optionally, a radial width of the clearance port 1312 is W2, and 0.5 mm≤W2≤5 mm. It should be noted that the radial width of the clearance port 1312 herein will be understood as a width by which the clearance port 1312 extends in the radial direction of the second current collector plate 100 when a shape of the second current collector plate 100 is similar to an approximate circular shape. When W2 < 0.5 mm, an exhaust capability of the clearance port 1312 is reduced. When W2 > 5 mm, manufacturing difficulty of the clearance port 1312 increases, and the connection area between the second connection portion 131 and the bottom cover 300 is affected.

Therefore, in this application, the radial width W2 of the clearance port 1312 is set to be greater than or equal to 0.5 mm and less than or equal to 5 mm. In this way, it is ensured that the clearance port 1312 can smoothly exhaust the gas inside the electrode core 500 and it can be ensured that the clearance port 1312 can be better formed. In addition, the area of the second connection portion 131 is ensured, that is, the connection area between the second connection portion 131 and the bottom cover 300 is ensured.

In some embodiments of this application, as shown in FIG. 17 to FIG. 20, an electrolyte injection port 1221 extends through the middle portion 122 in a thickness direction of the middle portion 122. Herein, the electrolyte injection port 1221 is arranged in the middle portion 122, and the electrolyte injection port 1221 extends through the middle portion 122 in the thickness direction of the middle portion 122, to implement communication between two sides of the middle portion 122 in the thickness direction, thereby facilitating electrolyte injection toward the electrode core 500 through the electrolyte injection port 1221.

That is, in this application, when the second current collector plate 100 is electrically connected to the electrode core 500, normal electrolyte injection toward the electrode core 500 can be further ensured.

Optionally, as shown in FIG. 17 to FIG. 23, the electrolyte injection port 1221 includes a through port 1222 and a locating port 1223 that are in mutual communication. The through port 1222 facilitates electrolyte injection toward the electrode core 500, and the locating port 1223 fits with a tooling device to prevent the second current collector plate 100 from rotating in a mounting process. The foregoing arrangement may ensure that the electrolyte injection port 1221 facilitates electrolyte injection toward the electrode core 500, and may further locate the second current collector plate 100, to reduce connection difficulty between the second current collector plate 100 and the electrode core 500, improve connection efficiency, and ensure connection accuracy between the second current collector plate 100 and the electrode core 500.

In addition, the locating port 1223 may further prevent the second current collector plate 100 from rotating relative to the electrode core 500, to improve position stability of the second current collector plate 100.

In a specific example, the through port 1222 is formed into a circular port, to facilitate electrolyte injection toward the electrode core 500 through the through port 1222, and ensure an electrolyte injection amount. The locating port 1223 is formed into a rectangular port, to facilitate fitting between the locating port 1223 and the tooling device, thereby preventing the second current collector plate 100 from rotating in the mounting process, and reducing mounting difficulty of the second current collector plate 100.

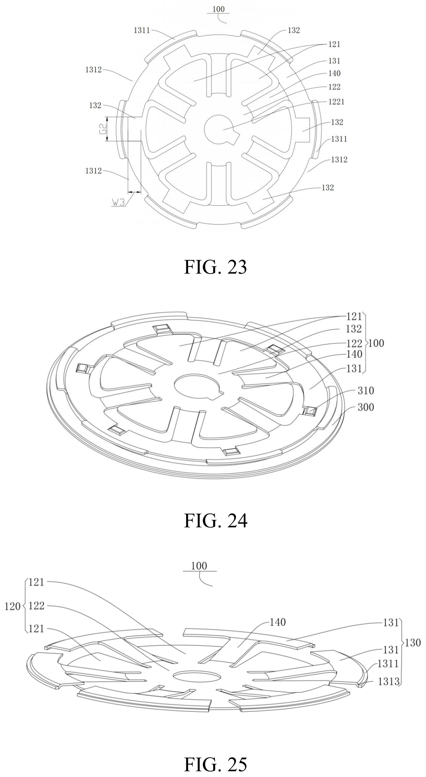

In some embodiments of this application, with reference to FIG. 23 and FIG. 24, a limiting port 132 is provided on the second connection portion 131, and the limiting port 132 is in a limiting fit with a limiting bump 310 on the bottom cover 300. That is, the limiting bump 310 is arranged on the bottom cover 300, and the limiting port is provided on the second connection portion 131. After the limiting bump 310 is in a limiting fit with the limiting port, a limiting fit between the second connection portion 131 and the bottom cover 300 can be implemented, to avoid a relative position change between the second connection portion 131 and the bottom cover 300 in a connection process, thereby reducing difficulty in connecting the second connection portion 131 to the bottom cover 300, and improving connection efficiency.

Optionally, the second connection portion 131 is formed into a ring shape, and the limiting port 132 is a limiting port extending to an inner peripheral wall of the second connection portion 131. Herein, the limiting port extends in a radial direction of the second connection portion 131 and extends to the inner peripheral wall of the second connection portion 131, to implement a limiting fit between the second connection portion 131 and the bottom cover 300 by using the limiting port.

Optionally, the limiting bump 310 is arranged on the bottom cover 300 and extends toward the second current collector plate 100, to ensure that the limiting bump 310 can be in a limiting fit with the limiting port, so that the limiting port 132 and the limiting bump 310 cooperate to implement a limiting fit between the second connection portion 131 and the bottom cover 300.

Optionally, a radial width of the second connection portion 131 is W1, and the radial width W3 of the limiting port 132 satisfies the following condition: 0.5 mm≤W3<W1. That is, the limiting port 132 has a specific width in the radial direction of the second current collector plate 100 formed into the circular shape, to facilitate a position fit between the second connection portion 131 and the bottom cover 300 through the limiting port 132. In addition, the radial width of the limiting port 132 is set to be less than the radial width of the second connection portion 131, to prevent structural strength and the connection area of the second connection portion 131 from being reduced due to the limiting port 132, thereby ensuring that the second connection portion 131 has specific structural strength, prolonging the service life, and ensuring a specific connection area between the second connection portion 131 and the bottom cover 300.

Optionally, as shown in FIG. 23, a circumferential length of the limiting port 132 is G2, 0.5 mm≤G2≤πR1/n1, n1 is a quantity of limiting ports 132, π is pi, and π≈3.14. When it is ensured that the limiting port 132 has a specific extension length to fit with the limiting bump 310, the area of the second connection portion 131 can be further prevented from being decreased excessively due to the limiting port 132, that is, there is the specific connection area between the second connection portion 131 and the bottom cover 300, to fixedly connect the second current collector plate 100 to the bottom cover 300.

Optionally, as shown in FIG. 23, there are a plurality of limiting ports 132. The plurality of limiting ports 132 and the plurality of first connection portions 121 are oppositely arranged in one-to-one correspondence in the radial direction of the second connection portion 131. In some embodiments, the plurality of limiting ports 132 are provided to ensure effective position fit between the second connection portion 131 and the bottom cover 300. The plurality of limiting ports 132 and the plurality of first connection portions 121 are oppositely arranged in one-to-one correspondence, so that the limiting port 132 can be arranged away from the connection member 140, thereby preventing the limiting port 132 from affecting fixed connection between the second connection portion 131 and the middle portion 122, that is, ensuring that the limiting port 132 can effectively implement position fit between the second connection portion 131 and the bottom cover 300, ensuring that the second connection portion 131 and the middle portion 122 can be fixedly connected effectively, and ensuring position stability and structural strength of the second current collector plate 100.

It should be noted that the figure shows a case in which an orthographic projection of the limiting port 132 on the first plane is formed into a rectangle. In some other examples, the orthographic projection of the limiting port 132 on the first plane is formed into a square, a triangle, a sector, or the like.

Optionally, the battery cell 1000 is a cylindrical battery, so that structures (the electrode core 500 and the bottom cover 300) in the battery cell 1000 can be adapted to the circular second current collector plate.

In some examples, an area of an orthographic projection of the first connection portion 121 on the first plane is S1, a minimum connection area between the first connection portion 121 and the electrode core 500 is S, S=γS1, and 0.2≤γ≤1. That is, the minimum connection area between the first connection portion 121 and the electrode core 500 may be less than the area of the orthographic projection of the first connection portion 121 on the first plane, but it still needs to be ensured that the first connection portion 121 and the electrode core 500 have a sufficient connection area, to ensure a current flow capability of the second current collector plate 100.

In addition, the connection area between the first connection portion 121 and the electrode core 500 may be set to be less than the area of the orthographic projection of the first connection portion 121 on the first plane, to reduce difficulty in connecting the second current collector plate 100 to the electrode core 500, and further improve assembly efficiency of the battery cell 1000. The connection area between the first connection portion 121 and the electrode core 500 may be measured based on a connection mark, for example, based on a weld mark. In some embodiments, a distinguishing boundary between the first connection portion 121 and the middle portion 122 may be a straight connection line between opposite sidewalls at a connection position between the first connection portion 121 and the middle portion 122.

In addition, the first connection region 120 is arranged to include the plurality of first connection portions 121, and the minimum connection area between each of the first connection portions 121 and the electrode core 500 is set to be not less than 20% of the area of the orthographic projection of the first connection portion 121 on the first plane, to ensure that there is a sufficient connection area between the first connection portion 121 and the electrode core 500, thereby increasing a current flow area of the second current collector plate 100, and avoiding insufficient current flow of the electrode core 500 that is caused by a small current flow area of the second current collector plate 100, that is, avoiding a serious heat generation problem of the electrode core 500, to prolong a service life of the electrode core 500 and improve use safety of the electrode core 500.

In addition, the connection area between the first connection portion 121 and the electrode core 500 is limited to further reduce connection difficulty between the first connection portion 121 and the electrode core 500, thereby improving connection efficiency.

It will be understood that compared with the conventional technology, the second current collector plate 100 in this application can electrically connect the electrode core 500 to the bottom cover effectively, ensure a connection area between the second current collector plate 100 and the electrode core 500, and improve the current flow capability of the second current collector plate 100, thereby improving use safety of the battery cell 1000 and prolonging a service life of the battery cell 1000.

It should be noted that connection between the first connection portion 121 and the electrode core 500 and connection between the second connection region 130 and the housing both may be implemented through welding, bonding, or the like.

Optionally, a material of the second current collector plate 100 may be an aluminum alloy, pure copper, nickel-plated copper, or the like, so that the second current collector plate 100 has a conductive function, so that the electrode core 500 is electrically connected to the bottom cover by using the second current collector plate 100.

In some embodiments, when the material of the second current collector plate 100 is an aluminum alloy, the second current collector plate 100 is mainly in fit connection with a positive tab of the electrode core 500. When the material of the second current collector plate 100 is pure copper or nickel-plated copper, the second current collector plate 100 is mainly in fit connection with a negative tab of the electrode core 500. That is, a person skilled in the art may select the material of the second current collector plate 100 based on an application environment of the second current collector plate 100. This is not specifically limited in this application.

In the descriptions of this application, features defined by "first" and "second" may explicitly or implicitly include one or more of such features, and are used to differentially describe the features, instead of indicating a sequence or importance.

It should be noted that, in some examples, to ensure that a worker can effectively determine whether the minimum connection area between the first connection portion 121 and the electrode core 500 satisfies a requirement, a minimum connection zone may be provided on the first connection portion 121. When the entire minimum connection zone is connected to the electrode core 500, it is determined that the minimum connection area between the first connection portion 121 and the electrode core 500 satisfies the requirement.

Optionally, a plurality of locating portions, for example, locating grooves or locating protrusions, are arranged on the first connection portion 121, and a region enclosed by the plurality of locating portions forms the minimum connection zone.

In some examples, as shown in FIG. 17, the second connection region 130 is located on a radial outer side of the first connection region 120, to properly arrange positions of the first connection region 120 and the second connection region 130 relative to each other, thereby ensuring the areas of the first connection region 120 and the second connection region 130.

In some embodiments of this application, an identifier region (not shown in the figures) is provided on the first connection portion 121, and the identifier region is welded to the electrode core 500. In this way, the first connection portion 121 is electrically connected to the electrode core 500.

In addition, the identifier region is arranged to reduce connection difficulty between the first connection portion 121 and the electrode core 500 to improve connection efficiency, and arranged to determine whether the connection area between the first connection portion 121 and the electrode core 500 satisfies a corresponding requirement, that is, determine whether the minimum connection area between the first connection portion 121 and the electrode core 500 is greater than or equal to 20% of the area of the orthographic projection of the first connection portion 121 on the first plane.

In some examples, an area of the identifier region is equal to 20% of the area of the orthographic projection of the first connection portion 121 on the first plane. In this way, after the identifier region is completely connected to the electrode core 500, the minimum connection area between the first connection portion 121 and the electrode core 500 can satisfy the corresponding requirement.

Therefore, because the identifier region is arranged, a worker can determine, when connecting the first connection portion 121 to the electrode core 500 and based on whether the identifier region is completely connected to the electrode core 500, whether the minimum connection area between the first connection portion 121 and the electrode core 500 satisfies the requirement. In some embodiments, after it is determined that the identifier region is completely connected to the electrode core 500, it is determined that the minimum connection area between the first connection portion 121 and the electrode core 500 satisfies the corresponding requirement. After it is determined that the identifier region is not completely connected to the electrode core 500, it is determined that the minimum connection area between the first connection portion 121 and the electrode core 500 does not satisfy the corresponding requirement. In this case, the first connection portion 121 needs to be continuously welded to the electrode core 500, until the minimum connection area between the first connection portion 121 and the electrode core 500 satisfies the corresponding requirement.

It should be noted that after it is determined that the identifier region is completely connected to the electrode core 500, the first connection portion 121 may be continued to be connected to the electrode core 500. In some embodiments, a larger connection area between the first connection portion 121 and the electrode core 500 indicates a stronger current flow capability of the second current collector plate 100 and higher use safety of the battery cell 1000. Optionally, a plurality of locating portions, for example, locating grooves or locating protrusions, are arranged on the first connection portion 121, and a region enclosed by the plurality of locating portions forms the identifier region. In this way, the worker clearly observes a position and a size of the identifier region, thereby facilitating the worker in determining whether the minimum connection area between the first connection portion 121 and the electrode core 500 is greater than or equal to 20% of the area of the orthographic projection of the first connection portion 121 on the first plane.

In some examples, the minimum connection area S between the first connection portion 121 and the electrode core 500 may be determined according to a minimum current flow requirement C of the electrode core 500. In some embodiments, the minimum connection area S between the first connection portion 121 and the electrode core 500 and the minimum current flow requirement C of the electrode core 500 need to satisfy the following condition: nNKS≥C. Herein, n is a quantity of first connection portions 121; N is a compensation coefficient, and N=0.7~1; and K is a current flow coefficient of the first connection portion 121.

It should be noted that K may be directly determined based on a material of the first connection portion 121, and a unit is AH/mm²; and the minimum current flow requirement C of the electrode core 500 may be determined based on required charging duration of the electrode core 500. A specific determining manner is as follows: In a practical production process of the battery cell 1000, fast charging duration that needs to be satisfied by a to-be-produced battery cell 1000 may be directly determined, that is, charging duration of the battery cell 1000 may be explicitly learned of; charging duration of the electrode core 500 is determined based on the charging duration of the battery cell 1000; the minimum current flow requirement C of the electrode core 500 is then obtained based on the charging duration of the electrode core 500; and finally the minimum connection area S between the first connection portion 121 and the electrode core 500 is calculated based on the minimum current flow requirement C, so that the minimum connection area S between the first connection portion 121 and the electrode core 500 and the minimum current flow requirement C of the electrode core 500 can satisfy a specific condition, thereby ensuring that a current flow capability of the second current collector plate 100 can satisfy the minimum current flow requirement of the electrode core 500, avoiding insufficient current flow of the electrode core 500, avoiding the serious heat generation problem of the electrode core 500, and prolonging the service life of the electrode core 500 and improving use safety of the electrode core 500.

In some specific examples, the minimum current flow requirement C of the electrode core 500 is equal to 15 AH to 120 AH.

Optionally, a connection width H between the first connection portion 121 and the middle portion 122 and the minimum current flow requirement C of the electrode core 500 also need to satisfy a specific condition, to further ensure the current flow capability of the second current collector plate 100.

The connection width H herein will be understood as a straight-line distance between opposite side walls at a connection position between the first connection portion 121 and the middle portion 122. That is, there are two oppositely arranged sidewalls at the connection position between the first connection portion 121 and the middle portion 122, and the straight-line distance between the two sidewalls forms the connection width H between the first connection portion 121 and the middle portion 122 (for the connection width H, specifically referring to FIG. 18).

Specifically, the connection width H between the first connection portion 121 and the middle portion 122 and the minimum current flow requirement C of the electrode core 500 satisfy the following condition: nKHδ≥C. Herein, n is a quantity of first connection portions 121; δ is a thickness of the first connection portion 121; and K is a current flow coefficient of the second current collector plate 100, and K may be directly determined based on a material of the second current collector plate 100, and is in a unit of AH/mm².

That is, in the practical production process of the battery cell 1000, it is ensured that the minimum connection area S between the first connection portion 121 and the electrode core 500 and the minimum current flow requirement C of the electrode core 500 satisfy the specific condition, and the connection width H between the first connection portion 121 and the middle portion 122 and the minimum current flow requirement C of the electrode core 500 also need to satisfy the specific condition, thereby effectively ensuring the current flow capability of the second current collector plate 100.

In some embodiments, a specific determining method of the connection width H between the first connection portion 121 and the middle portion 122 is as follows: In the practical production process of the battery cell 1000, the charging duration of the battery cell 1000 may be directly determined; after the charging duration of the battery cell 1000 is explicitly determined, the charging duration of the electrode core 500 is first determined based on the charging duration of the battery cell 1000 and the minimum current flow requirement C of the electrode core 500 is obtained based on the charging duration of the electrode core 500; and finally, the connection width H between the first connection portion 121 and the middle portion 122 is calculated based on the minimum current flow requirement C, the quantity of first connection portions 121, and the thickness of the first connection portion 121, so that the connection width H between the first connection portion 121 and the middle portion 122 and the minimum current flow requirement C of the electrode core 500 satisfy the specific condition.

In addition, in this application, the connection width between the first connection portion 121 and the middle portion 122 is further inventively set, that is, a straight-line distance between opposite side walls at a connection position of the first connection portion 121 and the middle portion 122 is limited, so that the straight-line distance between the opposite side walls at the connection position of the first connection portion 121 and the middle portion 122 satisfies: nKHδ≥C, thereby ensuring a current flow area of the current collector plate 100, improving a current flow capability of the current collector plate 100, and avoiding an insufficient current flow of the electrode core 500 caused due to a small current flow area of the current collector plate 100, that is, avoiding a serious problem of heat generation of the electrode core 500, to prolong a service life of the electrode core 500 and improve use safety of the electrode core 500, that is, to prolong a service life of the battery cell 1000 and improve use safety of the battery cell 1000.

In some embodiments of this application, as shown in FIG. 17 to FIG. 20, on the first plane, an orthographic projection of an outer peripheral wall of the second current collector plate 100 is located on a circle. The first plane is perpendicular to the thickness direction of the second current collector plate 100. The second connection portion 131 is provided with a stop protrusion 1313 extending toward the first connection portion 121. The stop protrusion 1313 is located on the radial outer side of the first connection portion 121. The stop protrusion 1313 is located on a radial outer side of the second tab 502. The radial outer side of the first connection portion 121 herein will be understood as a side of the first connection portion 121 that is close to the radial outer side of the second current collector plate 100 when a shape of the second current collector plate 100 is similar to a circular shape. When the stop protrusion 1313 is arranged on the radial outer side of the first connection portion 121, after the second current collector plate 100 is connected to the electrode core 500, the stop protrusion 1313 can be located on the radial outer side of the second tab 502. In this case, it is convenient to use the stop protrusion 1313 to limit a position of the tab, so that the tab can be stably arranged on the electrode core 500, thereby preventing the electrode core 500 from being failed because a weld seam is pulled by a loose tab in a practical operating condition.

That is, the second current collector plate 100 in this application can not only implement an electrical connection between the electrode core 500 and the bottom cover 300, but also can be used to fasten the tab, to ensure operation performance of the battery cell 1000.

In some embodiments of this application, as shown in FIG. 25 to FIG. 28, a second current collector plate 100 according to an embodiment of this application includes a first connection region 120 and a second connection region 130.

In some embodiments, the first connection region 120 is welded to the second tab 502 of the electrode core 500 (for a specific structure of the electrode core 500, referring to FIG. 2). Herein, the electrode core 500 includes the second tab 502, and the first connection region 120 is welded to the second tab 502 to implement welding between the first connection region 120 and the electrode core 500, thereby helping implement an electrical connection between the electrode core 500 and the bottom cover 300 by using the second current collector plate 100.

As shown in FIG. 25, the second connection region 130 includes a plurality of second connection portions 131. Each second connection portion 131 is connected to the first connection region 120 through the connection member 140. The connection member 140 is constructed to be movable relative to the first connection region 120 and/or deformable relative to the first connection region 120, to change a height difference between the first connection region 120 and the second connection region 130. The second connection region 130 is welded to the bottom cover 300. Herein, the height difference exists between the first connection region 120 and the second connection region 130, and the connection member 140 is constructed to be movable relative to the first connection region 120, or the connection member 140 is constructed to be deformable relative to the first connection region 120, or the connection member 140 is constructed to be movable relative to the first connection region 120 and deformable relative to the first connection region 120, to change the height difference between the first connection region 120 and the second connection region 130 by using the connection member 140, thereby adjusting the position of the second connection portion 131 relative to the first connection region 120, that is, adjusting positions of the second connection portion 131 and the bottom cover 300 relative to each other.

That is, the position of the second connection portion 131 in this application is adjustable.

It should be noted that the height difference between the first connection region 120 and the second connection region 130 will be understood as follows: In the height direction of the battery cell 1000, the first connection region 120 and the second connection region 130 are spaced from each other, that is, the first connection region 120 and the second connection region 130 are arranged at different heights in the battery cell 1000.

In the descriptions of this application, unless otherwise stated, "a plurality of" means two or more.

It will be understood from the foregoing structure that the second current collector plate 100 in this embodiment of this application is arranged to include the first connection region 120 and the second connection region 130, so that the first connection region 120 and the second connection region 130 cooperate with each other to electrically connect the electrode core 500 to the bottom cover 300.

The plurality of second connection portions 131 are arranged, and the plurality of second connection portions 131 cooperate to increase a contact area between the second current collector plate 100 and the bottom cover 300, thereby improving connection strength between the second current collector plate 100 and the bottom cover 300, so that a relative position between the second current collector plate 100 and the bottom cover 300 is stable. In this way, position stability of the second current collector plate 100 is improved.

It should be noted that, in a process of connecting the second current collector plate 100 to the bottom cover 300, if a position of the second connection region 130 relative to the bottom cover 300 is not adjustable, when a difference in flatness of a welding surface of the bottom cover 300 is relatively large, or when a difference in flatness of the plurality of second connection portions 131 is relatively large, a welding gap exists between the second current collector plate 100 and the bottom cover 300, and finally, a possibility of poor welding between the second current collector plate 100 and the bottom cover 300 is increased, affecting a yield of the battery cell 1000.

Therefore, in this application, each second connection portion 131 is arranged to be connected to the first connection region 120 through the connection member 140. Because the connection member 140 is constructed to be movable relative to the first connection region 120 and/or deformable relative to the first connection region 120, the height difference between the first connection region 120 and the second connection region 130 can be changed by using the connection member 140, that is, positions of the plurality of second connection portions 131 relative to the first connection portion 121 can be changed. In this way, even if a difference in flatness of a plurality of welding positions on the bottom cover 300 is relatively large, it can be ensured that each second connection portion 131 can be welded to the bottom cover 300, and a gap between the second connection portion 131 and the bottom cover 300 is avoided, that is, a gap between the second current collector plate 100 and the bottom cover 300 is avoided, and impact caused by a manufacturing error is eliminated, thereby further improving connection strength between the second current collector plate 100 and the bottom cover 300, and ensuring conformity of opposite contact surfaces of the second current collector plate 100 and the bottom cover 300, to reduce a possibility of poor welding, and subsequently ensure a yield of the battery cell 1000.

This will also be understood as that in this application, when the second current collector plate 100 is connected to the bottom cover 300, the second current collector plate 100 may absorb a manufacturing error of the second current collector plate 100 and/or the bottom cover 300 by using the second connection portion 131, thereby subsequently improving manufacturing precision of the battery cell 1000.

In a specific example, because there is the height difference between the first connection region 120 and the second connection region 130, and the connection member 140 can change the height difference between the first connection region 120 and the second connection region 130, when the bottom cover 300 is connected to the electrode core 500 by using the second current collector plate 100, the first connection region 120 may be first connected to the electrode core 500. Because the first connection region 120 and the second connection region 130 have the height difference in the height direction of the battery cell 1000, after the first connection region 120 is connected to the electrode core 500, the second connection region 130 can be arranged close to the bottom cover 300 in a process of mounting the bottom cover 300, to reduce difficulty in connecting the second connection region 130 and the bottom cover 300. In addition, because the first connection region 120 and the second connection region 130 are movable relative to each other, when the second connection region 130 is connected to the bottom cover 300, it can be ensured that the position of the second connection region 130 can change based on a position, a shape, a surface structure, and the like of the bottom cover 300, so that the second connection region 130 can be effectively connected to the bottom cover 300, to ensure connection strength and a connection area, thereby connecting the bottom cover 300 to the electrode core 500 by using the second current collector plate 100, reducing the possibility of poor welding between the second current collector plate 100 and the bottom cover 300, and ensuring the yield of the battery cell 1000.

In conclusion, the second current collector plate 100 in this application can not only implement an electrical connection between the electrode core 500 and the bottom cover 300, but also avoid a welding gap between the second current collector plate 100 and the bottom cover 300, thereby ensuring the yield of the battery cell 1000.

It will be understood that, compared with the related art, the second current collector plate 100 in this application can resolve a technical problem of a fitting gap between opposite contact surfaces of the second current collector plate 100 and the bottom cover 300 when the second current collector plate 100 is cooperatively connected to the bottom cover 300, to reduce a possibility of poor welding of the second current collector plate 100.

Optionally, a material of the second current collector plate 100 may be an aluminum alloy, pure copper, nickel-plated copper, or the like, so that the second current collector plate 100 has a conductive function, so that the electrode core 500 is electrically connected to the bottom cover 300 by using the second current collector plate 100.

In some embodiments, when the material of the second current collector plate 100 is the aluminum alloy, the second current collector plate 100 is mainly in fit welding with a positive second tab 502 of the electrode core 500. When the material of the second current collector plate 100 is pure copper or nickel-plated copper, the second current collector plate 100 is mainly in fit welding with a negative second tab 502 of the electrode core 500. That is, a person skilled in the art may select the material of the second current collector plate 100 based on an application environment of the second current collector plate 100. This is not specifically limited in this application.

It should be noted that the foregoing mainly describes an example in which the second connection region 130 of the second current collector plate 100 is welded to the bottom cover 300.

Certainly, in some other examples, the second connection region 130 of the second current collector plate 100 may be alternatively welded to the housing, to implement an electrical connection between the electrode core 500 and the housing 600 by using the second current collector plate 100.

For ease of description, the following mainly uses an example in which the second connection region 130 of the second current collector plate 100 is welded to the bottom cover 300 for description.

In some examples, in the height direction of the battery cell 1000, the first connection region 120 and the second connection region 130 are parallel to each other. While reducing manufacturing difficulty of the first connection region 120 and the second connection region 130, a welding area between the first connection region 120 and the second tab 502 and a welding area between the second connection region 130 and the bottom cover 300 can be further ensured, to effectively implement an electrical connection between the electrode core 500 and the bottom cover 300, and reduce connection difficulty.

In the descriptions of this application, features defined by "first" and "second" may explicitly or implicitly include one or more of such features, and are used to differentially describe the features, instead of indicating a sequence or importance.

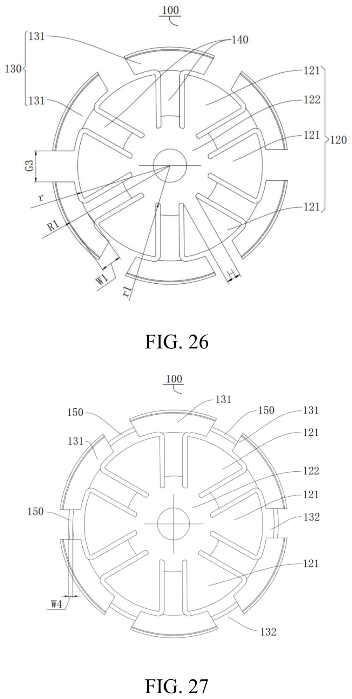

In some embodiments of this application, as shown in FIG. 25 and FIG. 26, a plurality of second connection portions 131 are arranged and spaced from each other, and the second connection region 130 is constructed so that a height difference between each second connection portion 131 and the first connection region 120 can be independently adjusted. That is, a height of each second connection portion 131 may be adjusted separately relative to the first connection region 120, so that the height of each second connection portion 131 may be adjusted separately relative to the bottom cover 300, to ensure that each second connection portion 131 can be welded to the bottom cover 300, avoid a gap between the second connection portion 131 and the bottom cover 300, reduce a possibility of poor welding, and subsequently ensure a yield of the battery cell 1000.

In some examples, as shown in FIG. 25 and FIG. 26, each second connection portion 131 is separately connected to the first connection region 120 through one connection member 140. Because the connection member 140 is movable and/or deformable relative to the first connection region 120, after the second connection portion 131 is connected to the connection member 140, it can be ensured that the connection member 140 can drive, when moving and/or deforming relative to the first connection region 120, a position of the connected second connection portion 131 to change, so that a height difference between each second connection portion 131 and the first connection region 120 can be adjusted independently.

Certainly, in some other examples, after the plurality of second connection portions 131 are arranged and spaced from each other, each second connection portion 131 may be arranged to be connected to the first connection region 120 through a plurality of connection members 140. This further helps support the second connection portion 131 by using all of the plurality of connection members 140 while ensuring that a height difference between each second connection portion 131 and the first connection region 120 can be independently adjusted, to ensure that a position of the second connection portion 131 is stable, and implement a stable connection between the second connection portion 131 and the bottom cover 300.

It should be noted that, in the descriptions of this application, unless otherwise stated, "a plurality of" means two or more.

It should be further noted that, spacing the plurality of second connection portions 131 from each other can avoid that adjacent second connection portions 131 impede mutual movement, thereby ensuring that a height of each second connection portion 131 can be adjusted separately relative to the first connection region 120, so that a position of the second connection portion 131 can be adjusted.

In some embodiments of this application, as shown in FIG. 25 and FIG. 26, the connection member 140 is a plate body that obliquely extends relative to the first connection region 120 and that is movable and/or deformable relative to the first connection region 120. Herein, the connection member 140 is a plate body, the plate body obliquely extends relative to the middle portion 122, and the plate body is movable and/or deformable relative to the first connection region 120, to ensure that the connection member 140 can move or deform relative to the first connection region 120 under an external force, thereby ensuring that the height difference between the first connection region 120 and the second connection region 130 is changed by using the connection member 140, to eliminate poor welding impact caused by a manufacturing error. It should be noted that the second current collector plate 100, as the conductive element, is generally made of the metal conductive material such as copper, aluminum, or iron, which naturally has the characteristics such as elasticity and deformability. In this case, the connection member 140 is constructed as an obliquely extending plate body, to implement movement and/or deformation, and implement an adjustable position of the second connection portion 131.

In a specific example, the connection member 140 is a plate body that obliquely extends and that is movable and/or deformable. In this way, when the second current collector plate 100 is separately connected to the electrode core 500 and the bottom cover 300, if flatness of a plurality of welding positions on the bottom cover 300 has a relatively large difference, a welding position that protrudes toward the electrode core 500 generates a force that drives a corresponding second connection region 130 to move toward the electrode core 500. Because the second connection region 130 is connected to the first connection region 120 through the plate body that obliquely extends, and the plate body that obliquely extends is prone to a position change or deformation under an external force, when the protruding welding position drives the corresponding second connection region 130 to move toward the electrode core 500, the second connection region 130 can drive the obliquely extending plate body to act, to ensure that the second connection region 130 can effectively move, that is, ensure that the position of the second connection region 130 can change based on flatness of the bottom cover 300, so that the second connection region 130 can be connected to a plurality of welding positions on the bottom cover 300, and a fitting gap between the second connection region 130 and the bottom cover 300 can be avoided, thereby ensuring conformity of opposite contact surfaces of the second current collector plate 100 and the bottom cover 300, and reducing the possibility of poor welding.

It should be noted that the second connection region 130 can drive the obliquely extending plate body to act. A specific action of the plate body may be as follows: The second connection region 130 drives one end of the plate body connected thereto to move toward the electrode core 500, and in a process in which the end of the plate body moves, the other end of the plate body is fastened relative to the electrode core 500, so that the entire plate body rotates toward the electrode core 500, thereby implementing movement of the connection member 140 relative to the first connection region 120; or the second connection region 130 drives one end of the plate body connected thereto to be bent toward the electrode core 500, and in a bending process, the other end of the plate body may be fastened relative to the electrode core 500, thereby implementing deformation of the connection member 140 relative to the first connection region 120.

In a specific example, the connection member 140 is formed into a rectangular plate, to fixedly connect the second connection portion 131 to the first connection region 120 by using the connection member 140, and ensure that the second connection portion 131 can be located on the radial outer side of the first connection region 120 after connection completes.

Certainly, in some other examples, the connection member 140 may alternatively be formed into a square plate, a fan-shaped plate, or the like. This is not specifically limited in this application.

Optionally, the connection member 140 is made of a conductive material such as aluminum or copper. When the first connection region 120 is connected to the second connection region 130 by using the connection member 140, it is ensured that, under the action of an external force, the second connection region 130 can effectively drive the obliquely extending connection member 140 to act, that is, the connection member 140 can effectively move and/or deform relative to the first connection region 120, to change the height difference between the first connection region 120 and the second connection region 130.

It should be noted that a specific length, a specific width, and a specific thickness of the connection member 140 are not limited in this application, provided that it is ensured that the connection member 140 can effectively connect the first connection region 120 to the second connection region 130, and it is ensured that, under the action of an external force, the second connection region 130 can effectively drive the obliquely extending connection member 140 to act.

Certainly, in some other examples, the connection member 140 may alternatively be a buffer spring. One end of the buffer spring is connected to the second connection portion 131, and the other end of the buffer spring is connected to the first connection region 120. In this way, the connection member 140 may be constructed as being movable relative to the first connection region 120 and/or being deformable relative to the first connection region 120, to change the height difference between the first connection region 120 and the second connection region 130.

In a specific example, when the connection member 140 is a buffer spring, and when the second current collector plate 100 is separately connected to the electrode core 500 and the bottom cover 300, if flatness of the plurality of welding positions on the bottom cover 300 greatly varies, the welding position protruding toward the electrode core 500 generates force driving the corresponding second connection region 130 to move toward the electrode core 500, and the second connection region 130 compresses the buffer spring to deform the buffer spring, thereby changing the height difference between the first connection region 120 and the second connection region 130.

In some examples, with reference to FIG. 19, a range of an oblique angle of the connection member 140 relative to the first connection region 120 is 5°≤a<90°. In some embodiments, when the range of the oblique angle of the connection member 140 relative to the first connection region 120 is less than 5°, an overall height of the second current collector plate 100 is low, resulting in a failure that the electrode core 500 cannot be electrically connected to the bottom cover 300 effectively by using the second current collector plate 100. When the range of the oblique angle of the connection member 140 relative to the first connection region 120 is greater than or equal to 90°, on the one hand, an overall height of the second current collector plate 100 is high, the second current collector plate 100 occupies large space, and the second current collector plate 100 occupies arrangement space of the electrode core 500, resulting in a decrease in the capacity of the electrode core 500; and on the other hand, the connection member 140 cannot effectively deform or move, that is, the connection member 140 cannot effectively change the height difference between the first connection region 120 and the second connection region 130, and the poor welding problem caused by the manufacturing error cannot be resolved.

Therefore, in this application, the range of the oblique angle a of the connection member 140 relative to the first connection region 120 is set to 5°≤a<90°. In this way, it is ensured that the electrode core 500 can be electrically connected to the bottom cover 300 effectively by using the second current collector plate 100, the height difference between the first connection region 120 and the second connection region 130 can be further effectively changed by using the connection member 140, and the overall height of the second current collector plate 100 can be further prevented from being excessively high to ensure the capacity of the electrode core 500.

In a specific example, the oblique angle a of the connection member 140 relative to the first connection region 120 may be 5°, 10°, 20°, 30°, 40°, 50°, 60°, 70°, 80°, or the like.

Optionally, a height range between the first connection region 120 and the second connection region 130 is 1 mm-10 mm. In some embodiments, specific height values of the first connection region 120 and the second connection region 130 may be adjusted based on the oblique angle a of the connection member 140. The height range between the first connection region 120 and the second connection region 130 is set to 1 mm-10 mm, to ensure that the oblique angle a of the connection member 140 relative to the middle portion 122 can be in a range of 5° to 90°. Therefore, it is ensured that the height difference between the first connection region 120 and the second connection region 130 can be effectively changed by using the connection member 140, and the overall height of the second current collector plate 100 can be further prevented from being excessively high to ensure the capacity of the electrode core 500.

In a specific example, a height between the first connection region 120 and the second connection region 130 may be 1 mm, 3 mm, 5 mm, 8 mm, 10 mm, or the like.

It should be further emphasized that, in the related art, the electrode core 500 is spaced from the bottom cover 300, causing a specific height between the electrode core 500 and the bottom cover 300. In this application, the connection member 140 is arranged to obliquely extend relative to the first connection region 120. In this way, the second current collector plate 100 has a specific height, so that an electrical connection between the electrode core 500 and the bottom cover 300 can be implemented by using the second current collector plate 100, and a height increase caused by bending the second current collector plate 100 can be avoided, thereby avoiding damage to the second current collector plate 100, avoiding concentrated stress caused by bending the second current collector plate 100, and prolonging service life of the second current collector plate 100.

In addition, in this application, the connection member 140 is arranged, so that there is a specific height difference between the first connection region 120 and the second connection portion 131. Compared with bending the second current collector plate to increase the height, space occupied by the second current collector plate 100 in the height direction can be reduced. In this way, the height of the electrode core 500 can be correspondingly increased, thereby increasing a capacity of the electrode core 500, that is, increasing a capacity of the battery cell 1000.

In some embodiments of this application, as shown in FIG. 25 and FIG. 26, the first connection region 120 includes a middle portion 122 and a plurality of first connection portions 121, the plurality of first connection portions 121 are connected to the middle portion 122, the plurality of first connection portions 121 are spaced from each other, and the plurality of first connection portions 121 enclose the first connection region 120 that is formed into a circular shape. That is, the first connection region 120 is formed into the circular shape and includes the middle portion 122 and the plurality of first connection portions 121. In some embodiments, the first connection region 120 is arranged to form the circular shape, so that the first connection region 120 can adapt to a shape of the electrode core 500, thereby ensuring that the first connection region 120 can be effectively connected to the electrode core 500, and ensuring a connection area between the first connection region 120 and the electrode core 500. The first connection region 120 is arranged to include the middle portion 122 and the plurality of first connection portions 121. In this way, when the first connection region 120 is welded to the second tab 502 of the electrode core 500, a welding area between the first connection region 120 and the second tab 502 can be increased, that is, a welding area between the second current collector plate 100 and the second tab 502 is increased. On the one hand, connection strength between the second current collector plate 100 and the electrode core 500 is improved, so that the second current collector plate 100 and the electrode core 500 are in a stable relative position, thereby improving position stability of the second current collector plate 100. On the other hand, it can be further ensured that the second current collector plate 100 has a relatively large current flow area, to avoid that a current flow of the electrode core 500 is insufficient due to a small current flow area of the second current collector plate 100, thereby avoiding a problem of severe heat generation of the electrode core 500, to prolong a service life of the electrode core 500 and improve use safety of the electrode core 500.

In addition, the plurality of first connection portions 121 are separately connected to the middle portion 122, and the middle portion 122 may be used to support the plurality of first connection portions 121, to improve position stability of the plurality of first connection portions 121, so as to ensure connection strength between the first connection region 120 and the second tab 502.

It should be noted that in a process of welding the first connection region 120 and the second tab 502, only the plurality of first connection portions 121 and the second tab 502 may be welded. In this case, a main function of the middle portion 122 is to support the plurality of first connection portions 121, to improve position stability of the plurality of first connection portions 121. Certainly, the plurality of first connection portions 121 and the middle portion 122 may be all welded to the second tab 502, to further increase a welding area between the first connection region 120 and the second tab 502.

In addition, the plurality of first connection portions 121 are spaced from each other, to avoid the connection member 140, and ensure that the second connection portion 131 can be effectively connected to the first connection region 120 through the connection member 140, so that a position of the second connection portion 131 is adjustable.

In some examples, as shown in FIG. 25 and FIG. 26, the second connection portion 131 is connected to the middle portion 122 through the connection member 140. That is, the second connection portion 131 in this application is mainly connected to the middle portion 122 to implement a connection between the second connection portion 131 and the first connection region 120. In this case, the middle portion 122 is used to support the second connection portion 131, and a position of the second connection portion 131 relative to the first connection region 120 is adjustable.

In some specific examples, as shown in FIG. 25 and FIG. 26, the middle portion 122 is formed into a circular support plate. The plurality of first connection portions 121 are all formed into fan-shaped connection plates. The plurality of first connection portions 121 are connected to a radial outer side of the middle portion 122 and are spaced apart in the circumferential direction of the middle portion 122. In this way, after the plurality of first connection portions 121 are connected to the middle portion 122, the first connection region 120 may be formed in a circular shape, so that the first connection region 120 is adapted to the electrode core 500 in shape, thereby increasing the connection area between the first connection region 120 and the electrode core 500.

In some embodiments of this application, the second current collector plate 100 is an integrally formed member. That is, the entire second current collector plate 100 is manufactured by using a unibody process, thereby reducing manufacturing difficulty of the second current collector plate 100, improving manufacturing efficiency, ensuring connection strength and connection quality between the middle portion 122, the first connection portion 121, the second connection portion 131, and the connection member 140, making the structure of the second current collector plate 100 stable, and electrically connecting the electrode core 500 to the bottom cover 300 by using the second current collector plate 100.

It should be noted that in a process of producing the second current collector plate 100, the second current collector plate 100 may be cut, and after cutting is completed, the connection member 140 may be further bent or the like, to form structures such as the middle portion 122, the first connection portion 121, the second connection portion 131, and the connection member 140 on the second current collector plate 100.

In some embodiments, with reference to FIG. 25 and FIG. 26, the first connection region 120 includes the middle portion 122 and the plurality of first connection portions 121. The middle portion 122 is formed into a circular aluminum plate or circular copper plate. The first connection portion 121 is formed into a fan-shaped aluminum plate or fan-shaped copper plate. The plurality of first connection portions 121 surround a periphery of the middle portion 122 and are separately connected to the middle portion 122, and the plurality of first connection portions 121 are spaced apart. A connection member 140 formed into a rectangular aluminum plate or rectangular copper plate is arranged between two adjacent first connection portions 121, and in the circumferential direction of the first connection region 120, the connection member 140 and the first connection portion 121 are spaced apart. A first end of the connection member 140 that is in the radial direction of the first connection region 120 is connected to the middle portion 122.

As shown in FIG. 25 and FIG. 26, the second connection region 130 includes a plurality of second connection portions 131, and the second connection portion 131 is formed into an arc-shaped aluminum plate or arc-shaped copper plate. The plurality of second connection portions 131 surround a periphery of the first connection region 120, and the plurality of second connection portions 131 are spaced from each other. A second end of the connection member 140 that is in the radial direction of the first connection region 120 is connected to a radial middle portion of the second connection portion 131. In addition, the connection member 140 obliquely extends relative to the first connection region 120, so that the first connection region 120 and the second connection region 130 are spaced apart in the height direction of the battery cell 1000.

In a specific example, when the second current collector plate 100 is separately connected to the electrode core 500 and the bottom cover 300, the first connection region 120 is first connected to the electrode core 500. Because there is the height difference between the first connection region 120 and the second connection region 130 in the height direction of the battery cell 1000, the bottom cover 300 can effectively contact and fit with the second connection region 130 in the process of mounting the bottom cover 300. In addition, in a process of connecting the bottom cover 300 to the second connection region 130, if there is the welding position protruding toward the electrode core 500 on the bottom cover 300, the welding position drives the corresponding second connection portion 131 to move toward the electrode core 500, and the second connection portion 131 drives the second end of the connection member 140 to rotate toward the electrode core 500 around the first end or drives the second end of the connection member 140 to bend toward the electrode core 500, so that the bottom cover 300 drives the connection member 140 to move and/or deform relative to the first connection region 120, thereby changing the height of the second current collector plate 100, enabling the second current collector plate 100 to be effectively connected to the bottom cover 300, ensuring conformity of the opposite contact surfaces of the second current collector plate 100 and the bottom cover 300, and reducing the possibility of poor welding.

In some embodiments of this application, as shown in FIG. 25 and FIG. 26, in a circumferential direction of the middle portion 122, the plurality of first connection portions 121 and the plurality of connection members 140 are alternately arranged. Herein, one connection member 140 is arranged between two adjacent first connection portions 121, and correspondingly, one first connection portion 121 is arranged between two adjacent connection members 140, to properly use space of the second current collector plate 100, so that the plurality of first connection portions 121 and the plurality of connection members 140 can be simultaneously arranged on the same second current collector plate 100, thereby increasing the current flow area of the second current collector plate 100 by using the plurality of first connection portions 121, and ensuring that the second connection portion 131 can be connected to the middle portion 122 by using the connection members 140.

In some examples, as shown in FIG. 25 and FIG. 26, the plurality of first connection portions 121 are spaced apart in the circumferential direction of the second current collector plate 100, and the connection member 140 is arranged between two adjacent first connection portions 121, so that the plurality of first connection portions 121 and the plurality of connection members 140 can be alternately arranged in the circumferential direction of the middle portion 122, thereby simultaneously disposing the plurality of first connection portions 121 and the plurality of connection members 140 on the second current collector plate 100.

Optionally, as shown in FIG. 25 and FIG. 26, the connection members 140 and the first connection portions 121 are spaced apart in the circumferential direction of the second current collector plate 100 to prevent the first connection portions 121 from hindering deformation and/or movement of the connection members 140, that is, ensure that the connection members 140 can effectively move and/or deform relative to the first connection region 120, to change the height difference between the first connection region 120 and the second connection region 130, thereby eliminating poor welding impact caused by the manufacturing error.

Optionally, the second current collector plate 100 is a circular second current collector plate, so that a shape of the second current collector plate 100 can be adapted to shapes of the electrode core 500 and the bottom cover 300, to reduce connection difficulty between the second current collector plate 100 and both of the electrode core 500 and the bottom cover 300, and ensure connection quality.

That the second current collector plate 100 is provided as the circular second current collector plate will be understood as follows: On the first plane, an orthographic projection of an outer peripheral wall of the second current collector plate 100 is located on a circle, and the first plane is a plane perpendicular to a thickness direction of the second current collector plate 100.

Optionally, a range of a circumferential distance between the connection member 140 and the first connection portion 121 is 0.5 mm to 2 mm. It will be understood herein that, in a circumferential direction of the circular second current collector plate 100, a range of the distance between the connection member 140 and the first connection portion 121 is 0.5 mm to 2 mm, to space the connection member 140 from the first connection portion 121, and ensure that the connection member 140 can effectively move and/or deform relative to the first connection region 120.

In some embodiments of this application, as shown in FIG. 25 and FIG. 26, a spacing between opposite sidewalls of each of the first connection portions 121 gradually increases in a direction facing away from the middle portion 122. In this way, the area of the first connection portion 121 increases, thereby ensuring a sufficient welding area between the first connection portion 121 and the second tab 502 of the electrode core 500. Therefore, it is ensured that the second current collector plate 100 has a large current flow area, insufficient current flow of the electrode core 500 that is caused by a small current flow area of the second current collector plate 100 is avoided, a serious heat generation problem of the electrode core 500 is avoided, and the service life of the electrode core 500 is prolonged and use safety of the electrode core 500 is improved.

In some examples, the first connection portion 121 may be formed into a sector shape in FIG. 25 and FIG. 26. The sector shape may enable the spacing between the opposite sidewalls of the first connection portion 121 to gradually increase in the direction facing away from the middle portion 122, thereby increasing the area of the first connection portion 121.

Certainly, in some other examples, the first connection portion 121 may alternatively be formed in a triangle shape, a rectangle shape, a circular shape, or the like. This is not limited in this application.

In some embodiments of this application, as shown in FIG. 25 and FIG. 26, a same second connection portion 131 is arranged on radial outer sides of any two adjacent first connection portions 121 in a circumferential direction of the middle portion 122. The radial outer side of the first connection portion 121 herein will be understood as a radial side of the first connection portion 121 that is away from the middle portion 122. Therefore, it will be understood herein that the second connection portion 131 is arranged on the radial side of the first connection portion 121 that is away from the middle portion 122, and second connection portions 131 arranged on radial outer sides of two adjacent first connection portions 121 are a same second connection portion 131. In a process of arranging the first connection portion 121 and the connection member 140, the connection member 140 is mainly arranged between two adjacent first connection portions 121. Therefore, the same second connection portion 131 is arranged on the radial outer sides of the two adjacent first connection portions 121, to ensure that the second connection portion 131 can be connected to the connection member 140 located between the two adjacent first connection portions 121, thereby ensuring that the connection member 140 can effectively drive the second connection portion 131 to move, to change a height difference between the first connection region 120 and the second connection region 130.

In addition, through the foregoing setting, the connection member 140 can be connected to the radial middle portion of the second connection portion 131, thereby further ensuring that the connection member 140 can effectively drive the second connection portion 131 to move when the connection member 140 moves or deforms, that is, ensuring that after a position of the second connection portion 131 changes under an external force, the second connection portion 131 can effectively drive the connection member 140 to move and/or deform, to change the height difference between the first connection region 120 and the second connection region 130.

In addition, the second connection portion 131 is arranged on the radial outer side of the first connection portion 121, to ensure enough space for arranging the second connection portion 131, so as to help increase an area of the second connection portion 131, thereby increasing a welding area between the second connection portion 131 and the bottom cover 300, and implementing a fixed connection between the second connection portion 131 and the bottom cover 300.

Certainly, in some other examples, the second connection portion 131 may be alternatively arranged between two adjacent first connection portions 121 (not shown in the example diagram). This is not specifically limited in this application.

In some embodiments of this application, with reference to FIG. 25 and FIG. 26, a stop protrusion 1313 is arranged on at least one second connection portion 131. The stop protrusion 1313 extends toward the first connection portion 121. The stop protrusion 1313 is located on the radial outer side of the first connection portion 121. The stop protrusion 1313 is located on a radial outer side of the second tab 502 of the electrode core 500. The radial outer side herein also refers to a radial side of the first connection portion 121 that is away from the middle portion 122. The stop protrusion 1313 may, on the one hand, reinforce the second connection portion 131, that is, improve structural strength of the second connection portion 131, to avoid deformation when the second connection portion 131 is welded to the bottom cover 300, thereby ensuring that the second connection portion 131 can be stably connected to the bottom cover 300, and may, on the other hand, limit a position of the second tab 502 by using the second connection portion 131, so that the second tab 502 can be stably arranged on the electrode core 500, thereby preventing the electrode core 500 from being failed because a weld seam is pulled by a loose second tab 502 in a practical operating condition.

In some examples, as shown in FIG. 25 and FIG. 26, a stop protrusion 1313 is arranged on each second connection portion 131, so that a plurality of stop protrusions 1313 can cooperate to limit a position of the second tab 502 while ensuring that structural strength of each second connection portion 131 can be strengthened, thereby further ensuring that the second tab 502 can be stably arranged on the electrode core 500.

In addition, the plurality of stop protrusions 1313 may further cooperate to protect the second tab 502, to prolong a service life of the second tab 502, that is, prolong a service life of the electrode core 500.

Optionally, an extension length of the stop protrusion 1313 toward the first connection portion 121 is greater than or equal to an exposure height of the second tab 502, to ensure that the stop protrusion 1313 can effectively protect the second tab 502 and limit the position of the second tab 502.

In a specific example, the exposure height of the second tab 502 ranges from 0.5 mm to 2 mm. That is, the extension length of the stop protrusion 1313 toward the first connection portion 121 is greater than 0.5 mm.

Optionally, as shown in FIG. 25 and FIG. 26, the stop protrusion 1313 is defined by bending and deforming a part of the second connection portion 131. That is, in a process of manufacturing the second connection portion 131, a partial structure of the second connection portion 131 bends and deforms to form the stop protrusion 1313. In this way, there is no need to separately connect a structural member to the second connection portion 131 to form the stop protrusion 1313, thereby reducing manufacturing difficulty of the stop protrusion 1313, that is, reducing manufacturing difficulty of the second connection portion 131, and further improving position stability of the stop protrusion 1313.

Optionally, as shown in FIG. 25 and FIG. 26, a reinforcing portion 1311 is arranged on a periphery of the stop protrusion 1313. The reinforcing portion 1311 is configured to improve structural strength of the stop protrusion 1313 and the second connection portion 131, to avoid deformation when the second connection portion 131 is connected to the bottom cover 300, and further ensure that the stop protrusion 1313 can effectively protect the second tab 502 and limit the position of the second tab 502.

Optionally, as shown in FIG. 25 and FIG. 26, a joint close to the second tab 502 between the stop protrusion 1313 and the reinforcing portion 1311 is arc-shaped for transition. While effectively protecting the second tab 502 and limiting the position of the second tab 502 by using the stop protrusion 1313, stress concentration at the joint between the stop protrusion 1313 and the reinforcing portion 1311 can be avoided, and damage to the second tab 502 caused when the stop protrusion 1313 collides with the second tab 502 can be further avoided, thereby ensuring that the stop protrusion 1313 can effectively protect the second tab 502 to effectively limit the position of the second tab 502.

In some embodiments of this application, a plurality of second connection portions 131 are arranged and spaced from each other in a circumferential direction of the first connection region 120, to properly use circumferential space of the first connection region 120, thereby helping increase an area of the second connection portion 131, and further increase a welding area between the second connection portion 131 and an external structural member, to implement a stable connection of the second current collector plate 100.

As shown in FIG. 26, a minimum distance G3 between two adjacent second connection portions 131 satisfies the following condition: 1 mm≤G3≤πR1/n2. The second current collector plate 100 is a circular second current collector plate, R1 is a radius of the circular second current collector plate, π is pi, π≈3.14, and n2 is a quantity of regions between the plurality of second connection portions 131.

That is, the two adjacent second connection portions 131 are spaced from each other, and a distance between the two adjacent second connection portions 131 needs to satisfy a specific condition. In this way, while reducing molding difficulty of the second connection portion 131, it can be further ensured that the second connection portion 131 has a sufficient area, thereby ensuring that the second connection portion 131 and the bottom cover 300 have a sufficient welding area. It should be further noted that the foregoing limits the minimum distance G3 between the two adjacent second connection portions 131. It will be understood herein that there are a plurality of distances between the two adjacent second connection portions 131, and the plurality of distances may be equal or unequal. In some embodiments, when the plurality of distances between the two adjacent second connection portions 131 are different, the minimum distance between the two adjacent second connection portions 131 needs to satisfy the foregoing condition, to ensure that a relative position between the two adjacent second connection portions 131 can change under an external force.

It should be noted that, because the two adjacent second connection portions 131 are spaced from each other, a spacing region is formed between the two adjacent second connection portions 131. Therefore, the foregoing n2 will be understood as a quantity of spacing regions.

In some examples, a radius R1 of the circular second current collector plate is equal to 10 mm to 100 mm, that is, the radius of the second current collector plate 100 is between 10 mm and 100 mm, to ensure that a size of the second current collector plate 100 can be adapted to both the electrode core 500 and the bottom cover 300, so that the second current collector plate 100 can be used to implement an electrical connection between the electrode core 500 and the bottom cover 300, and ensure that the second current collector plate 100 has sufficient welding areas with the electrode core 500 and the bottom cover 300.

Certainly, in some other examples, the radius R1 of the second current collector plate 100 is not limited to 10 mm to 100 mm. A person skilled in the art may limit the radius of the second current collector plate 100 based on practical areas of the electrode core 500 and the bottom cover 300, to ensure the sufficient welding areas between the second current collector plate 100 and both of the electrode core 500 and the bottom cover 300.

It should be further noted that, when the radius of the second current collector plate 100 changes, the distance G3 between two adjacent second connection portions 131 also changes correspondingly.

Optionally, as shown in FIG. 26, a radius of the first connection region 120 is r, and R1≥r. That is, the radius of the first connection region 120 is less than or equal to the radius of the second current collector plate 100. In some embodiments, when the radius of the first connection region 120 is less than the radius of the second current collector plate 100, space may be provided for arranging the second connection region 130, to ensure that the second connection region 130 can be arranged on a radial outer side of the first connection region 120, so as to ensure areas of the first connection portion 121 and the second connection portion 131. When the radius of the first connection region 120 is equal to the radius of the second current collector plate 100, it can be ensured that a welding area between the first connection region 120 and the electrode core 500 reaches a maximum value, thereby reducing impedance of the electrode core 500, satisfying that the electrode core 500 carries a relatively large current flow capability, and improving an overall current flow capability of the second current collector plate 100.

Optionally, as shown in FIG. 26, a radius of the middle portion 122 is r1, and 5 mm<r1<½r. It should be noted that the radius of the middle portion 122 herein will also be understood as a radial dimension of the middle portion 122 when the middle portion 122 is formed into the circular support plate. Because the radius of the first connection region 120 is a fixed value, a relationship between the radius r1 of the middle portion 122 and r is set, to ensure that both the first connection region 120 and the middle portion 122 have specific connection areas, thereby fixedly connecting the second current collector plate 100 to the electrode core 500, and ensuring that the second current collector plate 100 has a large current flow area.

In some embodiments of this application, as shown in FIG. 26, a radial width of the second connection portion 131 is W1, 1 mm≤W1≤½R1, and R1 is a radius of the second current collector plate 100. It should be noted that the second current collector plate 100 is a circular second current collector, the first connection region 120 is in a circular shape, and the second connection portion 131 is arranged on a radial outer side of the first connection region 120. Therefore, the foregoing radial width of the second connection portion 131 will be understood as a width by which the second connection portion 131 extends in the radial direction of the second current collector plate 100.

In some examples, because the second connection portion 131 is arranged on the radial outer side of the first connection portion 121, and the radius of the second current collector plate 100 is fixed, the foregoing arrangement ensures that the welding area of the second connection portion 131 can satisfy a minimum welding requirement, and ensures that the first connection portion 121 has a sufficient welding area, thereby electrically connecting the electrode core 500 to the bottom cover 300 by using the second current collector plate 100.

In some specific examples, as shown in FIG. 26, the second connection portion 131 is arranged on the radial outer side of the first connection region 120 and simultaneously extends in the circumferential direction and the radial direction of the second current collector plate 100, so that the second connection portion 131 forms an approximate rectangular shape as shown in FIG. 26.

Certainly, in some other examples, the shape of the second connection portion 131 may alternatively be another shape such as a triangle or a circle. This is not specifically limited in this application.

In some embodiments of this application, as shown in FIG. 27, the second current collector plate 100 is a circular second current collector. The second current collector plate 100 further includes a continuous portion 150, and the continuous portion 150 is connected between two adjacent second connection portions 131. That is, the continuous portion 150 is arranged between two adjacent second connection portions 131, one end of the continuous portion 150 is connected to one of the two adjacent second connection portions 131, and the other end of the continuous portion 150 is connected to the other of the two adjacent second connection portions 131, so that structural strength of the second connection region 130 is improved by using the continuous portion 150, and service life of the second connection region 130 is prolonged.

In some examples, the continuous portion 150 is integrally formed with the second connection portion 131. This may further increase connection strength between the continuous portion 150 and the second connection portion 131 while reducing manufacturing difficulty of the second current collector plate 100, so that a structure of the second connection region 130 is stable, and a fixed connection between the second connection region 130 and the bottom cover 300 is implemented.

In some embodiments, the second current collector plate 100 is provided as a circular second current collector plate, so that a shape of the second current collector plate 100 can be adapted to shapes of the electrode core 500 and the bottom cover 300, to reduce connection difficulty between the second current collector plate 100 and both of the electrode core 500 and the bottom cover 300, and ensure connection quality.

Optionally, as shown in FIG. 27, a radial width of the second connection portion 131 is W1, a radial width of the continuous portion 150 is W4, 0.1 mm≤W4<W1. The radial width of the second connection portion 131 herein refers to an extension length of the second connection portion 131 in a radial direction of the circular second current collector plate. The radial width of the continuous portion 150 refers to an extension length of the continuous portion 150 in the radial direction of the circular second current collector plate. That is, both the continuous portion 150 and the second connection portion 131 have a specific width in the radial direction of the second current collector plate 100. However, the radial width of the continuous portion 150 is less than the radial width of the second connection portion 131. While ensuring that structural strength of the second connection region 130 is increased by using the continuous portion 150, the continuous portion 150 can be further prevented from impeding movement of the second connection portion 131.

In some examples, the radial width of the continuous portion 150 is set to be less than the radial width of the second connection portion 131, to ensure that the continuous portion 150 can deform synchronously when the connection member 140 drives the second connection portion 131 to move, thereby ensuring that the second connection portion 131 can move normally, to avoid a welding gap between the second connection portion 131 and the bottom cover 300.

Optionally, the continuous portion 150 is a connection plate, and a plate-like structure may enable the continuous portion 150 to deform under an external force.

In a specific example, the continuous portion 150 forms a rectangular aluminum plate or a rectangular copper plate, to ensure that the continuous portion 150 can deform synchronously when the connection member 140 drives the second connection portion 131 to move.

It should be noted that a thickness of the continuous portion 150 is not specifically limited in this application, provided that the continuous portion 150 can deform synchronously in a process in which the connection member 140 drives the second connection portion 131 to move.

The deformation described herein will be understood as that a radial end of the continuous portion 150 is rotated or bent toward the electrode core 500 relative to another radial end of the continuous portion 150.

Optionally, as shown in FIG. 27, the continuous portion 150 is arranged close to a middle, an inner side surface, or an outer side surface of the second connection portion 131, to form a limiting port 132 between two adjacent second connection portions 131. The limiting port 132 is in a limiting fit with a limiting bump 310 on the bottom cover 300. The inner side surface of the second connection portion 131 herein refers to a side surface of the second connection portion 131 that is close to the first connection region 120. The outer side surface of the second connection portion 131 refers to a side surface of the second connection portion 131 that is away from the first connection region 120. That is, the limiting bump 310 is arranged on the bottom cover 300, the continuous portion 150 is arranged close to the inner side surface or the outer side surface of the second connection portion 131, and the limiting port 132 that is in a limiting fit with the limiting bump 310 may be formed between two adjacent second connection portions 131. In some embodiments, after the limiting bump 310 is in a limiting fit with the limiting port 132, a locating fit between the second connection region 130 and the bottom cover 300 can be implemented, to avoid that a relative position between the second connection region 130 and the bottom cover 300 changes in a welding process, thereby reducing difficulty in welding the second connection region 130 and the bottom cover 300, and improving welding efficiency.

In addition, in this application, the continuous portion 150 is arranged close to the inner side surface or the outer side surface of the second connection portion 131, so that the limiting port 132 may be formed between two adjacent second connection portions 131. In this way, the limiting port 132 does not need to be arranged separately in the second connection region 130, so as to reduce molding difficulty of the limiting port 132. In addition, it can be avoided that a welding area between the second connection portion 131 and the bottom cover 300 is reduced because the limiting port 132 is arranged, thereby ensuring that the second connection portion 131 and the bottom cover 300 have a sufficient welding area.

Optionally, as shown in FIG. 23, a radial width of the second connection portion 131 is W1, and the radial width W3 of the limiting port 132 satisfies the following condition: 0.5 mm≤W3<W1. The radial width of the limiting port 132 herein refers to an extension length of the limiting port 132 in the radial direction of the circular second current collector plate. That is, the limiting port 132 has a specific width in the radial direction of the second current collector plate 100, to form the limiting port 132, so as to facilitate a locating fit between the second connection portion 131 and the bottom cover 300 by using the limiting port 132. In addition, the radial width of the limiting port 132 is set to be less than the radial width of the second connection portion 131, to ensure that the continuous portion 150 can be arranged between two adjacent second connection portions 131, so that structural strength of the second connection region 130 can be improved by using the continuous portion 150.

Optionally, as shown in FIG. 23 and FIG. 27, there are a plurality of limiting ports 132. The plurality of limiting ports 132 and the plurality of first connection portions 121 are oppositely arranged in one-to-one correspondence in the radial direction of the second connection portion 131. In some embodiments, the plurality of limiting ports 132 are provided to ensure effective position fit between the second connection portion 131 and the bottom cover 300. The plurality of limiting ports 132 and the plurality of first connection portions 121 are oppositely arranged in one-to-one correspondence, so that the limiting port 132 can be arranged away from the connection member 140, thereby preventing the limiting port 132 from affecting fixed connection between the second connection portion 131 and the middle portion 122, that is, ensuring that the limiting port 132 can effectively implement position fit between the second connection portion 131 and the bottom cover 300, ensuring that the second connection portion 131 and the middle portion 122 can be fixedly connected effectively, and ensuring position stability and structural strength of the second current collector plate 100.

It should be noted that the figure shows a case in which an orthographic projection of the limiting port 132 on the first plane is formed into a rectangle, and the first plane is perpendicular to a thickness direction of the second current collector plate 100. In some other examples, the orthographic projection of the limiting port 132 on the first plane is formed into a square, a triangle, a sector, or the like.

In some embodiments of this application, an orthographic projection of an outer peripheral wall of the second current collector plate 100 on the first projection plane is located on the first ring, and the first projection plane is perpendicular to a thickness direction of the second current collector plate 100. The thickness direction of the second current collector plate 100 herein will also be understood as the height direction of the battery cell 1000. Therefore, the first projection plane will also be understood as a plane perpendicular to the height direction of the battery cell 1000. That is, an orthographic projection of the outer peripheral wall of the second current collector plate 100 on the plane perpendicular to the height direction of the battery cell 1000 is located on a same circle, so that a shape of the second current collector plate 100 is similar to a circular shape, that is, the second current collector plate 100 is formed into an approximately circular second current collector plate. The circular second current collector plate 100 can make a shape of the second current collector plate 100 adapt to shapes of the electrode core 500 and the bottom cover 300, thereby reducing difficulty in connecting the second current collector plate 100 to the electrode core 500 and the bottom cover 300 and increasing a connection area to ensure connection quality.

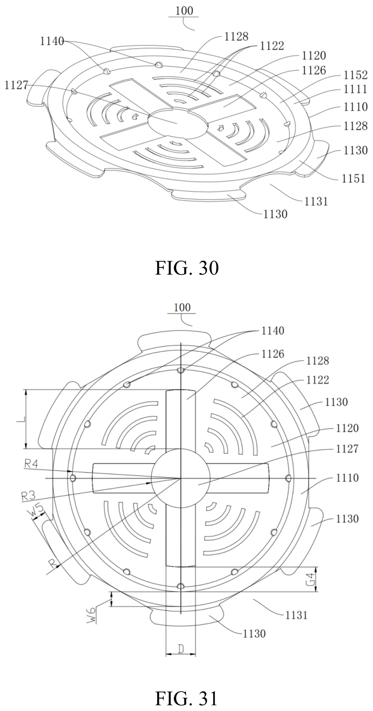

With reference to FIG. 30 to FIG. 43, the second current collector plate 100 according to this embodiment of this application includes a connection portion 1110, a first support member 1120, and a second support member 1130.

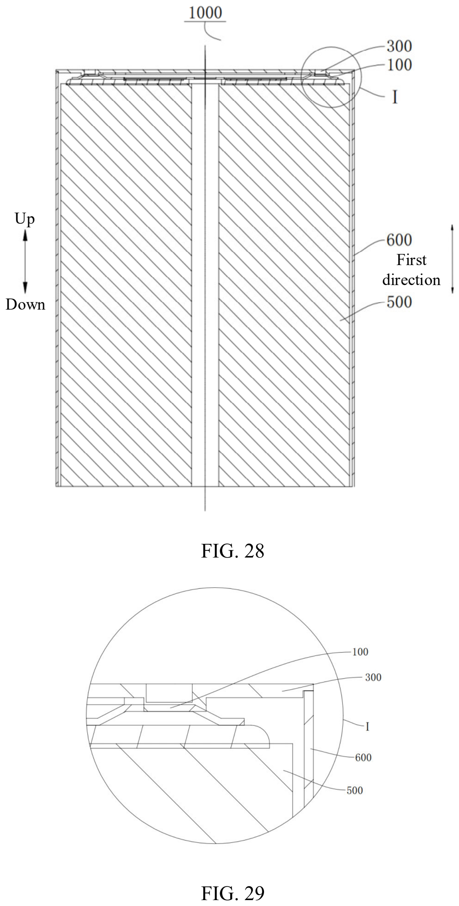

In some embodiments, with reference to FIG. 28 to FIG. 30, a first surface 1111 of the connection portion 1110 is electrically connected to the bottom cover 300. It will be understood herein that the connection portion 1110 has the first surface 1111, and the connection portion 1110 is connected to the bottom cover 300 by using the first surface 1111, to implement an electrical connection between the connection portion 1110 and the bottom cover 300.

Correspondingly, the connection portion 1110 further has a second surface, and the second surface is arranged opposite to the first surface 1111. With reference to FIG. 30 to FIG. 43, the first support member 1120 and the second support member 1130 are located on a side of the connection portion 1110 that is away from the first surface 1111, the first support member 1120 is connected to a radial inner side of the connection portion 1110, the first support member 1120 is electrically connected to the second tab 502, the second support member 1130 is connected to a radial outer side of the connection portion 1110, the second support member 1130 supports the electrode core 500, and the connection portion 1110 is constructed to be movable and/or deformable relative to the first support member 1120.

In some embodiments, both the first support member 1120 and the second support member 1130 are arranged on the side of the connection portion 1110 that is away from the first surface 1111, so that the first support member 1120 and the second support member 1130 have a height difference from the first surface 1111 of the connection portion 1110, that is, the second current collector plate 100 has a height. In this way, the first support member 1120 can be electrically connected to the electrode core 500 and the second support member 1130 can effectively support the electrode core 500.

Both the first support member 1120 and the second support member 1130 are arranged to be connected to a radial structure of the connection portion 1110. On the one hand, a fixed connection between the first support member 1120 and the connection portion 1110 can be implemented. In this way, after the connection portion 1110 is connected to the bottom cover 300 and the first support member 1120 is connected to the electrode core 500, an electrical connection between the bottom cover 300 and the electrode core 500 can be implemented. That is, the second current collector plate 100 is used to implement an electrical connection between the bottom cover 300 and the electrode core 500. On the other hand, radial space of the connection portion 1110 can be properly used, to increase areas of the first support member 1120, the second support member 1130, and the connection portion 1110, thereby increasing a connection area between the first support member 1120 and the electrode core 500 and a connection area between the connection portion 1110 to the bottom cover 300, so that the second current collector plate 100 can be stably connected to the electrode core 500 and the bottom cover 300, thereby implementing an electrical connection between the electrode core 500 and the bottom cover 300, and ensuring connection quality.

The connection portion 1110 may be set to be movable and/or deformable relative to the first support member 1120, so that a height of the connection portion 1110 is adjustable, that is, a height of the second current collector plate 100 is adjustable. In this way, when the second current collector plate 100 is used to connect the electrode core 500 to the bottom cover 300, the height of the second current collector plate 100 can be adaptively adjusted, to absorb an error generated in a height direction in a manufacturing process, thereby improving connection quality of the electrode core 500 and the bottom cover 300 and reducing a possibility of poor welding.

It should be noted that the movement and/or deformation herein will be understood as that the connection portion 1110 is constructed to be movable relative to the first support member 1120, or the connection portion 1110 is constructed to be deformable relative to the first support member 1120, or the connection portion 1110 is constructed to be movable relative to the first support member 1120 and deformable relative to the first support member 1120, to change the height of the connection portion 1110, that is, make the height of the second current collector plate 100 adjustable, so that the second current collector plate 100 can be used to implement an electrical connection between the electrode core 500 and the bottom cover 300.

It will be understood from the foregoing structure that, in the second current collector plate 100 in this embodiment of this application, the connection portion 1110 may be arranged to be movable and/or deformable relative to the first support member 1120. In this way, in a process of using the second current collector plate 100, when there is a manufacturing error in a height direction of the second current collector plate 100 or flatness of a connection surface on which the bottom cover 300 fits with the connection portion 1110 is high, the connection portion 1110 can be adapted to move and/or deform relative to the first support member 1120 according to a position and flatness of the bottom cover 300, to ensure that the connection portion 1110 can be effectively connected to the bottom cover 300, thereby improving connection strength of the connection portion 1110 and the bottom cover 300, ensuring conformity of opposite contact surfaces of the connection portion 1110 and the bottom cover 300, increasing a connection area, reducing a possibility of poor welding, and improving a yield of the battery cell 1000.

The foregoing movement will be understood as that the connection portion 1110 moves toward the first support member 1120, and the deformation will be understood as that the connection portion 1110 is bent to change a height of the connection portion 1110.

It will also be understood herein that, when the second current collector plate 100 in this application is connected to the bottom cover 300, the second current collector plate 100 may absorb an error in a height direction by using the connection portion 1110, so that the second current collector plate 100 can be effectively arranged between the bottom cover 300 and the electrode core 500, and an assembly gap between the second current collector plate 100 and the bottom cover 300 is avoided. Therefore, impact caused by an assembly error or a manufacturing error is eliminated, connection strength of the second current collector plate 100 and the bottom cover 300 is improved, and conformity of opposite contact surfaces of the second current collector plate 100 and the bottom cover 300 is ensured, to reduce a possibility of poor welding, improve manufacturing accuracy of the battery cell 1000, and ensure a yield of the battery cell 1000. It should be noted that the second current collector plate 100 is used as a conductive element, is usually made of a metal conductive material of copper, aluminum, or iron, and naturally has characteristics of elasticity and deformation. The first support member 1120, the second support member 1130, and the connection portion 1110 are arranged to have a height difference, so that the connection portion 1110 can move and/or deform relative to the first support member 1120 under an external force. That is, when the bottom cover 300 is mounted, the bottom cover 300 presses and connects to the connection portion 1110 of the second current collector plate 100, so that the connection portion 1110 can move and/or deform.

In a specific example, because the height of the connection portion 1110 may be changed, when the bottom cover 300 is connected to the electrode core 500 by using the second current collector plate 100, the first support member 1120 may be first connected to the electrode core 500. Because there is a height difference between the first support member 1120 and the connection portion 1110 in the height direction of the battery cell 1000, after the first support member 1120 is connected to the electrode core 500, in the process of mounting the bottom cover 300, the connection portion 1110 may be arranged close to the bottom cover 300, to reduce connection difficulty between the connection portion 1110 and the bottom cover 300. In addition, because the height of the connection portion 1110 is adjustable, when the connection portion 1110 is connected to the bottom cover 300 in this case, it can be ensured that the position of the connection portion 1110 can change based on a position, a shape, a surface structure, and the like of the bottom cover 300, so that the connection portion 1110 can be effectively connected to the bottom cover 300, to ensure connection strength and a connection area, thereby connecting the bottom cover 300 to the electrode core 500 by using the second current collector plate 100, reducing the possibility of poor welding between the second current collector plate 100 and the bottom cover 300, and ensuring the yield of the battery cell 1000.

The connection between the first support member 1120 and the electrode core 500 and the connection between the connection portion 1110 and the bottom cover 300 both may be implemented through welding, bonding, or the like.

In addition, the connection portion 1110 is configured to be movable and/or deformable relative to the first support member 1120. To ensure stability of the connection portion 1110 during movement and/or deformation, in this application, the second support member 1130 supporting the electrode core 500 is connected to a radial outer side of the connection portion 1110, and the second support member 1130 is in a support fit with the electrode core 500, to support the connection portion 1110 by using the second support member 1130, thereby improving stability of the connection portion 1110 during movement and/or deformation, so that the connection portion 1110 can effectively move and/or deform, to change the height of the connection portion 1110, that is, to make the height of the second current collector plate 100 adjustable, so that an electrical connection between the electrode core 500 and the bottom cover 300 is implemented by using the second current collector plate 100.

In a specific example, when the second current collector plate 100 is used to connect the bottom cover 300 and the electrode core 500, after the first support member 1120 and the electrode core 500 are connected, in a process of mounting the bottom cover 300, because the connection portion 1110 is configured to be movable and/or deformable relative to the first support member 1120, when the connection portion 1110 is connected to the bottom cover 300, it can be ensured that the position of the connection portion 1110 can change according to a position, a shape, a surface structure, and the like of the bottom cover 300. In addition, when the position of the connection portion 1110 changes according to the position, the shape, the surface structure, and the like of the bottom cover 300, the connection portion 1110 may drive the second support member 1130 to slide in the radial direction of the electrode core 500, so that the connection portion 1110 moves and/or deforms stably, and the connection portion 1110 can be effectively connected to the bottom cover 300, thereby ensuring connection strength and a connection area. In addition, the second current collector plate 100 is used to connect the bottom cover 300 to the electrode core 500, thereby reducing a possibility of poor welding between the second current collector plate 100 and the bottom cover 300.

It should be further emphasized that, in this application, a relative position between the first support member 1120 and the connection portion 1110 is inventively arranged, so that the second current collector plate 100 has a specific height. In this way, an electrical connection between the electrode core 500 and the bottom cover 300 can be implemented without bending the second current collector plate 100, thereby reducing a bending process, improving assembly efficiency, and avoiding stress concentration caused by bending the second current collector plate 100, so as to avoid breaking of the second current collector plate 100 and prolong service life of the second current collector plate 100.

In addition, without a need to bend the second current collector plate 100, occupied space of the second current collector plate 100 in the height direction can be further reduced. In this way, when the second current collector plate 100 is used to connect the electrode core 500 to the bottom cover 300, a height of reserved space between the electrode core 500 and the bottom cover 300 may be reduced, that is, a height of the electrode core 500 may be increased, thereby improving a capacity of the electrode core 500, and further improving capacity of the battery cell 1000.

It will be understood from the foregoing description that, in this application, a relative position between the connection portion 1110 and the first support member 1120 is inventively arranged to implement an electrical connection between the electrode core 500 and the bottom cover 300 by using the second current collector plate 100, and there is no need to bend the structure of the second current collector plate 100, thereby improving connection efficiency, improving a capacity of the electrode core 500, prolonging a service life of the second current collector plate 100, and improving structural strength of the second current collector plate 100. In addition, it can be further ensured that the second current collector plate 100 can absorb a manufacturing error generated in a height direction in a manufacturing process, thereby reducing the possibility of poor welding.

It will be understood that, compared with the related art, the second current collector plate 100 in this application effectively absorbs an error in a height direction in a manufacturing process, and a structure of the second current collector plate 100 is stable during movement and/or deformation, so that the second current collector plate 100 can be used to implement an electrical connection between the bottom cover 300 and the electrode core 500, and reliability of the battery cell 1000 is improved.

Optionally, a material of the second current collector plate 100 may be an aluminum alloy, pure copper, nickel-plated copper, or the like, so that the second current collector plate 100 has a conductive function, so that the electrode core 500 is electrically connected to the bottom cover 300 by using the second current collector plate 100.

When the material of the second current collector plate 100 is an aluminum alloy, the second current collector plate 100 is mainly in fit connection with a positive tab of the electrode core 500. When the material of the second current collector plate 100 is pure copper or nickel-plated copper, the second current collector plate 100 is mainly in fit connection with a negative tab of the electrode core 500. That is, a person skilled in the art may select the material of the second current collector plate 100 based on an application environment of the second current collector plate 100. This is not specifically limited in this application.

Optionally, the foregoing connection may be laser welding, or may be bonding by an electrically conductive adhesive.

In the descriptions of this application, features defined by "first" and "second" may explicitly or implicitly include one or more of such features, and are used to differentially describe the features, instead of indicating a sequence or importance.

In some examples, the second current collector plate 100 is an integrally formed member. In this way, the entire second current collector plate 100 may be manufactured by using a unibody process, thereby reducing manufacturing difficulty of the second current collector plate 100, improving manufacturing efficiency, ensuring connection strength and connection quality between the first support member 1120, the second support member 1130, and the connection portion 1110, making the structure of the second current collector plate 100 stable, and electrically connecting the electrode core 500 to the bottom cover 300 by using the second current collector plate 100.

It should be noted that in a process of producing the second current collector plate 100, the second current collector plate 100 may be cut, punched, or the like, to form structures such as the first support member 1120, the second support member 1130, and the connection portion 1110 on the second current collector plate 100.

In some embodiments of this application, as shown in FIG. 30 to FIG. 43, a notch 1131 is arranged on an outer edge of the second support member 1130, and the notch 1131 extends through the second support member 1130 in a thickness direction. The outer edge of the second support member 1130 herein will be understood as a side edge of the second support member 1130 away from the connection portion 1110, to avoid that the notch 1131 affects a fixed connection between the second support member 1130 and the connection portion 1110. The notch 1131 is used to reduce an area of the second support member 1130, to reduce a contact area between the second support member 1130 and the electrode core 500. In this way, when the connection portion 1110 moves and/or deforms relative to the first support member 1120, it can be ensured that the connection portion 1110 can effectively drive the second support member 1130 to change a position relative to the electrode core 500, so that the height of the connection portion 1110 is adjustable.

That is, the notch 1131 is provided, to avoid that the second support member 1130 impedes movement and/or deformation of the connection portion 1110 relative to the first support member 1120, so that the height of the connection portion 1110 is adjustable, thereby resolving a poor welding problem caused by a manufacturing error.

In addition, a notch 1131 is provided on an outer edge of the second support member 1130, and the notch 1131 may further implement communication between two opposite sides of the second support member 1130, to ensure that gas in the electrode core 500 can flow smoothly. That is, the notch 1131 may further form an exhaust port.

Optionally, as shown in FIG. 30 to FIG. 43, a plurality of notches 1131 are provided on the outer edge of the second support member 1130, and the plurality of notches 1131 are evenly spaced from each other in a circumferential direction of the second support member 1130. The plurality of notches 1131 cooperate to ensure that the connection portion 1110 can effectively drive the second support member 1130 to change a position relative to the electrode core 500, and further ensure that gas distribution in the electrode core 500 can be more even.

Optionally, a quantity of notches 1131 ranges between 2 and 20. In this way, when a plurality of notches 1131 are arranged on the outer edge of the second support member 1130, an area of the second support member 1130 can be ensured, so that the second support member 1130 can effectively cooperate with the electrode core 500.

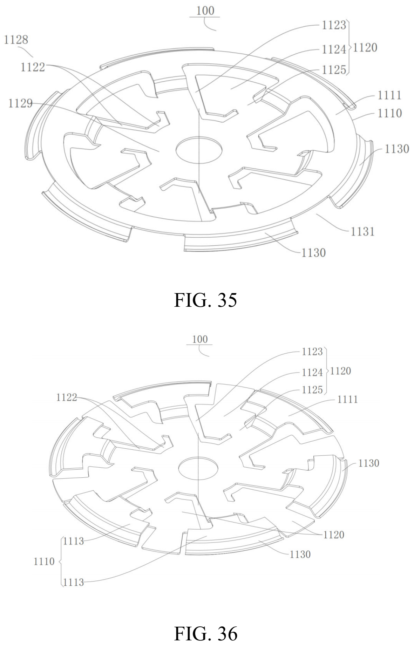

It should be noted that the notch 1131 shown in FIG. 35 is formed in a shape similar to rectangle. In some other examples, the notch 1131 may alternatively be formed in a circular shape, a triangle shape, or the like. This is not specifically limited in this application.

Optionally, as shown in FIG. 31, FIG. 34, and FIG. 37, an exhaust hole 1140 is arranged at a joint between the connection portion 1110 and the first support member 1120, and the exhaust hole 1140 is configured to further ensure that gas in the electrode core 500 can flow smoothly.

That is, in this application, exhaust is not only performed by using the notch 1131, but also the exhaust hole 1140 is separately provided. The notch 1131 cooperates with the exhaust hole 1140 to ensure that gas in the electrode core 500 can be discharged smoothly, and ensure quality of the electrode core 500.

In addition, the exhaust hole 1140 is provided at the joint between the connection portion 1110 and the first support member 1120, and a connection area between the connection portion 1110 and the first support member 1120 may be further reduced, to ensure that the connection portion 1110 can effectively move and/or deform relative to the first support member 1120, thereby changing the height of the connection portion 1110.

Optionally, as shown in FIG. 31, FIG. 34, and FIG. 37, there are a plurality of exhaust holes 1140, and the plurality of exhaust holes 1140 are arranged and spaced from each other in a circumferential direction of the first support member 1120, to further ensure even gas distribution in the electrode core 500.

Optionally, as shown in FIG. 30 to FIG. 43, the notch 1131 extends to the connection portion 1110 to separate the second support member 1130 into a plurality of spaced parts. Further, an area of the second support member 1130 is reduced, so that a contact area between the second support member 1130 and the electrode core 500 is reduced, and it is ensured that when the connection portion 1110 moves and/or deforms relative to the first support member 1120, the connection portion 1110 can effectively drive the second support member 1130 to change a position relative to the electrode core 500, so that the height of the connection portion 1110 is adjustable.

In the descriptions of this application, unless otherwise stated, "a plurality of" means two or more.

In some embodiments of this application, a value range of the radial width of the second support member 1130 is 1 mm to 10 mm.

The radial width of the second support member 1130 herein will be understood as a width by which the second support member 1130 extends in the radial direction of the circular second current collector plate when the second current collector plate 100 is formed into the circular second current collector plate. When the radial width of the second support member 1130 is less than 1 mm, structural strength of the second support member 1130 is reduced, a service life of the second support member 1130 is shortened, and a contact area between the second support member 1130 and the electrode core 500 is relatively small. In this case, the second support member 1130 cannot effectively support the connection portion 1110, and there is a risk that the second support member 1130 is inserted into the electrode core 500. Consequently, use safety of the electrode core 500 is reduced, and the second support member 1130 cannot slide relative to the electrode core 500, that is, the connection portion 1110 cannot effectively move and/or deform. When the radial width of the second support member 1130 is greater than 10 mm, manufacturing costs of the second support member 1130 are increased, and an area of the connection portion 1110 is reduced on the premise that the radius of the second current collector plate 100 is fixed.

Therefore, in this application, a value range of the radial width of the second support member 1130 is set to 1 mm to 10 mm, so that structural strength of the second support member 1130 is ensured, the second support member 1130 is prevented from being inserted into the electrode core 500, manufacturing costs of the second support member 1130 can be reduced, and an effective connection area of the connection portion 1110 is ensured.

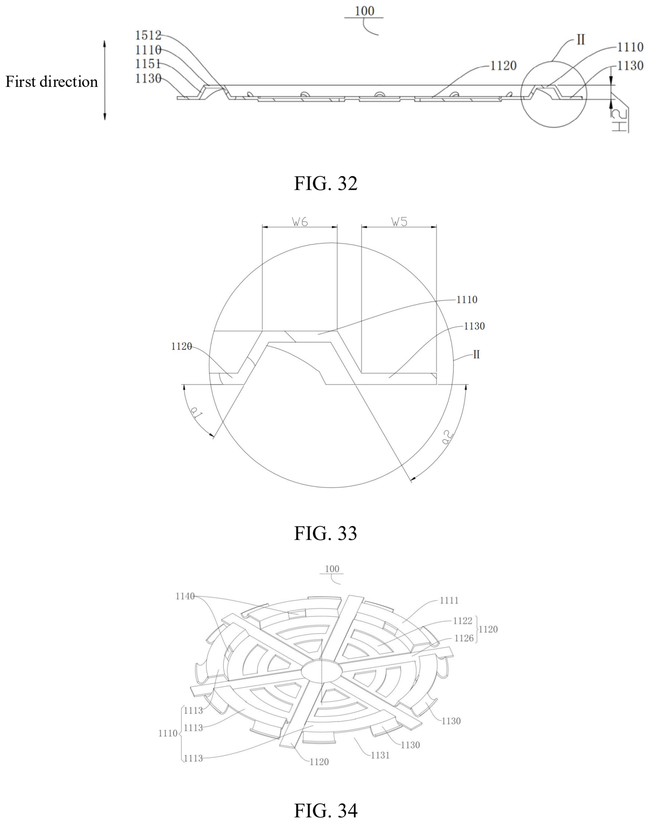

The radial width of the second support member 1130 herein will be understood as W5 shown in FIG. 31 and FIG. 33.

In a specific example, the radial width of the second support member 1130 may be 1 mm, 3 mm, 5 mm, 7 mm, or 10 mm.

In some embodiments of this application, as shown in FIG. 34, FIG. 35, and FIG. 36, a part of the second support member 1130 is formed into a bent portion bent toward the first surface 1111. That is, a part of a structure of the second support member 1130 is bent toward the first surface 1111 to form the bent portion, so that the second support member 1130 forms an arc-shaped member. While ensuring that the second support member 1130 can be effectively in a stop fit with the electrode core 500, the bent portion can further reduce a contact area between the second support member 1130 and the electrode core 500, to reduce a friction force between the second support member 1130 and the electrode core 500, thereby ensuring that the second support member 1130 can effectively slide relative to the electrode core 500 under an external force, that is, ensuring that the connection portion 1110 can effectively move and/or deform relative to the first support member 1120, to change the height of the connection portion 1110, so as to resolve a poor welding problem caused by a manufacturing error.

In addition, a part of the second support member 1130 is formed into the bent portion bent toward the first surface 1111, so that the radial width of the second support member 1130 can be further reduced, and occupied space of the second support member 1130 in the radial direction of the second current collector plate 100 can be reduced. In this way, on the premise that the radial dimension of the second current collector plate 100 is fixed, a radial dimension of the connection portion 1110 and/or a radial dimension of the first support member 1120 can be adaptively increased, that is, an area of the connection portion 1110 and/or an area of the first support member 1120 are/is increased, so that a connection area between the connection portion 1110 and the bottom cover 300 and/or a connection area between the first support member 1120 and the electrode core 500 can be increased. In this way, the second current collector plate 100 can be stably connected to the bottom cover 300 and the electrode core 500, thereby improving connection quality of the second current collector plate 100.

Certainly, in some examples, as shown in FIG. 30, FIG. 40, FIG. 41, and FIG. 43, the second support member 1130 may not be bent, so that the second support member 1130 forms a flat plate structure. In this way, it is ensured that the second support member 1130 can be in a stop fit with the electrode core 500, and a contact area between the second support member 1130 and the electrode core 500 can be increased, so that the second support member 1130 can effectively support the connection portion 1110. In addition, manufacturing difficulty of the second support member 1130 can be reduced, and manufacturing efficiency of the second support member 1130 can be improved, that is, manufacturing efficiency of the second current collector plate 100 can be improved.

In a specific example, the second support member 1130 is formed into a rectangular flat plate, to ensure that the second support member 1130 can be in a stop fit with the electrode core 500 and ensure that the second support member 1130 can slide in the radial direction of the electrode core 500 under action of the connection portion 1110.

Certainly, in some other examples, the second support member 1130 may be alternatively formed into a square flat plate, a sector flat plate, or the like. This is not specifically limited in this application.

In a specific example, the second support member 1130 is formed into a rectangular flat plate or an arc-shaped plate. When the second current collector plate 100 is used to connect the bottom cover 300 to the electrode core 500, after the first support member 1120 is connected to the electrode core 500, in a process of mounting the bottom cover 300, the bottom cover 300 drives the connection portion 1110 to move or bend relative to the first support member 1120, and in a process in which the connection portion 1110 moves or bends, the connection portion 1110 drives the second support member 1130 to slide in the radial direction of the electrode core 500, so that the connection portion 1110 can effectively move or bend, thereby ensuring that the connection portion 1110 can be effectively connected to the bottom cover 300, and improving connection strength and connection area between the connection portion 1110 and the bottom cover 300.

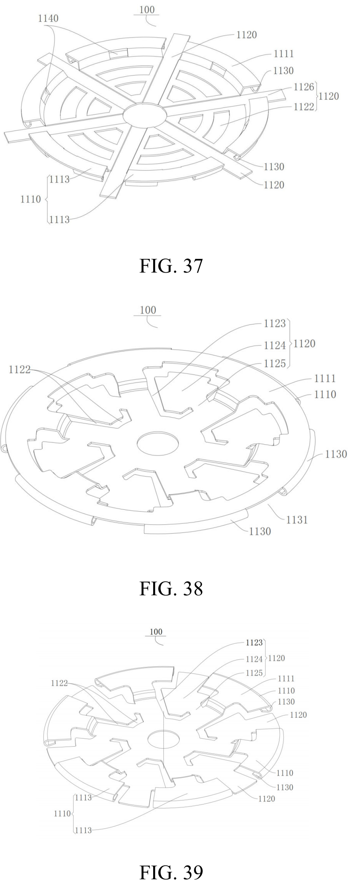

In some embodiments of this application, as shown in FIG. 37, FIG. 38, and FIG. 39, a part of the second support member 1130 is bent to be arranged opposite to the connection portion 1110. That a part of the second support member 1130 is formed into the bent portion bent toward the first surface 1111 will be understood as that an end of the second support member 1130 that is not connected to the connection portion 1110 is bent outward in the radial direction of the second current collector plate 100. That a part of the second support member 1130 is bent to be arranged opposite to the connection portion 1110 will be understood as that an end of the second support member 1130 that is not connected to the connection portion 1110 is bent inward in the radial direction of the second current collector plate 100, so that the part of the second support member 1130 is arranged opposite to the connection portion 1110, and the second support member 1130 is arranged directly below the connection portion 1110. In this way, it is ensured that the second support member 1130 can be in a stop fit with the electrode core 500, and a contact area between the second support member 1130 and the electrode core 500 can be reduced. Therefore, friction between the second support member 1130 and the electrode core 500 is reduced, and it is ensured that the second support member 1130 can effectively slide relative to the electrode core 500 under an external force.

In addition, a part of the second support member 1130 is arranged opposite to the connection portion 1110, so that space occupied by the second support member 1130 in the radial direction of the second current collector plate 100 can be minimized. Therefore, it is ensured that the connection portion 1110 and/or the first support member 1120 have/has a large radial dimension, thereby increasing a connection area between the connection portion 1110 and the bottom cover 300 and/or a connection area between the first support member 1120 and the electrode core 500.

In some embodiments of this application, as shown in FIG. 30, FIG. 35, FIG. 38, and FIG. 42, the connection portion 1110 is formed into a closed-loop shape. The closed-loop shape helps increase an area of the connection portion 1110, to increase a connection area between the connection portion 1110 and the bottom cover 300, so as to ensure stability of a connection between the connection portion 1110 and the bottom cover 300. In addition, the closed-loop shape may further increase structural strength of the connection portion 1110, and prolong a service life of the connection portion 1110.

In addition, the connection portion 1110 is arranged to form the closed-loop shape, so that the connection portion 1110 forms an integral part, thereby facilitating processing of the connection portion 1110, and reducing manufacturing difficulty of the connection portion 1110.

In addition, the connection portion 1110 is arranged to form the closed-loop shape. In a process in which the connection portion 1110 is connected to the bottom cover 300, an entire ring of the connection portion 1110 can be connected to the bottom cover 300, and a separate correction mechanism is not required, to reduce difficulty in connecting the connection portion 1110 to the bottom cover 300.

That is, in this application, the connection portion 1110 is arranged as the closed-loop shape, to enable the connection portion 1110 to have a large connection area, thereby improving structural strength of the connection portion 1110, prolonging the service life of the connection portion 1110, reducing manufacturing difficulty of the connection portion 1110, and reducing connection difficulty between the connection portion 1110 and the bottom cover 300. In a specific example, the connection portion 1110 is a ring plate.

In some embodiments of this application, as shown in FIG. 34, FIG. 36, FIG. 37, FIG. 39, FIG. 41, and FIG. 43, the connection portion 1110 includes a plurality of connection positions 1113, and the plurality of connection positions 1113 are spaced from each other in the circumferential direction of the connection portion 1110.

That is, the connection portion 1110 is not limited to forming the closed-loop shape, but the connection portion 1110 may be arranged to include a plurality of connection positions 1113, and cooperation between the plurality of connection positions 1113 may also ensure a connection area between the connection portion 1110 and the bottom cover 300, thereby implementing a fixed connection between the connection portion 1110 and the bottom cover 300.

In addition, the connection portion 1110 is arranged to include the plurality of connection positions 1113, so that it can be further ensured that the connection portion 1110 can effectively move and/or deform relative to the first support member 1120 under an external force, to change the height of the connection portion 1110, that is, change positions of the plurality of connection positions 1113 relative to the first support member 1120. In this way, even if a difference in flatness of a plurality of welding positions on the bottom cover 300 is relatively large, it can be ensured that each connection position 1113 can be welded to the bottom cover 300, and a gap between the connection position 1113 and the bottom cover 300 is avoided, that is, a gap between the second current collector plate 100 and the bottom cover 300 is avoided, and impact caused by a manufacturing error is eliminated, thereby further improving connection strength between the second current collector plate 100 and the bottom cover 300, and ensuring conformity of opposite contact surfaces of the second current collector plate 100 and the bottom cover 300, to reduce a possibility of poor welding, and ensure a yield of the battery cell 1000.

Optionally, as shown in FIG. 34, FIG. 36, FIG. 37, FIG. 39, and FIG. 40, a part of the first support member 1120 is arranged between any two adjacent connection positions 1113. It will also be understood herein that when the connection portion 1110 is arranged to include the plurality of connection positions 1113, a part of the first support member 1120 may be arranged between two adjacent connection positions 1113, to increase an area of the first support member 1120, thereby increasing a connection area between the first support member 1120 and the electrode core 500, improving connection strength between the second current collector plate 100 and the electrode core 500, and improving a current flow capability of the second current collector plate 100.

That is, in this application, the connection portion 1110 is arranged to include the plurality of connection positions 1113, and the plurality of connection positions 1113 cooperate to ensure that the second current collector plate 100 can be effectively connected to the bottom cover 300, so that the second current collector plate 100 and the electrode core 500 can have a sufficient connection area.

Optionally, a part of the first support member 1120 arranged between the two adjacent connection positions 1113 is spaced from the connection position 1113, to ensure that the connection portion 1110 can effectively move and/or deform relative to the first support member 1120, to change the height of the connection portion 1110, so as to resolve a problem of poor welding caused by a manufacturing error.

Optionally, as shown in FIG. 31 to FIG. 33, a radial width of the connection portion 1110 is W6, 1 mm≤W6≤½R1, R1 is the radius of the second current collector plate 100, and R1=10 mm~100 mm. The radial width of the connection portion 1110 herein will be understood as a width by which the connection portion 1110 extends in the radial direction of the second current collector plate 100. Through the foregoing setting, it is ensured that a connection area of the connection portion 1110 can satisfy a minimum connection requirement, and it can be further ensured that the first support member 1120 has a sufficient connection area, thereby helping implement an electrical connection between the electrode core 500 and the bottom cover 300 by using the second current collector plate 100.

It should be noted that in this application, a value range of the radius R1 of the second current collector plate 100 is set to 10 mm to 100 mm, to ensure that a size of the second current collector plate 100 can be adapted to both the electrode core 500 and the bottom cover 300, so that the second current collector plate 100 can be used to implement an electrical connection between the electrode core 500 and the bottom cover 300, and ensure that the second current collector plate 100 has sufficient connection areas with the electrode core 500 and the bottom cover 300.

Certainly, in some other examples, the radius R1 of the second current collector plate 100 is not limited to 10 mm to 100 mm. A person skilled in the art may limit the radius of the second current collector plate 100 based on practical areas of the electrode core 500 and the bottom cover 300, to ensure the sufficient connection areas between the second current collector plate 100 and both of the electrode core 500 and the bottom cover 300.

In some embodiments of this application, the first surface 1111 of the connection portion 1110 is arranged in parallel to a side surface of the first support member 1120 that faces the electrode core 500. That is, a surface of the connection portion 1110 that is connected to the bottom cover 300 is parallel to a surface of the first support member 1120 that is connected to the electrode core 500. In a process of assembling the battery cell 1000, a side surface of the electrode core 500 and that faces the bottom cover 300 is usually arranged in parallel to a side surface of the bottom cover 300 that faces the electrode core 500. Therefore, in this application, the surface of the connection portion 1110 that is connected to the bottom cover 300 and the surface of the first support member 1120 that is connected to the electrode core 500 are arranged in parallel to each other, to ensure that the connection portion 1110 can be effectively connected to the bottom cover 300 after the first support member 1120 is connected to the electrode core 500, thereby ensuring a connection area between the first support member 1120 and the electrode core 500, and ensuring a connection area between the connection portion 1110 and the bottom cover 300, to effectively implement an electrical connection between the electrode core 500 and the bottom cover 300, and reduce connection difficulty.

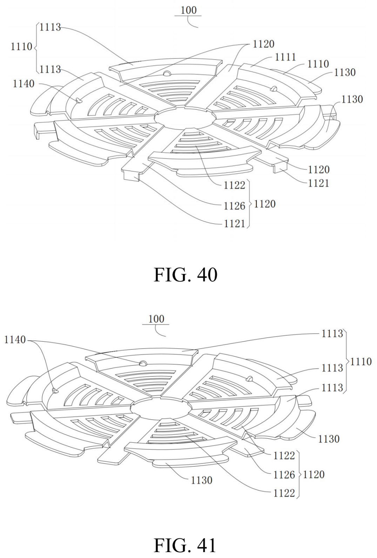

In some embodiments of this application, with reference to FIG. 40, a stop portion 1121 that extends away from the first surface 1111 is arranged on an outer peripheral edge of the first support member 1120, and the stop portion 1121 stops an outer peripheral wall of the electrode core 500. A stop fit between the first support member 1120 and the electrode core 500 is implemented, so that a locating fit between the second current collector plate 100 and the electrode core 500 is implemented. In this way, in a connection process, a relative position change between the first support member 1120 and the electrode core 500 can be avoided, thereby reducing difficulty in connecting the first support member 1120 to the electrode core 500, improving connection efficiency, that is, improving connection efficiency between the second current collector plate 100 and the electrode core 500, and ensuring accuracy of connection between the second current collector plate 100 and the electrode core 500.

In addition, the stop portion 1121 may further reinforce the first support member 1120, that is, increase structural strength of the first support member 1120, to avoid deformation of the first support member 1120 during connection to the electrode core 500, thereby ensuring that the first support member 1120 can be stably connected to the electrode core 500.

Optionally, a value range of an extension length of the stop portion 1121 is 0.1 mm to 10 mm. While ensuring that the second current collector plate 100 can be effectively in a locating fit with the electrode core 500 by using the stop portion 1121, manufacturing costs of the stop portion 1121 can be further reduced, thereby reducing manufacturing costs of the second current collector plate 100.

Optionally, the stop portion 1121 is defined by bending and deformation of a part of the first support member 1120. That is, in a process of manufacturing the first support member 1120, a part of a structure of the first support member 1120 is bent and deformed to form the stop portion 1121. In this way, there is no need to separately connect a structural member to the first support member 1120 to form the stop portion 1121, thereby reducing manufacturing difficulty of the stop portion 1121, and improving connection strength between the stop portion 1121 and the first support member 1120, so that a position of the stop portion 1121 is stable.

In some embodiments of this application, as shown in FIG. 30 and FIG. 32, the first support member 1120 is connected to the connection portion 1110 through a first connection plate 1152, and the first connection plate 1152 obliquely extends relative to the first support member 1120.

In this way, while ensuring that the first support member 1120 can be effectively connected to the connection portion 1110, it can be further ensured that the connection portion 1110 can effectively move and/or deform relative to the first support member 1120 under an external force, to change the height of the connection portion 1110, thereby changing the height of the second current collector plate 100, so that the second current collector plate 100 can effectively absorb errors generated in a height direction in a manufacturing process.

In addition, the foregoing setting may further enable a height difference to exist between the first support member 1120 and the connection portion 1110. The height difference herein will be understood as follows: In the height direction of the battery cell 1000, the first support member 1120 and the connection portion 1110 are spaced from each other, that is, the first support member 1120 and the connection portion 1110 are arranged at different heights in the battery cell 1000. In this way, the second current collector plate 100 may have a specific height, to implement an electrical connection between the electrode core 500 and the bottom cover 300 by using the second current collector plate 100, and avoid a height increase caused by bending the second current collector plate 100, thereby reducing a bending process, improving connection efficiency, avoiding damage to the second current collector plate 100, avoiding stress concentration caused by bending the second current collector plate 100, prolonging a service life of the second current collector plate 100, and improving structural strength of the second current collector plate 100.

In addition, the first support member 1120 and the connection portion 1110 are directly arranged to have a specific height difference. Compared with bending the second current collector plate 100 to increase the height, space occupied by the second current collector plate 100 in the height direction can be reduced. In this way, the height of the electrode core 500 can be correspondingly increased, thereby increasing capacity of the electrode core 500, that is, increasing capacity of the battery cell 1000.

In a specific example, because there is the height difference between the first support member 1120 and the connection portion 1110, when the bottom cover 300 is connected to the electrode core 500 by using the second current collector plate 100, the first support member 1120 may be first connected to the electrode core 500. Because there is the height difference between the first support member 1120 and the connection portion 1110 in the height direction of the battery cell 1000, after the first support member 1120 is connected to the electrode core 500, in a process of mounting the bottom cover 300, the connection portion 1110 may be arranged close to the bottom cover 300, to reduce connection difficulty between the connection portion 1110 and the bottom cover 300.

Optionally, with reference to FIG. 32 and FIG. 33, a value range of an oblique angle a1 between the first connection plate 1152 and a bottom wall of the first support member 1120 is 0°<a1<90°. In some embodiments, when a1 is less than or equal to 0°, the second current collector plate 100 cannot effectively implement an electrical connection between the electrode core 500 and the bottom cover 300. When a1 is greater than or equal to 90°, an overall height of the second current collector plate 100 is relatively high, and occupied space of the second current collector plate 100 is relatively large. In this case, the second current collector plate 100 occupies arranged space of the electrode core 500, and consequently, a capacity of the electrode core 500 is reduced. In addition, there is a risk that the first connection plate 1152 prevents the connection portion 1110 from moving and/or deforming relative to the first support member 1120, that is, there is a risk that the height of the connection portion 1110 cannot be changed, and therefore a poor welding problem caused by a manufacturing error cannot be resolved.

Therefore, in this application, the value range of the oblique angle a1 between the first connection plate 1152 and the bottom wall of the first support member 1120 is set to 0°<a1<90°, so that it is ensured that the second current collector plate 100 can effectively implement an electrical connection between the electrode core 500 and the bottom cover 300, and it can be further ensured that the connection portion 1110 can effectively move and/or deform relative to the first support member 1120, to resolve a poor welding problem caused by a manufacturing error.

In some examples, a1 may be 10°, 20°, 30°, 40°, 50°, 60°, 70°, 80°, or the like.

In a specific example, a1 is 60°. In this case, in an actual assembly process, it is ensured that the connection portion 1110 can perform height adjustment, so that an error in a height direction in a manufacturing process is absorbed.

Optionally, as shown in FIG. 30 and FIG. 32, the second support member 1130 includes a second connection plate 1151, the second connection plate 1151 is connected to the connection portion 1110, and the second connection plate 1151 obliquely extends relative to the connection portion 1110. In this way, the second support member 1130 and the connection portion 1110 have specific heights, to ensure that the second support member 1130 can effectively support the electrode core 500, so that the connection portion 1110 can effectively perform height adjustment.

Optionally, with reference to FIG. 32 and FIG. 33, a value range of an oblique angle a2 between the second connection plate 1151 and a bottom wall of the second support member 1130 is 0°<a2<90°. For beneficial effects thereof, referring to the beneficial effects generated by setting the value range of the oblique angle a1 between the first connection plate 1152 and the bottom wall of the first support member 1120 to 0°<a1<90°. Details are not described herein again.

Optionally, as shown in FIG. 32 and FIG. 33, the oblique angle a1 between the first connection plate 1152 and the bottom wall of the first support member 1120 is the same as the oblique angle a2 between the second connection plate 1151 and the bottom wall of the second support member 1130, to reduce manufacturing difficulty of the second current collector plate 100 and further make the height of the connection portion 1110 adjustable.

It should be noted that, as shown in FIG. 37 and FIG. 38, a part of the second support member 1130 is formed into a bent part bent toward the first surface 1111. Alternatively, when a part of the second support member 1130 is bent to be opposite to the connection portion 1110, the second connection plate 1151 may not be arranged between the second support member 1130 and the connection portion 1110, that is, the second support member 1130 is directly connected to the connection portion 1110 and bent relative to the connection portion 1110. In this way, it is ensured that the second support member 1130 can effectively support the electrode core 500 and drive the connection portion 1110 to move, and arrangement of the second connection plate 1151 can be omitted, thereby reducing manufacturing difficulty of the second current collector plate 100 and reducing manufacturing costs.

Optionally, the first connection plate 1152 and the second connection plate 1151 are formed into aluminum plates or copper plates that obliquely extend, one end of the first connection plate 1152 is connected to the connection portion 1110, and the other end of the first connection plate 1152 is connected to the first support member 1120. Correspondingly, one end of the second connection plate 1151 is connected to the connection portion 1110, and the other end of the second connection plate 1151 is connected to the second support member 1130. Based on the aluminum plates or copper plates, the connection portion 1110 can drive the first connection plate 1152 and the second connection plate 1151 to act under the action of the connection portion 1110.

The connection portion 1110 herein drives the first connection plate 1152 and the second connection plate 1151 to act. A specific action of the first connection plate 1152 may be as follows: The connection portion 1110 drives one end of a plate body connected thereto to move toward the electrode core 500, and in a process in which the end of the plate body moves, the other end of the plate body is fastened relative to the electrode core 500, so that the entire plate body rotates toward the electrode core 500, thereby implementing movement of the connection portion 1110 relative to the first support member 1120; or the connection portion 1110 drives one end of a plate body connected thereto to be bent toward the electrode core 500, and in a bending process, the other end of the plate body may be fastened relative to the electrode core 500, thereby implementing movement of the connection portion 1110 relative to the first support member 1120.

Correspondingly, a specific action of the second connection plate 1151 may be as follows: The connection portion 1110 drives one end of a plate body connected thereto to move toward the electrode core 500, and in a process in which the end of the plate body moves, the other end of the plate body drives the second support member 1130 to slide relative to the electrode core 500, so that the entire plate body moves toward the electrode core 500, thereby implementing movement of the connection portion 1110 relative to the first support member 1120.

It should be noted that specific lengths, widths, and thicknesses of the first connection plate 1152 and the second connection plate 1151 are not limited in this application, provided that the connection portion 1110 can effectively drive, under an external force, the obliquely extending first connection plate 1152 and second connection plate 1151 to act.

In a specific example, as shown in FIG. 30, the first support member 1120 forms a circular aluminum plate or a circular copper plate, the connection portion 1110 forms a ring plate, the connection portion 1110 is connected to a periphery of the first support member 1120 by using the first connection plate 1152 formed into an obliquely extending aluminum plate or copper plate, and a plurality of second support members 1130 are connected to the periphery of the connection portion 1110 by using the second connection plate 1151 formed into an obliquely extending aluminum plate or copper plate.

In a specific example, when the second current collector plate 100 is separately connected to the electrode core 500 and the bottom cover 300, the first support member 1120 is first connected to the electrode core 500. Because there is a height difference between the first support member 1120 and the connection portion 1110 in the height direction of the battery cell 1000, in a process of mounting the bottom cover 300, the bottom cover 300 can be effectively in a contact fit with the connection portion 1110. In a process in which the bottom cover 300 is connected to the connection portion 1110, if a welding position protruding toward the electrode core 500 exists on the bottom cover 300, the welding position drives the connection portion 1110 to move toward the electrode core 500, and the connection portion 1110 drives an end of the first connection plate 1152 connected to the connection portion 1110 and an end of the second connection plate 1151 connected to the connection portion 1110 to move toward the electrode core 500. When the end of the second connection plate 1151 connected to the connection portion 1110 moves toward the electrode core 500, the other end of the second connection plate 1151 drives the second support member 1130 to slide in the radial direction of the electrode core 500, to use the bottom cover 300 to drive the connection portion 1110 to move and/or deform relative to the first support member 1120, thereby changing the height of the connection portion 1110, so that the connection portion 1110 can be effectively connected to the bottom cover 300, conformity of opposite contact surfaces of the connection portion 1110 and the bottom cover 300 is ensured, and the possibility of poor welding is reduced.

In some embodiments of this application, as shown in FIG. 30, a flow guiding zone 1128 is provided on the first support member 1120. The flow guiding zone 1128 is used to guide a flow of an electrolyte, to ensure that the electrolyte can fully penetrate into the electrode core 500, and accelerate penetration of the electrolyte, thereby improving an electrolyte injection effect and ensuring performance of the electrode core 500.

In some examples, as shown in FIG. 30 and FIG. 31, an electrolyte injection hole 1127 is provided in the middle of the first support member 1120. The electrolyte injection hole 1127 is configured to implement communication between two opposite sides of the first support member 1120, to ensure that an external electrolyte can be smoothly injected into the electrode core 500.

In addition, the electrolyte injection hole 1127 is provided in the middle of the first support member 1120, so that the electrolyte injection hole 1127 can be arranged opposite to the middle of the electrode core 500, thereby ensuring that an electrolyte injected through the electrolyte injection hole 1127 can rapidly penetrate into the electrode core 500, and ensuring an electrolyte injection effect.

In conclusion, it will be understood that the first support member 1120 in this application is provided with the flow guiding zone 1128 and the electrolyte injection hole 1127. In an actual electrolyte injection process, the electrolyte injection hole 1127 may first be used to inject an electrolyte into the electrode core 500, and in the electrolyte injection process, the flow guiding zone 1128 may be used to provide a guide for flowing of the electrolyte, so that the electrolyte can be dispersed to different positions of the electrode core 500, thereby improving an infiltration effect of the electrolyte for the electrode core 500, and ensuring operation performance of the electrode core 500.

Optionally, as shown in FIG. 30 to FIG. 40, the first support member 1120 is provided with a plurality of flow guiding zones 1128. Cooperation between the plurality of flow guiding zones 1128 may ensure that the electrolyte can effectively infiltrate different positions of the electrode core 500, thereby further improving the infiltration effect of the electrolyte for the electrode core 500, and improving performance of the electrode core 500.

Optionally, as shown in FIG. 30 to FIG. 40, the flow guiding zone 1128 includes a plurality of flow guiding holes 1122 that are spaced from each other. The flow guiding hole 1122 is configured to implement communication between two opposite sides of the first support member 1120, so that it is convenient to guide the electrolyte to different positions of the electrode core 500 by using the flow guiding zone 1128, thereby improving the infiltration effect of the electrolyte.

Optionally, as shown in FIG. 31, FIG. 34, FIG. 37, and FIG. 40, each flow guiding hole 1122 forms an arc-shaped hole. The electrode core 500 is generally formed in a winding manner, and the flow guiding hole 1122 is provided to form an arc-shaped hole, so that the flow guiding hole 1122 can be opposite to a contact surface between two adjacent circles of electrode cores 500, and the electrolyte can effectively enter between the two adjacent circles of electrode cores 500, to improve an infiltration effect. In addition, the arc-shaped hole further helps ensure an open area of the flow guiding hole 1122, thereby improving a guiding effect of the flow guiding hole 1122, ensuring that the flow guiding hole 1122 can guide the electrolyte to different positions of the electrode core 500, and further improving the infiltrating effect.

Optionally, as shown in FIG. 31, FIG. 34, FIG. 37, and FIG. 40, the plurality of arc-shaped holes corresponding to each flow guiding zone 1128 are sequentially arranged in the radial direction of the first support member 1120. In this way, space in the radial direction of the first support member 110 is properly used, thereby ensuring that a plurality of flow guiding holes 1122 can be provided in the flow guiding zone 1128, and the plurality of flow guiding holes 1122 cooperate to ensure the infiltration effect.

Optionally, as shown in FIG. 31, FIG. 34, FIG. 37, and FIG. 40, arc lengths of the plurality of flow guiding holes 1122 are set to gradually increase in a direction away from the middle of the first support member 1120, to ensure a flow guiding effect of the flow guiding hole 1122, further ensure that the flow guiding hole 1122 can guide the electrolyte to different positions of the electrode core 500, and improve the infiltrating effect of the electrolyte.

It should be noted that, with reference to FIG. 31, FIG. 34, FIG. 37, and FIG. 40, a quantity and a radial width of flow guiding holes 1122 are not limited in this application. When the quantity of flow guiding holes 1122 is relatively small, the radial width of the flow guiding hole 1122 may be adaptively increased (this example is shown in FIG. 37). When the quantity of flow guiding holes 1122 is relatively large, the radial width of the flow guiding hole 1122 may be adaptively reduced (this example is shown in FIG. 40). In this way, it is ensured that flow of the electrolyte can be effectively guided by using the flow guiding hole 1122, structural strength of the first support member 1120 can be further ensured, and a service life of the first support member 1120 can be prolonged.

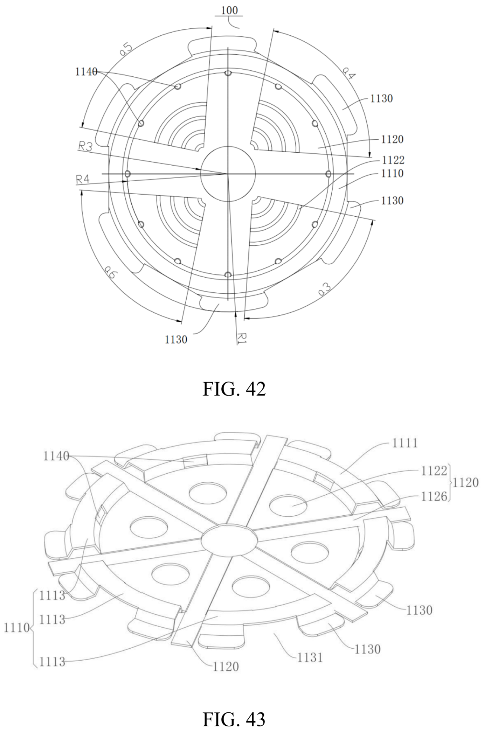

In some other examples, as shown in FIG. 43, the flow guiding hole 1122 may alternatively form a circular hole. That is, the flow guiding hole 1122 is not limited to forming the arc-shaped hole. When the flow guiding hole 1122 forms a circular hole, it is ensured that flow of the electrolyte can be effectively guided by using the flow guiding hole 1122, and molding difficulty of the flow guiding hole 1122 can be further reduced, thereby helping improve molding efficiency of the second current collector plate 100.

Certainly, in some other examples, the flow guiding hole 1122 may alternatively form a rectangular hole, a diamond hole, an oval hole, or the like. This is not specifically limited in this application.

In some embodiments of this application, as shown in FIG. 35, FIG. 36, FIG. 38, and FIG. 39, a through slot 1123 is provided in the first support member 1120, the first support member 1120 includes a welding sheet 1124, the welding sheet 1124 is arranged in the through slot 1123, the welding sheet 1124 is connected to an inner wall of the through slot 1123 by using a connection bridge 1125, and the welding sheet 1124 is electrically connected to the electrode core 500. The through slot 1123 described herein will be understood as a slot body arranged on the first support member 1120 and connecting two opposite sides of the first support member 1120. Therefore, it will be understood herein that the first support member 1120 includes the welding sheet 1124, and a communication slot (through slot 1123) that accommodates the welding sheet 1124 is provided on the first support member 1120. The welding sheet 1124 is arranged in the through slot 1123 and is connected to the inner wall of the through slot 1123 by using the connection bridge 1125, to support the welding sheet 1124 by using the inner wall of the through slot 1123, and improve position stability of the welding sheet 1124. In addition, the welding sheet 1124 can be electrically connected to the second current collector plate 100. In this way, when the welding sheet 1124 is connected to the electrode core 500, the second current collector plate 100 can be electrically connected to the electrode core 500, so that the electrode core 500 is electrically connected to the bottom cover 300.

Optionally, as shown in FIG. 35, FIG. 36, FIG. 38, and FIG. 39, a plurality of through slots 1123 are provided on the first support member 1120. In this way, the first support member 1120 can include a plurality of welding sheets 1124, and the plurality of welding sheets 1124 are connected to the electrode core 500, to increase a connection area between the first support member 1120 and the electrode core 500, that is, increase a connection area between the second current collector plate 100 and the electrode core 500, ensure connection quality, and improve a current flow capability of the second current collector plate 100.

Optionally, with reference to FIG. 35, FIG. 36, FIG. 38, and FIG. 39, the first support member 1120 includes a median portion 1129. In the radial direction of the second current collector plate 100, the through slot 1123 is located on a radial outer side of the median portion 1129. In this way, a structure of the second current collector plate 100 is properly used, and it is ensured that both the median portion 1129 and the through slot 1123 can be arranged on the first support member 1120, so that the first support member 1120 can be used to implement an electrical connection between the second current collector plate 100 and the electrode core 500.

Optionally, as shown in FIG. 35, FIG. 36, FIG. 38, and FIG. 39, in the radial direction of the second current collector plate 100, an orthographic projection of the connection bridge 1125 on the first projection plane is located on a radial inner side of an outer peripheral edge of an orthographic projection of the welding sheet 1124. The first projection plane described herein is a plane perpendicular to the thickness direction of the second current collector plate 100, that is, an orthographic projection of the connection bridge 1125 on the plane perpendicular to the thickness direction of the second current collector plate 100 is located on a radial inner side of an outer peripheral edge of an orthographic projection of the welding sheet 1124 on the plane perpendicular to the thickness direction of the second current collector plate 100, that is, the connection bridge 1125 is arranged close to the middle portion 1129, to reduce a current flowing path on the welding sheet 1124, the connection bridge 1125, and the middle portion 1129, thereby reducing a current loss and improving a current flow capability of the second current collector plate 100.

Optionally, as shown in FIG. 35, FIG. 36, FIG. 38, and FIG. 39, each welding sheet 1124 is spaced from the inner wall of the through slot 1123 to define the flow guiding zone 1128. That is, when the first support member 1120 is provided with the through slot 1123 and includes the welding sheet 1124, there is no need to separately provide the flow guiding zone 1128, but the flow guiding zone 1128 may be formed by spacing the welding sheet 1124 from the inner wall of the through slot 1123, to reduce manufacturing difficulty of the second current collector plate 100. In addition, in the foregoing arrangement, an area of the flow guiding zone 1128 is ensured, and the flow guiding zone 1128 can be further prevented from being provided in the welding sheet 1124, to ensure an area of the welding sheet 1124, thereby ensuring a connection area between the first support member 1120 and the electrode core 500, and ensuring an infiltration effect of an electrolyte.

In some embodiments of this application, as shown in FIG. 30, FIG. 34, FIG. 37, and FIG. 41, a part of the first support member 1120 is recessed in a direction away from the first surface 1111 to define a welding zone 1126. The welding zone 1126 is connected to the electrode core 500, so that the first support member 1120 is electrically connected to the electrode core 500.

That is, in this application, the welding zone 1126 is arranged on the first support member 1120, so that the first support member 1120 is electrically connected to the electrode core 500.

It should be noted that, because the first surface 1111 is arranged close to the bottom cover 300, when a part of the first support member 1120 is recessed in a direction away from the first surface 1111 to form the welding zone 1126, the welding zone 1126 may be arranged close to the electrode core 500, so that a connection between the welding zone 1126 and the second tab 502 is implemented, thereby reducing connection difficulty, that is, reducing connection difficulty between the first support member 1120 and the electrode core 500, and improving connection efficiency.

Optionally, as shown in FIG. 30, FIG. 34, FIG. 37, and FIG. 41, a plurality of welding zones 1126 are provided on the first support member 1120, and the plurality of welding zones 1126 cooperate to connect to the second tab 502 to ensure a connection area between the first support member 1120 and the second tab 502, thereby ensuring a connection area between the second current collector plate 100 and the electrode core 500. In this way, a relative position between the second current collector plate 100 and the electrode core 500 is stable, helping ensure structural stability of the battery cell 1000, and further helping improve current flow capability of the second current collector plate 100.

Optionally, as shown in FIG. 30 and FIG. 31, the welding zone 1126 is formed into a rectangle, thereby ensuring a connection area between the welding zone 1126 and the electrode core 500, and further reducing molding difficulty of the welding zone 1126.

In some other examples, the welding zone 1126 may be alternatively formed into a circle, a sector, or the like. This is not specifically limited in this application.

Optionally, as shown in FIG. 31, a radial length of the welding zone 1126 is L, ½R1≤L≤R1, R1 is a radius of the second current collector plate 100, and R1=10 mm~100 mm. The radial length of the welding zone 1126 herein will also be understood as an extension length of the welding zone 1126 in the radial direction of the second current collector plate 100. L is set to be less than R to reserve specific arrangement space for the connection portion 1110, thereby ensuring that the connection portion 1110 has a specific area to increase the connection area between the connection portion 1110 and the bottom cover 300; and L is set to be greater than or equal to ½R1, thereby ensuring that the welding zone 1126 has a specific area to increase the connection area between the welding zone 1126 and the electrode core 500.

That is, in this application, a relationship between L and R1 is set, to ensure that the welding zone 1126 has a sufficient area to be welded to the electrode core 500, and avoid that the welding zone 1126 occupies arrangement space of the connection portion 1110, thereby ensuring that the connection portion 1110 also has a sufficient area to be welded to the bottom cover 300, and ensuring stability of connection between the electrode core 500 and the bottom cover 300.

Certainly, in some other examples, as shown in FIG. 34, FIG. 36, and FIG. 39, when the connection portion 1110 includes a plurality of connection positions 1113 spaced from each other in the circumferential direction, the radial length L of the welding zone 1126 may be alternatively set to be equal to the radius R1 of the second current collector plate 100. In this case, the welding zone 1126 is prevented from occupying arrangement space of the connection portion 1110, and it can be ensured to a maximum extent that the welding zone 1126 has a sufficient welding area, thereby ensuring connection strength between the second current collector plate 100 and the electrode core 500, and helping improve a current flow area of the second current collector plate 100.

In some examples, as shown in FIG. 42, the welding zone 1126 may not be provided on the first support member 1120. In this case, an entire surface of the first support member 1120 may be connected to the electrode core 500, to ensure a connection area between the first support member 1120 and the electrode core 500, that is, to ensure a connection area between the second current collector plate 100 and the electrode core 500, thereby improving a current flow capability of the second current collector plate 100.

Optionally, as shown in FIG. 31, a flow guiding zone 1128 is provided at a position other than the welding zone 1126 on the first support member 1120.

Herein, when the welding zone 1126 is formed on the first support member 1120, the flow guiding zone 1128 is provided at the position other than the welding zone 1126 on the first support member 1120, and the flow guiding zone 1128 is used to guide flowing of an electrolyte, that is, play a guidance function for flow of the electrolyte, to ensure that the electrolyte can fully penetrate into the electrode core 500, thereby accelerating electrolyte penetration, improving an electrolyte injection effect, and ensuring operation performance of the electrode core 500.

In addition, the flow guiding zone 1128 is provided at the position other than the welding zone 1126 on the first support member 1120, so that the flow guiding zone 1128 and the electrode core 500 can be spaced from each other. In this way, when the electrolyte is guided by using the flow guiding zone 1128, a part of the electrolyte can be filled between a side wall of the flow guiding zone 1128 and the electrode core 500, thereby further ensuring an infiltration effect, and improving performance of the electrode core 500.

That is, in this application, the welding zone 1126 is provided on the first support member 1120, and the welding zone 1126 ensures that the second current collector plate 100 can be effectively connected to the electrode core 500, and can further ensure the infiltration effect of the electrolyte.

Optionally, as shown in FIG. 31, FIG. 34, and FIG. 37, a plurality of arc-shaped holes are provided at positions other than the welding zone 1126 on the first support member 1120, and are in a same flow guiding zone 1128. The plurality of arc-shaped holes are sequentially arranged in the radial direction of the first support member 1120, and arc lengths of the plurality of arc-shaped holes gradually increase in a direction away from the middle of the first support member 1120, so that each flow guiding zone 1128 defines a sector shape. In this way, space in the radial direction of the first support member 110 is properly used, thereby ensuring that a plurality of flow guiding holes 1122 can be provided in the flow guiding zone 1128, and the plurality of flow guiding holes 1122 cooperate to ensure the infiltration effect.

Optionally, the battery cell 1000 is a cylindrical battery, so that structures (the electrode core 500 and the bottom cover 300) in the battery cell 1000 can be adapted to the circular second current collector plate.

In some examples, the minimum connection area S3 between the first support member 1120 and the electrode core 500 may be determined according to a minimum current flow requirement C of the electrode core 500. In some embodiments, the minimum connection area S3 between the first support member 1120 and the electrode core 500 and the minimum current flow requirement C of the electrode core 500 need to satisfy the following condition: C≤KNS3. Herein, K is a current flow coefficient of the first support member 1120; and N is a compensation coefficient, and N=0.5~1.

Through the foregoing setting, it is ensured that the current flow capability of the second current collector plate 100 can satisfy the minimum current flow requirement of the electrode core 500, to avoid causing an insufficient current flow of the electrode core 500, and avoid a problem of severe heat generation of the electrode core 500, thereby prolonging a service life of the electrode core 500 and improving use safety of the electrode core 500.

It should be noted that in the foregoing condition, K may be directly determined based on a material of the first support member 1120, and a unit is AH/mm²; and the minimum current flow requirement C of the electrode core 500 may be determined based on required charging duration of the electrode core 500. A specific determining manner is as follows: In a practical production process of the battery cell 1000, fast charging duration that needs to be satisfied by a to-be-produced battery cell 1000 may be directly determined, that is, charging duration of the battery cell 1000 may be explicitly learned of; charging duration of the electrode core 500 is determined based on the charging duration of the battery cell 1000; the minimum current flow requirement C of the electrode core 500 is then obtained based on the charging duration of the electrode core 500; and finally the minimum connection area S3 between the first support member 1120 and the electrode core 500 is calculated based on the minimum current flow requirement C, so that the connection area S3 between the first support member 1120 and the electrode core 500 and the minimum current flow requirement C of the electrode core 500 can satisfy a specific condition, thereby ensuring that a current flow capability of the second current collector plate 100 can satisfy the minimum current flow requirement of the electrode core 500, avoiding insufficient current flow of the electrode core 500, avoiding the serious heat generation problem of the electrode core 500, and prolonging the service life of the electrode core 500 and improving use safety of the electrode core 500. The connection area between the first support member 1120 and the electrode core 500 may be measured based on a connection mark, for example, based on a weld mark.

In some specific examples, the minimum current flow requirement C of the electrode core 500 is equal to 10 AH to 120 AH.

In some examples, to ensure that a worker can effectively determine whether the minimum connection area S3 between the first support member 1120 and the electrode core 500 satisfies a requirement, after the minimum connection area S3 between the first support member 1120 and the electrode core 500 is obtained through calculation, a minimum connection zone may be provided on the first support member 1120. When the entire minimum connection zone is connected to the electrode core 500, it is determined that the minimum connection area between the first support member 1120 and the electrode core 500 satisfies the requirement.

Optionally, a plurality of locating portions, for example, locating grooves or locating protrusions, are arranged on the first support member 1120, and a region enclosed by the plurality of locating portions forms the minimum connection zone.

Optionally, as shown in FIG. 42, when no welding zone 1126 is provided on the first support member 1120, an effective connection area S4 of the first support member 1120 satisfies the following relational expression: S4=π(R4²-R3²)*(360°-a0)/360°. S4=S3, and S3 is the minimum connection area between the first support member 1120 and the electrode core 500. π is pi, and π≈3.14. R4 is a radius of the first support member 1120. R3 is a radius of the electrolyte injection hole 1127. a is a sum of central angles of a plurality of flow guiding zones 1128.

It should be noted that the minimum connection area S3 of the first support member 1120 and the minimum current flow requirement C of the electrode core 500 need to satisfy: C≤KNS3. That is, after the minimum connection area S3 of the first support member 1120 is obtained based on the minimum current flow requirement C of the electrode core 500, in this application, the radius R4 of the first support member 1120, the radius R3 of the electrolyte injection hole 1127, and a relative position relationship based on the sum a0 of the central angles of the plurality of flow guiding zones 1128 are designed based on the minimum connection area S3 between the first support member 1120 and the electrode core 500, so that the minimum connection area between the first support member 1120 and the electrode core 500 that are molded satisfies the minimum current flow requirement of the electrode core 500, thereby ensuring a current flow capability of the second current collector plate 100 to prolong a service life of the electrode core 500 and improve use safety.

It should be noted that in the example shown in FIG. 42, a0=a3+a4+a5+a6.

Through the foregoing setting, it is ensured that when no welding zone 1126 is provided on the first support member 1120 and a plurality of flow guiding zones 1128 are provided, a connection area between the first support member 1120 and the electrode core 500 can satisfy an actual requirement, to ensure a current flow area of the second current collector plate 100.

Optionally, the radius R4 of the first support member 1120 satisfies the following relational expression: R4=R1-W5-W6-2*H2*cota1. R1 is a radius of the second current collector plate 100. W5 is a radial width of the second support member 1130. W6 is a radial width of the connection portion 1110. H2 is a height of the connection portion 1110. a1 is an oblique angle between the first connection plate 1152 and the bottom wall of the first support member 1120, and an oblique angle between the second connection plate 1151 and the bottom wall of the second support member 1130 is equal to the oblique angle between the first connection plate 1152 and the bottom wall of the first support member 1120.

It will be understood herein that, when the radius R4 of the first support member 1120 is designed, the radius R1 of the second current collector plate 100 needs to be considered comprehensively, and it needs to be ensured that after the first support member 1120 is formed on the second current collector plate 100, the connection portion 1110 that has a specific width and that is opposite to the first support member 1120, the second support member 1130 that has a specific width, and the first connection plate 1152 and the second connection plate 1151 that have specific oblique angles may be further arranged in the radial direction of the second current collector plate 100. In this way, it is ensured that the second current collector plate 100 can have a specific connection area with the electrode core 500, it can be further ensured that the second current collector plate 100 can be effectively connected to the bottom cover 300, and the height of the second current collector plate 100 can be adjusted.

Optionally, as shown in FIG. 31, when a plurality of welding zones 1126 are provided on the first support member 1120, a minimum connection area S5 of the first support member 1120 satisfies the following relational expression: S5=n3LD. S5=S3, and S3 is the minimum connection area between the first support member 1120 and the electrode core 500. n3 is a quantity of welding zones 1126. L is a length of the welding zone 1126. D is a width of the welding zone 1126.

It should be noted that the minimum connection area S3 of the first support member 1120 and the minimum current flow requirement C of the electrode core 500 need to satisfy: C≤KNS3. That is, after the minimum connection area S3 of the first support member 1120 is obtained based on the minimum current flow requirement C of the electrode core 500, that is, after a specific condition needs to be satisfied to obtain the minimum connection area S5 of the first support member 1120, in this application, the quantity n3 of welding zones 1126, the length L of the welding zone 1126, and the width D of the welding zone 1126 are designed based on the minimum connection area S5 of the first support member 1120, so that the minimum connection area between the plurality of welding zones 1126 and the electrode core 500 that are molded satisfies the minimum current flow requirement of the electrode core 500, thereby ensuring a current flow capability of the second current collector plate 100 to prolong a service life of the electrode core 500 and improve use safety.

Optionally, the length L of the welding zone 1126 satisfies the following relational expression: L=R1-W5-W6-2*H2*cota1-G4-R3. R1 is a radius of the second current collector plate 100. W5 is a radial width of the second support member 1130. W6 is a radial width of the connection portion 1110. H2 is a height of the connection portion 1110. a1 is an oblique angle between the first connection plate 1152 and the bottom wall of the first support member 1120, and an oblique angle between the second connection plate 1151 and the bottom wall of the second support member 1130 is equal to the oblique angle between the first connection plate 1152 and the bottom wall of the first support member 1120. G4 is a distance from a radial outer side of the welding zone 1126 to an edge of the connection portion 1110. R3 is a radius of the electrolyte injection hole 1127.

The foregoing will be understood as that, when the length L of the welding zone 1126 is designed based on the minimum connection area S5 of the first support member 1120, the radius R1 of the second current collector plate 100 needs to be considered comprehensively, and it needs to be ensured that after the welding zone 1126 is formed on the second current collector plate 100, the connection portion 1110 that has a specific width and that is opposite to the welding zone 1126, the second support member 1130 that has a specific width, the first connection plate 1152 and the second connection plate 1151 that have specific oblique angles, and the electrolyte injection hole 1127 that has a specific open size may be further arranged in the radial direction of the second current collector plate 100. In this way, it is ensured that the second current collector plate 100 can have a specific connection area with the electrode core 500, it can be further ensured that the second current collector plate 100 can be effectively connected to the bottom cover 300, and the height of the second current collector plate 100 can be adjusted.

Optionally, the radial length L of the welding zone 1126 further satisfies the following relational expression: ½R1≤L≤R1. In some embodiments, L is set to be less than R1 to reserve specific arrangement space for the connection portion 1110, thereby ensuring that the connection portion 1110 has a specific area to increase the connection area between the connection portion 1110 and the bottom cover 300; and L is set to be greater than or equal to ½R1, thereby ensuring that the welding zone 1126 has a specific area to increase the connection area between the welding zone 1126 and the electrode core 500.

That is, in this application, a relationship between L and R1 is set, to ensure that the welding zone 1126 has a sufficient area to be welded to the electrode core 500, and avoid that the welding zone 1126 occupies arrangement space of the connection portion 1110, thereby ensuring that the connection portion 1110 also has a sufficient area to be welded to the bottom cover 300, and ensuring stability of connection between the electrode core 500 and the bottom cover 300.

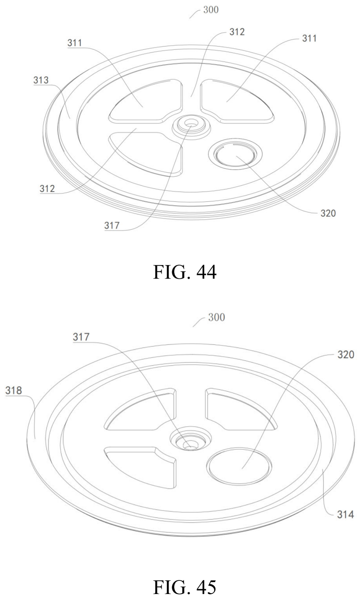

In some embodiments of this application, as shown in FIG. 44 to FIG. 47, the bottom cover 300 of the battery cell 1000 according to this embodiment of this application includes a bottom cover body 310.

The battery cell 1000 includes a housing 600, and the bottom cover 300 is fastened to an end portion of the housing 600, to protect an end portion of the battery. A first welding groove 314 is formed on a first end face of the bottom cover body 310 that is away from the housing 600, the first welding groove 314 is recessed toward the second current collector plate, the first welding groove 314 is welded to the second connection region for electrical connection, the first welding groove 314 is spaced from an outer peripheral edge of the bottom cover body 310, and the outer peripheral edge of the bottom cover body 310 is welded to the housing 600.

When the bottom cover body 310 is fastened to the housing 600 of the battery cell 1000, the bottom cover body 310 may be welded from the first welding groove 314, and then a position on the bottom cover body 310 that corresponds to the first welding groove 314 is welded to the second connection region, to implement a fixed and electrical connection between the second connection region and the bottom cover body 310, so as to implement an electrical connection between the second connection region and an external component by using the bottom cover body 310.

In some embodiments, after the position of the bottom cover body 310 is determined by using the first welding groove 314, the first welding groove 314 is first welded, so that the bottom cover body 310 and the second connection region are welded together and an electrical connection between the bottom cover body 310 and the second connection region is implemented. Then, the outer peripheral edge of the bottom cover body 310 is welded, so that an outer peripheral wall of the bottom cover body 310 is welded to the housing 600. The bottom cover 300 is mounted to the end portion of the housing 600, so that the bottom cover 300 can protect the end portion of the battery. This manner of fastening the bottom cover 300 to the housing 600 is simple and convenient, and helps reduce processing difficulty.

Specifically, a welding device may heat the bottom cover body 310 from the first welding groove 314. A position corresponding to the first welding groove 314 on the bottom cover body 310 is heated and melted, so that the bottom cover body 310 and the second connection region can be welded together. The welding device may heat the bottom cover body 310 from the outer peripheral edge of the bottom cover body 310. After the outer peripheral edge of the bottom cover body 310 is heated and melted, the outer peripheral edge of the bottom cover body 310 can be fastened to the housing 600, to fasten the bottom cover body 310 to the end portion of the housing 600, and protect the end portion of the battery by using the bottom cover body 310.

In some embodiments, the first welding groove 314 is spaced from the outer peripheral edge of the bottom cover body 310, so that a region that needs to be welded on the bottom cover body 310 is located by using the first welding groove 314. Specifically, the first welding groove 314 is arranged opposite to the second connection region, so that the bottom cover body 310 can be accurately welded by using the first welding groove 314. The bottom cover body 310 is accurately welded with the second connection region by using the first welding groove 314, so that the bottom cover body is mounted at a specified position on the battery cell 1000.

The first welding groove 314 is arranged, so that it is convenient to determine a relative position between the second connection region and the bottom cover body 310 by using the first welding groove 314. In addition, the bottom cover body 310 is welded to the second connection region by using the first welding groove 314. In this way, when fastening the bottom cover body 310 to the battery cell 1000, an operator can quickly determine a position of the bottom cover body 310 relative to the second connection region, and then weld the bottom cover body 310, so that the second connection region is welded to a position corresponding to the first welding groove 314 on the bottom cover body 310, and the second connection region is electrically connected to the bottom cover body 310. In addition, arranging the first welding groove 314, can improve strength of the bottom cover body 310, avoid deformation caused by stress concentration during welding, and increase a production yield.

In addition, a welding operation is performed on the outer peripheral wall of the bottom cover body 310, so that the outer peripheral wall of the bottom cover body 310 is welded to the housing 600, the bottom cover body 310 can be fastened to the housing 600 of the battery cell 1000 quickly and accurately, and the bottom cover 300 can be fastened to an end of the housing 600 quickly.

Compared with a method in which the bottom cover body 310 needs to be fastened to the housing 600 by performing an operation such as bending and sealing on the bottom cover body 310, the method in which the bottom cover body 310 is welded to the housing 600 in the foregoing manner is simpler, quicker, and less difficult to operate, thereby helping improve efficiency of the operator during operation.

Therefore, according to the bottom cover 300 of the battery cell 1000 in this embodiment of this application, the first welding groove 314 is arranged on the bottom cover body 310, so that a position corresponding to the second connection region on the bottom cover body 310 is quickly determined by using the first welding groove 314, to facilitate fastening and electrical connection between the bottom cover body 310 and the second connection region. In addition, the outer peripheral edge of the bottom cover body 310 is welded to fasten the bottom cover 300 to the housing 600 of the battery cell 1000. The welding manner helps reduce processing difficulty, improve production efficiency, and reduce costs.

As shown in FIG. 44 to FIG. 47, the bottom cover 300 according to this embodiment of this application includes a bottom cover body 310.

In some embodiments of this application, a part of the bottom cover body 310 protrudes toward the second current collector plate to define a first welding protrusion 313, and the first welding groove 314 is arranged opposite to the first welding protrusion 313, so that a penetration welding operation can be performed on the first welding protrusion 313 at the first welding groove 314, to weld the first welding protrusion 313 to the second connection region, so as to implement a fixed and electrical connection between the bottom cover body 310 and the second connection region.

In some embodiments, the first welding protrusion 313 protrudes in a direction toward the second current collector plate, to locate the bottom cover body 310 and the second connection region by using the first welding protrusion 313, so as to determine a position of the bottom cover 300 relative to the second connection region, and reduce operation difficulty during welding, so that the bottom cover 300 is smoothly welded to an end portion of the housing 600 of the battery cell 1000.

Specifically, the welding device may heat the first welding protrusion 313 from the first welding groove 314, and the first welding protrusion 313 is heated and melted to weld the first welding protrusion 313 to the second connection region. In addition, the bottom cover body 310 may be manufactured through stamping, that is, stamping is performed in a direction toward the second current collector plate to simultaneously form the first welding groove 314 and the first welding protrusion 313, which is easy and convenient to manufacture.

In some optional embodiments of this application, a value range of a thickness of the first welding protrusion 313 is 0.3 mm to 0.8 mm, so that heat at the first welding groove 314 can be smoothly transmitted to the first welding protrusion 313 while ensuring the thickness of the first welding protrusion 313, and a partial region of the first welding protrusion 313 can be melted, to implement a welding connection between the first welding protrusion 313 and the second connection region.

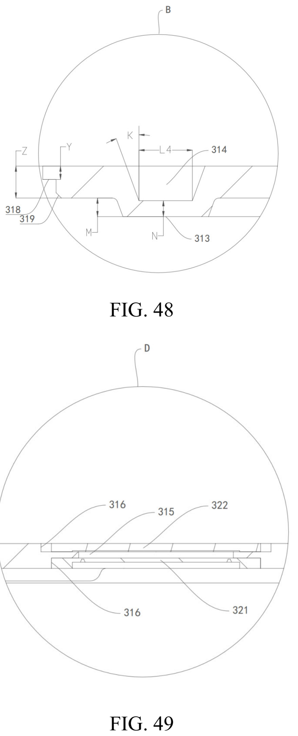

In some embodiments, as shown in FIG. 48, the thickness N of the first welding protrusion 313 is a distance between a bottom wall of the first welding groove 314 and a protrusion surface of the first welding protrusion 313 in the first direction. Optionally, the thickness N of the first welding protrusion 313 may be 0.4 mm, 0.5 mm, 0.6 mm, or 0.7 mm, so that heat at the first welding groove 314 can be smoothly transmitted to the first welding protrusion 313 while ensuring the thickness of the first welding protrusion 313, and a partial region of the first welding protrusion 313 can be melted, to implement a welding connection between the first welding protrusion 313 and the second connection region.

In some optional embodiments of this application, as shown in FIG. 48, a protruding height of the first welding protrusion 313 is 0.5 mm to 0.8 mm. Optionally, the protruding height M of the first welding protrusion 313 is 0.5 mm, 0.6 mm, 0.7 mm, or 0.8 mm, so that the first welding protrusion 313 can fully cooperate with the second connection region of the battery cell 1000, thereby facilitating a welding connection between the first welding protrusion 313 and the second connection region. In some embodiments, the protruding height M of the first welding protrusion 313 is a distance from a surface of the bottom cover body 310 to the protrusion surface of the first welding protrusion 313 in the first direction.

In some embodiments, the bottom cover body 310 is arranged at end portions of the housing 600 and the second connection region, and the first welding protrusion 313 on the bottom cover body 310 that protrudes in a direction toward the second current collector plate is in a stop fit with the end portion of the second connection region, to implement initial locating of the bottom cover body 310 and the battery cell 1000, and then the first welding protrusion 313 is welded, to fasten the bottom cover 300 at an end of the second connection region.

In some embodiments, as shown in FIG. 48, a bottom surface width L4 of the first welding groove 314 is greater than or equal to 1.5 mm. Optionally, the bottom surface width L4 of the first welding groove 314 may be 1.7 mm, 2 mm, 2.2 mm, 2.4 mm, or 2.5 mm. In some embodiments, the welding device directly contacts a bottom surface of the first welding groove 314, to heat the bottom surface of the first welding groove 314, and further heat the first welding protrusion 313, so that the bottom surface width L4 of the first welding groove 314 is greater than or equal to 1.5 mm, and the welding device can sufficiently heat the first welding protrusion 313.

In some optional embodiments of this application, as shown in FIG. 44, the first welding protrusion 313 is formed into a closed-loop shape, to reduce a locating operation on the bottom cover 300, thereby facilitating fast and convenient welding of the bottom cover 300 at an end of the second connection region and the housing 600.

Specifically, after the bottom cover 300 is arranged at an end of the second connection region and the housing 600, when the bottom cover 300 is welded to the second connection region, the bottom cover 300 does not need to be rotated, and a position of the first welding protrusion 313 in a circumferential direction thereof does not need to be adjusted, so that the bottom cover 300 is conveniently and quickly welded to the second connection region.

In some other optional embodiments of this application, the first welding protrusion 313 includes a plurality of arc-shaped welding portions, the plurality of arc-shaped welding portions form an intermittent annular shape, and the plurality of arc-shaped welding portions are corresponding to the second connection region, so that positions of the bottom cover body 310 and the second connection region are accurately determined, and therefore, the bottom cover 300 is accurately welded at an end of the second connection region.

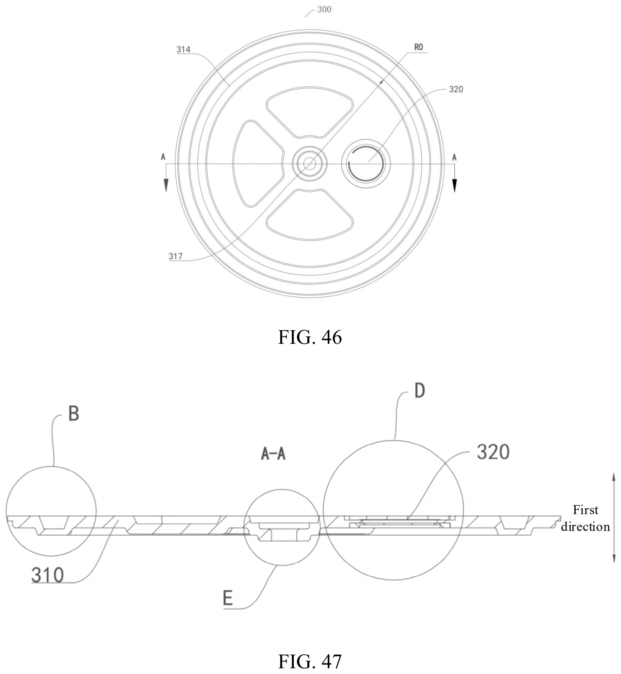

In some optional embodiments of this application, as shown in FIG. 47 and FIG. 48, there is an angle between an extension direction of a side wall of the first welding groove 314 and the first direction, so that the welding device can perform a welding operation on the first welding protrusion 313 at the first welding groove 314, to weld the bottom cover 300 to the second connection region.

In some embodiments, as shown in FIG. 48, the included angle K between the extension direction of the side wall of the first welding groove 314 and the first direction is 20° to 90°. Optionally, the included angle K between the extension direction of the side wall of the first welding groove 314 and the first direction is 30°, 45°, 60°, 80°, or 90°.

In some embodiments, when the first welding protrusion 313 and the battery cell 1000 are welded together through laser welding, the included angle K between the extension direction of the side wall of the first welding groove 314 and the first direction is 20° to 90°, which facilitates laser injection, so that the first welding protrusion 313 and the second connection region are welded through laser welding, to fasten the bottom cover 300 at an end of the second connection region.

In some specific embodiments of this application, as shown in FIG. 44, the first welding protrusion 313 is formed into a closed-loop shape. Correspondingly, the first welding groove 314 is formed into a closed-loop shape. A radius of the first welding protrusion 313 formed into the closed-loop shape is equal to a radius of the first welding groove 314 formed into the closed-loop shape. The radius R0 of the first welding protrusion 313 formed into the closed-loop shape should be greater than or equal to a radius of the bottom cover body 310, so that the first welding protrusion 313 and the first welding groove 314 are arranged on a periphery of the bottom cover body 310, thereby facilitating welding of the first welding protrusion 313, and facilitating locating of the first welding protrusion 313 and the second connection region.

In some embodiments of this application, the bottom cover body 310 has a step portion 318, the step portion 318 is located on an outer side of the first welding groove 314, and the step portion 318 is in a lap fit with an end portion of the housing 600, to limit a position of the bottom cover body 310 through fitting between the step portion 318 and the end portion of the housing 600, thereby facilitating subsequent welding for the first welding groove 314 on the bottom cover body 310 to weld the bottom cover body 310 to the second connection region, and facilitating welding for the outer peripheral edge of the bottom cover body 310, to weld the bottom cover body 310 to the housing 600, so as to fasten the bottom cover 300 to the end portion of the housing 600.

It should be explained herein that the outer side described herein is relative to the center of the housing 600, that is, the step portion 318 is farther from the center of the bottom cover body 310 than the first welding groove 314.

In some embodiments of this application, a plurality of reinforcing regions 311 are arranged on the bottom cover body 310, and the reinforcing regions 311 are arranged on the bottom cover body 310 and spaced from each other. Each reinforcing region 311 is defined by protrusion of a part of the bottom cover body 310 toward the second current collector plate, to increase structural strength of the bottom cover body 310, and improve a pressure bearing capacity of the bottom cover 300, so that the battery cell 1000 can be protected, and it is avoided that the bottom cover body 310 is prone to deformation when the bottom cover 300 is subject to internal pressure or an external force of the battery cell 1000.

In the first direction, an exhaust passage 312 is defined between adjacent reinforcing regions 311, and the exhaust passage 312 extends toward a region of the bottom cover body 310 that is used to mount an explosion-proof assembly 320. The explosion-proof assembly 320 is constructed to open under predetermined pressure to discharge gas, so that gas inside the battery cell 1000 can flow along the exhaust passage 312 to the explosion-proof assembly 320. Further, when the explosion-proof assembly 320 is subject to predetermined pressure, the gas inside the battery cell 1000 can be discharged from the explosion-proof assembly 320, to depressurize the battery cell 1000, thereby avoiding excessive gas inside the battery cell 1000, avoiding expansion of the battery cell 1000, and avoiding a safety hazard.

In some optional embodiments of this application, the bottom cover 300 further includes an explosion-proof assembly 320. The explosion-proof assembly 320 is arranged on the bottom cover body 310, and an exhaust passage 312 extends toward the explosion-proof assembly 320 to guide gas to the explosion-proof assembly 320, so that gas inside the battery cell 1000 can flow along the exhaust passage 312 to the explosion-proof assembly 320. Further, when the explosion-proof assembly 320 is subject to predetermined pressure, the gas inside the battery cell 1000 can be discharged from the explosion-proof assembly 320, thereby avoiding excessive gas inside the battery cell 1000, avoiding expansion of the battery cell 1000, and avoiding a safety hazard.

As shown in FIG. 47, in this embodiment, the first direction extends in an axial direction of the bottom cover body 310 (it will be understood herein that, the foregoing direction limitation is merely for ease of description of the accompanying drawings, and does not limit an actual arrangement position and direction of the bottom cover 300 of the battery cell 1000). The bottom cover body 310 is provided with a plurality of reinforcing regions 311, and the plurality of reinforcing regions 311 are arranged in a circumferential direction of the bottom cover body 310 and spaced from each other. Each reinforcing region 311 protrudes in a direction toward the second current collector plate. An exhaust passage 312 is defined between two adjacent reinforcing regions 311. A plurality of exhaust passages 312 are arranged in the circumferential direction of the bottom cover body 310 and spaced from each other, so that gas in the battery cell 1000 can evenly flow along the plurality of exhaust passages 312 to an explosion-proof assembly 320, and the gas in the battery cell 1000 can be smoothly discharged from the explosion-proof assembly 320.

In some optional embodiments of this application, a protruding height of the first welding protrusion 313 in the first direction is not less than a protruding height of the reinforcing region 311 in the first direction, that is, the protruding height of the first welding protrusion 313 in the first direction is greater than or equal to the protruding height of the reinforcing region 311 in the first direction, to ensure welding reliability and reduce welding difficulty.

In some embodiments of this application, as shown in FIG. 49, the bottom cover body 310 is provided with a through hole 315, the explosion-proof assembly 320 includes a rupture disc 321, and the rupture disc 321 and the bottom cover body 310 are separately formed, to ensure both strength performance of the bottom cover body 310 and strength performance of the rupture disc 321, thereby reducing processing difficulty. The rupture disc 321 is fastened to the bottom cover body 310 and is arranged opposite to the through hole 315, to seal and shield a position of the through hole 315. The rupture disc 321 is constructed to be damaged under predetermined pressure. In this case, gas in the battery cell 1000 can be smoothly discharged from the through hole 315, to depressurize the battery cell 1000.

In some optional embodiments of this application, the explosion-proof assembly 320 further includes a protection sheet 322, the protection sheet 322 is arranged on a first end face of the bottom cover body 310 that faces the housing 600, and the rupture disc 321 is arranged on a second end face of the bottom cover body 310 that is away from the housing 600. The protection sheet 322 is constructed to be at least partially separated from the bottom cover body 310 under predetermined pressure, to expose the through hole 315, so that gas in the battery cell 1000 can be smoothly discharged from the through hole 315, to smoothly depressurize the battery cell 1000.

In some embodiments, the arranged protection sheet 322 can protect the through hole 315, and protect the rupture disc 321 at the through hole 315, to prevent an article in an environment from extending into the through hole 315, thereby avoiding damage to the rupture disc 321 when pressure on the rupture disc 321 does not reach preset pressure, and avoiding affecting normal use of the battery cell 1000.

In addition, when the rupture disc 321 is damaged, the protection sheet 322 can block the through hole 315, to avoid that a fragment formed after the rupture disc 321 is damaged ejects from the through hole 315, thereby avoiding a safety hazard.

In some embodiments, a part of the rupture disc 321 is relatively thin, so that when pressure on the rupture disc 321 reaches the preset pressure, the rupture disc 321 can be cracked, and the rupture disc 321 can be prevented from being crushed into a fragment of an excessively small size, thereby avoiding that the fragment ejects from a gap between the protection sheet 322 and the through hole 315, thereby avoiding a safety hazard.

In some specific embodiments of this application, as shown in FIG. 49, an accommodating groove 316 is provided on opposite side walls of the bottom cover body 310, and the accommodating groove 316 is configured to accommodate the rupture disc 321 and the protection sheet 322, so that the rupture disc 321 and the protection sheet 322 are arranged on the bottom cover body 310, to prevent the rupture disc 321 and the protection sheet 322 from protruding out of the bottom cover body 310, and prevent an article in an environment from interfering with positions of the rupture disc 321 and the protection sheet 322.

In some embodiments, the rupture disc 321 is fastened in the accommodating groove 316 through laser butt welding, and the protection sheet 322 is bonded in the accommodating groove 316.

In some embodiments of this application, as shown in FIG. 45, an electrolyte injection hole 317 is further provided in the bottom cover body 310, and the electrolyte injection hole 317 is used for electrolyte injection, so that an electrolyte in the battery cell 1000 can be supplemented in a timely manner, and the battery cell 1000 can be smoothly charged or discharged. In addition, gas in the battery cell 1000 may also be discharged from the electrolyte injection hole 317.

As shown in FIG. 45, in this embodiment, the electrolyte injection hole 317 is provided at a center position of the bottom cover body 310, to help directly determine a position of the electrolyte injection hole 317 when an electrolyte is injected into the battery cell 1000 through the electrolyte injection hole 317.

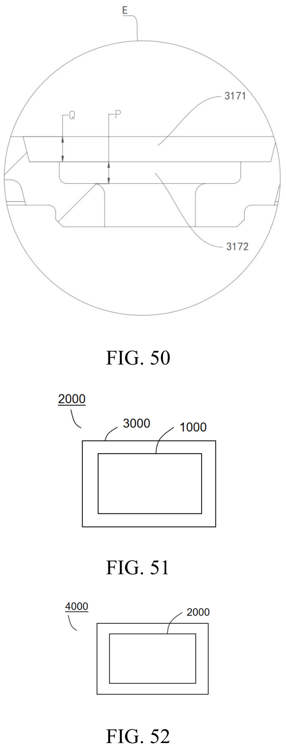

In some optional embodiments of this application, as shown in FIG. 50, the electrolyte injection hole 317 includes a first sinking groove 3171 and a second sinking groove 3172. In the first direction, the first sinking groove 3171 and the second sinking groove 3172 are arranged in sequence, and the first sinking groove 3171 and the second sinking groove 3172 are arranged to implement sealing of the electrolyte injection hole 317.

Specifically, when the electrolyte injection hole 317 is sealed, the electrolyte injection hole 317 is double-sealed through sealing with a sealing member and welded sealing. At least a part of the sealing member is arranged in the second sinking groove 3172, to limit a position of the sealing member by using the second sinking groove 3172, so that the sealing member can seal the electrolyte injection hole 317. A welding device performs welded sealing on the electrolyte injection hole 317 at the first sinking groove 3171, to adequately seal the electrolyte injection hole 317, so as to prevent an electrolyte in the battery cell 1000 from flowing out of the electrolyte injection hole 317.

In some embodiments, a cross-sectional area of the first sinking groove 3171 is greater than a cross-sectional area of the second sinking groove 3172, so that a laser can be incident from the first sinking groove 3171, and then the laser can enter the first sinking groove 3171, to clean the first sinking groove 3171, thereby ensuring cleanliness of the first sinking groove 3171, facilitating subsequent welding for the first sinking groove 3171, and improving performance of welded sealing.

In some specific embodiments of this application, a depth of the second sinking groove 3172 is 0.4 mm to 0.7 mm, to reserve space for the sealing member, so as to avoid falling of the sealing member from the electrolyte injection hole 317 into the battery cell 1000.

Specifically, the sealing member has a sealing head, and the second sinking groove 3172 is configured to accommodate the sealing head, to limit a position of the sealing member, so as to avoid falling of the sealing member from the electrolyte injection hole 317 into the battery cell 1000. Optionally, the depth P of the second sinking groove 3172 is 0.5 mm, 0.55 mm, 0.6 mm, or 0.65 mm.

In some examples, a cross-sectional area of the first sinking groove 3171 is greater than a cross-sectional area of the second sinking groove 3172. To facilitate laser incidence for cleaning the first sinking groove 3171, a depth Q of the first sinking groove 3171 is 0.5 mm to 0.8 mm. Optionally, the depth Q of the first sinking groove 3171 is 0.55 mm, 0.6 mm, 0.65 mm, 0.7 mm, or 0.75 mm. An opening is provided at the end portion of the housing 600, the second connection region is arranged in the housing 600, the first welding groove 314 is welded to the second connection region for electrical connection, and an outer peripheral edge of a body 10 of the cover plate 44 is welded to the housing 600 to seal the opening, so that the bottom cover body 310 can protect the electrode core 500 and the like in the housing 600.

The outer peripheral edge of the bottom cover body 310 is welded to the housing 600, to fasten the bottom cover body 310 to the end portion of the housing 600. Further, the bottom cover 300 is arranged at an end portion of the opening, and the housing 600, the electrode core 500, and the like are protected by using the bottom cover 300. In addition, a current in the second connection region may flow to the bottom cover 300 and the housing 600, so that the current can flow to a specified component through the housing 600 or the bottom cover 300.

In some embodiments, the reinforcing region 311 protrudes in a direction toward the second connection region of the cell, so that the reinforcing region 311 can support a position of the second connection region of the cell, thereby limiting the position of the second connection region of the cell in the housing 600, to avoid excessive movement of the second connection region of the cell in the housing 600.

It should be explained herein that the housing 600 may be a positive electrode or a negative electrode of the battery cell 1000, and the bottom cover 300 may be arranged at the positive electrode or the negative electrode of the battery cell 1000. This is not limited herein.

In some embodiments of this application, the bottom cover body 310 is formed into a disc shape, and the housing 600 is formed into a cylindrical shape, so that the shapes of the bottom cover body 310 and the housing 600 fit, and the outer peripheral edge of the bottom cover body 310 can be welded to the housing 600, and then the bottom cover body 310 is stably fastened at the end portion of the housing 600.

In addition, the housing 600 is formed into the cylindrical shape, so that the battery cell 1000 is formed into a cylindrical battery, thereby helping improve pressure resistance performance of the housing 600 of the battery cell 1000, and improve safety of the battery cell 1000.

In an embodiment in which the battery cell 1000 is used in a power consuming device, a battery compartment for placing the battery cell 1000 is arranged in the power consuming device, the battery compartment is a cylindrical battery compartment, and the housing 600 of the battery cell 1000 is formed into the cylindrical shape, to adapt to the shape of the battery compartment in the power consuming device, so that the battery cell 1000 can be placed on the power consuming device, and the battery cell 1000 can supply power to the power consuming device smoothly.

In some embodiments of this application, as shown in FIG. 46, a thickness Z of the bottom cover body 310 is 0.5 mm to 2.0 mm, so that a thickness of the bottom cover 300 can be controlled, thereby reducing occupied space of the bottom cover 300 in the battery cell 1000, and improving utilization of space in the battery cell 1000.

Optionally, the thickness Z of the bottom cover body 310 may be 0.8 mm, 1 mm, 1.2 mm, 1.5 mm, or 1.8 mm.

As shown in FIG. 45 and FIG. 48, in this embodiment, the bottom cover body 310 has a step portion 318, and the step portion 318 is located on a periphery of the bottom cover body 310. The first welding protrusion 313 is located on an inner side of the step portion 318. In the first direction, the first welding protrusion 313 is higher than the step portion 318, so that when the bottom cover 300 is arranged at an opening of the housing 600 in a direction toward the second current collector plate, it is convenient for the bottom cover 300 to enter the housing. In some embodiments, a thickness Y of the step portion 318 is 0.3 mm to 0.8 mm. Optionally, the thickness Y of the step portion 318 is 0.4 mm, 0.5 mm, 0.6 mm, or 0.7 mm.

In some embodiments, a rounded corner or chamfer 319 is further arranged on a periphery of the bottom cover body 310, to facilitate entry of the bottom cover body 310 into the housing 600 when the bottom cover body 310 is arranged at an opening at the end portion of the housing 600. A size of the rounded corner is R0.2 to R0.5. Specifically, the size of the rounded corner may be R0.2, R0.3, R0.4, or R0.5. A size of the chamfer 319 is C0.2 to C0.5. Specifically, the size of the chamfer 319 may be C0.2, C0.3, C0.4, or C0.5.

According to the battery cell 1000 in this embodiment of this application, the bottom cover 300 of the battery cell 1000 according to the foregoing embodiment of this application is used, and the first welding groove 314 is arranged on the bottom cover body 310, so that a position corresponding to the second connection region on the bottom cover body 310 is quickly determined by using the first welding groove 314, to facilitate fastening and electrical connection between the bottom cover body 310 and the second connection region. In addition, the outer peripheral edge of the bottom cover body 310 is welded to fasten the bottom cover 300 to the housing 600 of the battery cell 1000. The welding manner helps reduce processing difficulty, improve production efficiency, and reduce costs.

The following describes a battery pack 2000 according to an embodiment of this application. As shown in FIG. 51, the battery pack 2000 according to this embodiment of this application includes a casing 3000 and a plurality of battery cells 1000 according to the foregoing embodiment of this application, and the plurality of battery cells 1000 are arranged in the casing 3000.

According to the battery pack 2000 in this embodiment of this application, the battery cell 1000 according to the foregoing embodiment of this application is used, the first current collector plate 200 is configured into a flat plate shape and is electrically connected to the conductive pillar 41 and the first tab, so that a current of the electrode core 500 can be drawn out of a positive electrode or a negative electrode. The flat plate shape has a smaller dimension in the first direction than an existing folded structure. When the battery cell 1000 has the same appearance size, a dimension of the electrode core 500 in the first direction can be set to be larger, so that a capacity of the battery cell 1000 can be improved.

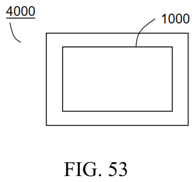

The following describes a power consuming apparatus 4000 according to an embodiment of this application. As shown in FIG. 52 and FIG. 53, the power consuming apparatus 4000 according to this embodiment of this application includes the battery pack 2000 or the battery cell 1000 according to the foregoing embodiment of this application.

According to the power consuming apparatus 4000 in this embodiment of this application, the battery pack 2000 or the battery cell 1000 according to the foregoing embodiment of this application is used, the first current collector plate 200 is configured into a flat plate shape and is electrically connected to the conductive pillar 41 and the first tab, so that a current of the electrode core 500 can be drawn out of a positive electrode or a negative electrode. The flat plate shape has a smaller dimension in the first direction than an existing folded structure. When the battery cell 1000 has the same appearance size, a dimension of the electrode core 500 in the first direction can be set to be larger, so that a capacity of the battery cell 1000 can be improved.

Other components and operations of the power consuming apparatus 4000 according to the embodiments of this application are already known to a person of ordinary skill in the art. Details are not described herein again.

In some embodiments, the power consuming apparatus 4000 may be an energy storage cabinet, a vehicle, an aircraft, or the like.

In the description of this specification, the description with reference to the terms such as "an embodiment", "some embodiments", "illustrative embodiment", "example", "specific example", or "some examples" means that specific features, structures, materials, or characteristics described in combination with the embodiments or examples are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner.

Although embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. A battery cell (1000), comprising:
a housing (600);
an electrode core (500), a first tab (501) being arranged at an end of the electrode core (500) in a first direction, and the electrode core (500) being arranged in the housing (600); and
a first current collector plate (200) and a conductive pillar (41), the first current collector plate (200) and the conductive pillar (41) being arranged at an end of the first tab (501) that is away from the electrode core (500), the first current collector plate (200) being constructed into a flat plate shape, and the first current collector plate (200) being electrically connected to the conductive pillar (41) and the first tab (501).

2. The battery cell (1000) according to claim 1, the first current collector plate (200) comprising:
a plate body (210), the plate body (210) being provided with a middle section (2100) and a connection slot (211), the connection slot (211) extending through the plate body (210) in a thickness direction of the plate body (210), an orthographic projection of an outer peripheral wall of the plate body (210) on a first projection plane being located on a first ring, the first projection plane being perpendicular to the first direction, the connection slot (211) being located on a radial outer side of the middle section (2100) in a radial direction of the plate body (210), and the middle section (2100) being electrically connected to the conductive pillar (41); and
a connection sheet (220), the connection sheet (220) being located in the connection slot (211), the connection sheet (220) being electrically connected to the plate body (210) through a bridge edge (221), the connection sheet (220) being electrically connected to the first tab (501), and an orthographic projection of the bridge edge (221) on the first projection plane being located on a radial inner side of an outer peripheral edge of an orthographic projection of the connection sheet (220) in the radial direction of the plate body (210).

3. The battery cell (1000) according to claim 2, an outer peripheral side wall of the connection slot (211) being spaced from the outer peripheral wall of the plate body (210) in the radial direction of the plate body (210).

4. The battery cell (1000) according to claim 2 or 3, the plate body (210) being provided with an opening extending to the outer peripheral wall of the plate body (210) to define the connection slot (211).

5. The battery cell (1000) according to claim 3 or 4, the connection slot (211) being provided with a plurality of side walls, and a side wall in the plurality of side walls that is arranged opposite to the outer peripheral wall of the plate body (210) in the radial direction of the plate body (210) being defined as an outer-edge side wall (2113); and
the plurality of side walls further comprising a first connection side wall (2111) and a second connection side wall (2112), two ends of the outer-edge side wall (2113) being respectively connected to the first connection side wall (2111) and the second connection side wall (2112) in a circumferential direction of the plate body (210), and at least one of the first connection side wall (2111) and the second connection side wall (2112) being connected to the bridge edge (221).

6. The battery cell (1000) according to claim 5, the plate body (210) being provided with a plurality of connection slots (211), the connection sheet (220) being arranged in each connection slot (211), and the plurality of connection sheets (220) each being connected to a corresponding first connection side wall (2111) through the bridge edge (221) in the circumferential direction of the plate body (210).

7. The battery cell (1000) according to any one of claims 2 to 6, a length of the bridge edge (221) being 0.5 mm to 30 mm in the radial direction of the plate body (210).

8. The battery cell (1000) according to any one of claims 2 to 7, the middle section (2100) being a central hole (212) that extends through the plate body (210) in the thickness direction.

9. The battery cell (1000) according to any one of claims 1 to 8, further comprising: a cover plate (44), the cover plate (44) being fastened to an end of the housing (600) that is close to the first current collector plate (200); and
a separator (45), the separator (45) being arranged between the first current collector plate (200) and the cover plate (44); and
the first current collector plate (200) being provided with a first limiting portion, the separator (45) being provided with a second limiting portion, and the first limiting portion and the second limiting portion cooperating to limit the separator (45).

10. The battery cell (1000) according to claim 9, one of the first limiting portion and the second limiting portion being a limiting notch (213), the other being a limiting protrusion (454), and the limiting protrusion (454) extending into the limiting notch (213).

11. The battery cell (1000) according to claim 9 or 10, there being a plurality of first limiting portions arranged and spaced from each other in the circumferential direction of the first current collector plate (200), there being a plurality of second limiting portions, and the plurality of first limiting portions one-to-one cooperating with the plurality of second limiting portions.

12. The battery cell (1000) according to any one of claims 1 to 11, further comprising:
a cover plate (44), the cover plate (44) being fastened to an end of the housing (600) that is close to the first current collector plate (200); and
a separator (45), the separator (45) being arranged between the first current collector plate (200) and the cover plate (44); and
the first current collector plate (200) being provided with a welding region (216) electrically connected to the first tab (501), the separator (45) being provided with a clearance region (453), and the clearance region (453) being provided opposite to the welding region (216) to expose the welding region (216).

13. The battery cell (1000) according to claim 12, the first current collector plate (200) comprising a plate body (210), a bridge edge (221), and a plurality of connection sheets (220), the plate body (210) being provided with a plurality of connection slots (211) that are spaced from each other, each connection sheet (220) being connected to an inner side wall of one of the connection slots (211) through the bridge edge (221), and each connection sheet (220) defining the welding region (216).

14. The battery cell (1000) according to claim 12 or 13, the separator (45) comprising:
a central portion (451), the central portion (451) being provided with a first support surface (4512) supporting the cover plate (44); and
a plurality of extension arms (452), the plurality of extension arms (452) being arranged in the central portion (451) and spaced from each other in a circumferential direction of the central portion (451), and the clearance region (453) being defined between adjacent extension arms (452).

15. The battery cell (1000) according to claim 13, the separator (45) being provided with a plurality of clearance regions (453), and the plurality of clearance regions (453) being provided one-to-one opposite to the plurality of connection slots (211) in the first direction.

16. The battery cell (1000) according to claim 14, the central portion (451) being formed into a disc shape, an outer diameter of the central portion (451) being Dcn, orthographic projections of outer peripheral walls of the separator (45) on a first plane being located on a same circle, an outer diameter of the separator (45) being Dcw, the separator (45) satisfying the following relationship: 0.85*Dcw≥Dcn≥0.4*Dcw, and the first plane being provided perpendicular to a thickness direction of the separator (45).

17. The battery cell (1000) according to claim 14, a ratio of a total area of the clearance region (453) to an area of a circular region in which the clearance region (453) is provided on the separator (45) being S2, and satisfying: 0.35≤S2≤0.9.

18. The battery cell (1000) according to claim 14, the separator (45) further comprising a flange (455), and the flange (455) being connected to end portions of the plurality of extension arms (452) and extending in a direction away from the first support surface (4512).

19. The battery cell (1000) according to any one of claims 12 to 18, further comprising:
a metal connection member (43), a first end of the conductive pillar (41) being electrically connected to the middle section (2100) of the first current collector plate (200), a second end of the conductive pillar (41) being electrically connected to the metal connection member (43), a first insulating member (46) being arranged between the metal connection member (43) and the cover plate (44), and a second insulating member (47) being arranged between the conductive pillar (41) and the cover plate (44).

20. The battery cell (1000) according to claim 19, the middle section (2100) being formed into a central hole (212) that extends through the first current collector plate (200) in the thickness direction, the first end being located in the central hole (212), and an outer peripheral wall of the first end being welded to an inner wall of the central hole (212).

21. The battery cell (1000) according to claim 20, the conductive pillar (41) extending in the first direction, the metal connection member (43), the cover plate (44), and the separator (45) being sequentially sleeved on the conductive pillar (41) in the first direction, and the second end being deformed under pressure, so that at least a part of the second end is located on a side, of the metal connection member (43), away from the first current collector plate (200) and is in contact with the metal connection member (43).

22. The battery cell (1000) according to claim 20, an assembly hole (6201) being provided at the end of the housing (600) that is close to the first current collector plate (200), and the cover plate (44) sealing the assembly hole (6201).

23. The battery cell (1000) according to claim 20, the cover plate (44) comprising a plate body (441) and a first stop portion (442), the first stop portion (442) being located at an outer peripheral edge of the plate body (441), the first stop portion (442) being located in the housing (600) and against an inner wall of the housing (600), the first stop portion (442) being fastened to the housing (600), and the plate body (441) being sleeved on the conductive pillar (41).

24. The battery cell (1000) according to any one of claims 1 to 23, further comprising:
a cover plate (44), the cover plate (44) being fastened to an end of the housing (600) that is close to the first current collector plate (200);
a separator (45), the separator (45) being arranged between the first current collector plate (200) and the cover plate (44); and
a heat shrink insulating film (30), the heat shrink insulating film (30) wrapping at least a part of an outer peripheral wall of the electrode core (500) and a part of the separator (45), and the cover plate (44) being exposed to the heat shrink insulating film (30).

25. The battery cell (1000) according to any one of claims 1 to 24, a second tab (502) being arranged at the other end of the electrode core (500) in the first direction;
the battery cell (1000) further comprising a second current collector plate (100) and a bottom cover (300), the bottom cover (300) being fastened to an end of the housing (600) that is close to the second tab (502), and the second current collector plate (100) being arranged between the second tab (502) and the bottom cover (300);
the second current collector plate (100) comprising a first connection region (120) and a second connection region (130) that are connected to each other, the first connection region (120) being electrically connected to the second tab (502), and the second connection region (130) abutting against and being electrically connected to the bottom cover (300); and
the first connection region (120) and the second connection region (130) having a height difference and being movable relative to each other in the first direction.

26. The battery cell (1000) according to claim 25, the first connection region (120) comprising a middle portion (122) and a plurality of first connection portions (121), the plurality of first connection portions (121) being sequentially arranged in a circumferential direction of the middle portion (122), and the plurality of first connection portions (121) being separately connected to the middle portion (122); and
the second connection region (130) comprising a second connection portion (131), the second current collector plate (100) further comprising a connection member (140), the connection member (140) being connected between the second connection portion (131) and the middle portion (122), and the connection member (140) obliquely extending toward the second connection portion (131) relative to the middle portion (122), so that the first connection region (120) and the second connection portion (131) have a height difference.

27. The battery cell (1000) according to claim 26, an orthographic projection of an outer peripheral wall of the second current collector plate (100) on the first plane being located on a circle, the first plane being perpendicular to a thickness direction of the second current collector plate (100), there being a plurality of connection members (140), and the plurality of first connection portions (121) and the plurality of connection members (140) being alternately arranged and spaced from each other in a circumferential direction of the first connection region (120).

28. The battery cell (1000) according to claim 26, an orthographic projection of an outer peripheral wall of the second current collector plate (100) on the first plane being located on a circle, the first plane being perpendicular to a thickness direction of the second current collector plate (100), the second connection portion (131) being provided with a stop protrusion extending toward the first connection portion (121), the stop protrusion (1313) being located on a radial outer side of the first connection portion (121), and the stop protrusion (1313) being located on a radial outer side of the second tab (502).

29. The battery cell (1000) according to claim 26, the first connection portion (121) having a first surface connected to the electrode core (500), the second connection portion (131) having a second surface connected to the bottom cover (300), and the first surface being parallel to the second surface.

30. The battery cell (1000) according to claim 26, a straight-line distance between opposite side walls at a connection position of the first connection portion (121) and the middle portion (122) being a connection width H, and satisfying the following relational expression: nKHδ≥C;
wherein C is a minimum current flow requirement of the electrode core (500); n is a quantity of first connection portions (121); δ is a thickness of the first connection portion (121); and K is a current flow coefficient of the second current collector plate (100).

31. The battery cell (1000) according to claim 26, an orthographic projection of an outer peripheral wall of the second current collector plate (100) on the first plane being located on a first circle, the first plane being perpendicular to a thickness direction of the second current collector plate (100), the second connection portion (131) extending in the circumferential direction of the middle portion (122) and being located on a side of the first connection region (120), the first connection portion (121) being spaced from an inner peripheral wall of the second connection portion (131) to form a space gap, and a value range of a radial dimension G1 of an orthographic projection of the space gap on the first plane being 0.5 mm to 2 mm.

32. The battery cell (1000) according to claim 26, an area of an orthographic projection of each first connection portion (121) on the first plane being S1, a minimum connection area between each first connection portion (121) and the electrode core (500) being S and satisfying the following relationship: S≥20%S1, and a thickness direction of the second current collector plate (100) being perpendicular to the first plane.

33. The battery cell (1000) according to any one of claims 25 to 32, the first connection region (120) comprising a middle portion (122) and a plurality of first connection portions (121), the plurality of first connection portions (121) being sequentially arranged in a circumferential direction of the middle portion (122), the plurality of first connection portions (121) being separately connected to the middle portion (122), the plurality of first connection portions (121) being spaced from each other, and the plurality of first connection portions (121) enclosing the first connection region (120) that is formed into a circular shape; and
the second connection region (130) comprising a plurality of second connection portions (131), the second current collector plate (100) further comprising a connection member (140), each second connection portion (131) being connected to the first connection region (120) through the connection member (140), and the connection member (140) being constructed to be movable relative to the first connection region (120) or deformable relative to the first connection region (120) to change the height difference between the first connection region (120) and the second connection region (130).

34. The battery cell (1000) according to claim 33, the connection member (140) being a plate body (441) that obliquely extends relative to the first connection region (120) and that is movable or deformable relative to the first connection region (120).

35. The battery cell (1000) according to claim 34, the plurality of first connection portions (121) and the plurality of connection members (140) being alternately arranged in the circumferential direction of the middle portion (122).

36. The battery cell (1000) according to claim 33, the plurality of second connection portions (131) being arranged and spaced from each other in the circumferential direction of the first connection region (120), and a minimum distance G3 between two adjacent second connection portions (131) satisfying the following condition: 1 mm≤G3≤ΠIR1/n2; and
R1 being a radius of the second current collector plate (100), and n2 being a quantity of regions between the plurality of second connection portions (131).

37. The battery cell (1000) according to any one of claims 1 to 36, a second tab (502) being arranged at the other end of the electrode core (500) in the first direction;
the battery cell (1000) further comprising a second current collector plate (100) and a bottom cover (300), the bottom cover (300) being fastened to an end of the housing (600) that is close to the second tab (502), and the second current collector plate (100) being arranged between the second tab (502) and the bottom cover (300); and
an orthographic projection of an outer peripheral wall of the second current collector plate (100) on the first projection plane being located on the first ring, the first projection plane being perpendicular to a thickness direction of the second current collector plate (100), and the second current collector plate (100) comprising:
a connection portion (1110), a first surface (1111) of the connection portion (1110) abutting against and being electrically connected to the bottom cover (300); and
a first support member (1120) and a second support member (1130), the first support member (1120) and the second support member (1130) being located on a side of the connection portion (1110) that is away from the first surface (1111), the first support member (1120) being connected to a radial inner side of the connection portion (1110) and being electrically connected to the second tab (502), the second support member (1130) being connected to a radial outer side of the connection portion (1110) and supporting the electrode core (500), and the connection portion (1110) being constructed to be movable or deformable relative to the first support member (1120).

38. The battery cell (1000) according to claim 37, a notch (1131) being provided at an outer edge of the second support member (1130), and the notch (1131) extending through the second support member (1130) in a thickness direction.

39. The battery cell (1000) according to claim 37, a part of the second support member (1130) being formed into a bent portion bent toward the first surface (1111).

40. The battery cell (1000) according to claim 37, the first support member (1120) being connected to the connection portion (1110) through a first connection plate (1152), and the first connection plate (1152) obliquely extending relative to the first support member (1120); and
the second support member (1130) comprising a second connection plate (1151) that obliquely extends, and the second support member (1130) being connected to the connection portion (1110) through the second connection plate (1151).

41. The battery cell (1000) according to claim 37, the connection portion (1110) comprising a plurality of connection positions (1113) arranged and spaced from each other in a circumferential direction, and a part of the first support member (1120) being arranged between any two adjacent connection positions (1113).

42. The battery cell (1000) according to claim 37, the first support member (1120) being provided with a flow guiding zone (1128), the flow guiding zone (1128) comprising a plurality of flow guiding holes (1122) that are spaced from each other, each flow guiding hole (1122) being formed into an arc-shaped hole, there being a plurality of flow guiding zones (1128), and a plurality of arc-shaped holes corresponding to each flow guiding zone (1128) being sequentially arranged in a radial direction of the first support member (1120).

43. The battery cell (1000) according to claim 42, a part of the first support member (1120) being recessed in a direction away from the first surface (1111) to define a welding zone (1126), and the flow guiding zone (1128) being provided at a position other than the welding zone (1126) on the first support member (1120).

44. The battery cell (1000) according to claim 25, the bottom cover (300) comprising:
a bottom cover body (310), an annular first welding groove (314) being arranged on an end face of the bottom cover body (310) that is away from the housing (600), the first welding groove (314) being recessed toward the second current collector plate (100), the first welding groove (314) being welded to the second connection region (130) for electrical connection, the first welding groove (314) being spaced from an outer peripheral edge of the bottom cover body (310), and the outer peripheral edge of the bottom cover body (310) being welded to the housing (600).

45. The battery cell (1000) according to claim 44, a part of the bottom cover body (310) protruding toward the second current collector plate (100) to define a first welding protrusion (313), and the first welding groove (314) being provided opposite to the first welding protrusion (313).

46. The battery cell (1000) according to claim 44, the bottom cover body (310) having a step portion (318), the step portion (318) being located on an outer side of the first welding groove (314), and the step portion (318) being in a lap fit with an end portion of the housing (600).

47. The battery cell (1000) according to claim 44, the bottom cover body (310) being provided with a plurality of reinforcing regions (311) that are spaced from each other, each reinforcing region (311) being defined by protrusion of a part of the bottom cover body (310) toward the second current collector plate (100), an exhaust passage (312) being defined between adjacent reinforcing regions (311) in the first direction, the exhaust passage (312) extending toward a region on the bottom cover body (310) that is used to mount an explosion-proof assembly (320), and the explosion-proof assembly (320) being constructed to open under predetermined pressure to discharge gas.

48. The battery cell (1000) according to any one of claims 1 to 47, the battery cell (1000) being a cylindrical battery.

49. A battery pack (2000), comprising:
a casing (3000); and
the battery cell (1000) according to any one of claims 1 to 48, a plurality of battery cells (1000) being arranged in the casing (3000).

50. A power consuming device (4000), comprising the battery pack (2000) according to claim 49 or the battery cell (1000) according to any one of claims 1 to 48.
